(19) Europäisches Patentamt / European Patent Office / Office européen des brevets

(11) **EP 3 028 377 B1**

(12) **EUROPÄISCHE PATENTSCHRIFT**

(45) Veröffentlichungstag und Bekanntmachung des Hinweises auf die Patenterteilung:
**15.07.2020   Patentblatt 2020/29**

(21) Anmeldenummer: **14761659.3**

(22) Anmeldetag: **10.09.2014**

(51) Int Cl.:
**H02M 3/15** *(2006.01)*        **H02M 3/158** *(2006.01)*

(86) Internationale Anmeldenummer:
**PCT/EP2014/069266**

(87) Internationale Veröffentlichungsnummer:
**WO 2015/036422 (19.03.2015 Gazette 2015/11)**

(54) **GLEICHSPANNUNGSWANDLER**

DIRECT CURRENT CONVERTER

CONVERTISSEUR À COURANT CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2013   DE 102013218228**

(43) Veröffentlichungstag der Anmeldung:
**08.06.2016   Patentblatt 2016/23**

(73) Patentinhaber: **FRAUNHOFER-GESELLSCHAFT zur Förderung der angewandten Forschung e.V. 80636 München (DE)**

(72) Erfinder:
• **YU, Zhe**
  **24558 Henstedt-Ulzburg (DE)**
• **HOFFMANN, Klaus, F.**
  **22523 Hamburg (DE)**
• **KAPELS, Holger**
  **23843 Bad Oldesloe (DE)**

(74) Vertreter: **Stöckeler, Ferdinand et al Schoppe, Zimmermann, Stöckeler Zinkler, Schenk & Partner mbB Patentanwälte Radlkoferstrasse 2 81373 München (DE)**

(56) Entgegenhaltungen:
EP-A1- 2 466 740          US-A- 6 166 527
US-A1- 2004 085 048       US-A1- 2005 206 354
US-A1- 2009 146 623

**Beschreibung**

Ausführungsbeispiele der vorliegenden Erfindung beziehen sich auf einen Gleichspannungswandler. Weitere Ausführungsbeispiele beziehen sich auf ein Verfahren zum Betrieb eines Gleichspannungswandlers. Manche Ausführungsbeispiele beziehen sich auf ein Konzept zur resonanten Schaltentlastung eines bidirektionalen, kaskadierten Tief-Hochsetzstellers.

Zum Erzielen einer stabilen und hocheffizienten Energieversorgung werden heutzutage viele regenerative Energiesysteme durch einen bidirektionalen Gleichspannungswandler mit Zwischenenergiespeicherelementen ausgelegt. Diese haben die Funktion, unterschiedliche Spannungsebenen anzupassen. Dementsprechend kommt es bei vielen Anwendungen vor, dass sich die Bereiche der Eingangs- und Ausgangsspannung des Gleichspannungswandlers bei Auf- und Entladen der Energiespeicher überlappen. Folglich wird hierfür eine spezielle Art von Gleichspannungswandlern, die sowohl im Tiefsetzmodus als auch im Hochsetzmodus betrieben werden können, benötigt.

Der kaskadierte Tief-Hochsetzsteller mit vier Schaltern wird aufgrund seiner einfachen Topologie und hohen Leistungsfähigkeit häufig für solche Anwendungen eingesetzt. Als Schnittstelle zwischen regenerativen Energiesystemen und Energiespeichern hat die Effizienz des Gleichspannungswandlers einen signifikanten Einfluss auf den Wirkungsgrad des gesamten Systems. Folglich besteht ein dringender Bedarf an Konzepten zur Minimierung der Leistungsverluste im kaskadierten Tief-Hochsetzsteller.

In der US 6,166,527 wird ein Steuerungskonzept für den Tief-Hochsetzsteller zur Reduzierung der Leistungsverluste vorgestellt. Je nach Verhältnis von Eingangs- und Ausgangsspannung wird der Gleichspannungswandler in drei unterschiedlichen Modi betrieben, und zwar im Tiefsetzmodus, im Hochsetzmodus oder im Tief-Hochsetzmodus. Dadurch werden die Leistungsverluste des Gleichspannungswandlers bei den Tiefsetz- und Hochsetzmodi zwar verringert, aber aufgrund des simultanen Betriebs der vier Schalter bleiben die Verluste im Tief-Hochsetzmodus immer noch zu groß.

In der EP 2 466 740 A1 wird ein Tief-Hochsetzsteller beschrieben, der in fünf verschiedenen Modi arbeitet, nämlich im Tiefsetzmodus, Halbfrequenz-Tiefsetzmodus, Halbfrequenz-Tief-Hochsetzmodus, Halbfrequenz-Hochsetzmodus und im Hochsetzmodus. Im Tiefsetzmodus mit halber Frequenz, im Tief-Hochsetzmodus und im Hochsetzmodus mit halber Frequenz wird die Schaltfrequenz im Vergleich zur Schaltfrequenz des Tiefsetzmodus oder Hochsetzmodus halbiert. Eine einfache Schaltungsimplementierung durch Addition von zwei Offsetspannungen in Rampensignalen oder PWM-Komparatoren ermöglicht es, die Schaltfrequenz bei Bedarf zu halbieren.

In der US 2004/085048 wird ein DC-DC-Wandler mit vier Schaltern S1-S4 und einer Induktivität L1 beschrieben, bei dem eine Schaltsteuerung die Ausgangsspannung Vout und der Strom IL in der Induktivität L1 erfasst, und in Übereinstimmung mit dem Erfassungsergebnis die Schalter S1-S4 ein- und ausschaltet, so dass die Ausgangsspannung Vout auf dem gewünschten Pegel gehalten wird.

In der US 2009/146623 A1 wird ein Gleichspannungswandler mit einer Induktivität, einem ersten und einem zweiten elektrisch steuerbaren Schalter und einer Steuerung beschrieben, wobei der erste elektrisch steuerbare Schalter zwischen einem Eingangsknoten und einem ersten Anschluss der Induktivität geschaltet ist und der zweite elektrisch steuerbare Schalter zwischen einem zweiten Anschluss der Induktivität und Masse geschaltet ist, und wobei ein erster Gleichrichter zwischen der Masse und dem ersten Anschluss der Induktivität geschaltet ist, und wobei ein zweiter Gleichrichter zwischen dem zweiten Anschluss der Induktivität und dem Ausgangsknoten geschaltet ist, wobei die Steuerung den Betrieb des ersten und des zweiten Schalters steuert, um gegebenenfalls eine Spannungserniedrigung oder -erhöhung durchzuführen, um eine gewünschte Ausgangsspannung zu erreichen.

In der US 2005/206354 A1 wird ein DC-DC-Wandler beschrieben, der den Stromfluss durch ein Induktivitätselement des DC-DC-Wandlers reduziert und die Welligkeit der Ausgangsspannung steuert.

In der US 2012/0146594 A1 wird ein Steuerungskonzept für den kaskadierten Tief-Hochsetzsteller mit vier Schaltern dargestellt. Mithilfe des Konzepts kann der kaskadierte Tief-Hochsetzsteller in fünf unterschiedlichen Modi arbeiten. Dazu gehören der Tiefsetzmodus, der Tiefsetzmodus mit halbierter Schaltfrequenz, der Tief-Hochsetzmodus mit halbierter Schaltfrequenz, der Hochsetzmodus mit halbierter Schaltfrequenz und der Hochsetzmodus. Bei Annäherung von Eingangs- und Ausgangsspannung wird die Schaltfrequenz der PWM-Signale, mit der die Schalter angesteuert werden, halbiert. Dadurch kann der Bereich der Tief- und Hochsetzmodi erweitert werden und der Bereich des verlustreichen Tief-Hochsetzmodi dementsprechend verkürzt werden. Zum anderen können sich theoretisch die Schaltverluste in dem Bereich, wo die Schaltfrequenz um die Hälfte reduziert wird, um 50 % verringern. Zusammenfassend lässt sich entnehmen, dass unter Verwendung dieses Konzepts der Wirkungsgrad des Gleichspannungswandlers in der Übergangsphase zwischen dem Tiefsetzmodus und dem Hochsetzmodus verbessert werden kann. Jedoch werden die Schalter in diesem Konzept immer noch hart geschaltet, so dass die Effizienz des Tief-Hochsetzstellers stark begrenzt ist.

Der vorliegenden Erfindung liegt somit die Aufgabe zugrunde, ein Konzept zur Reduzierung der Verluste eines Gleichspannungswandlers zu schaffen.

Diese Aufgabe wird durch die unabhängigen Patentansprüche gelöst.

Vorteilhafte Weiterbildungen finden sich in den abhängigen Patentansprüchen.

Ausführungsbeispiele der vorliegenden Erfindung schaffen einen Gleichspannungswandler mit einem ersten Gleichspannungstor, einem zweiten Gleichspannungstor und einer Speicherdrossel. Die Speicherdrossel ist mittels elektrischer Schaltelemente zwischen dem ersten Gleichspannungstor und dem zweiten Gleichspannungstor gekoppelt. Der Gleichspannungswandler ist so ausgelegt, dass sich eine Richtung eines Stromflusses durch die Speicherdrossel während einer Schaltperiode der elektrischen Schaltelemente zumindest einmal umdreht. Der Gleichspannungswandler ist ferner ausgelegt, um bei einer Veränderung von Betriebsparametern des Gleichspannungswandlers eine Schaltfrequenz der elektrischen Schaltelemente derart nachzuführen oder nachzuregeln, dass ein Richtungswechsel des Stromflusses durch die Speicherdrossel während einer Schaltperiode der elektrischen Schaltelemente gewährleistet wird.

Der vorliegenden Erfindung liegt die Idee zu Grunde, dass die Verluste des Gleichspannungswandlers reduziert werden können, in dem sich eine Richtung eines Stromflusses durch die Speicherdrossel während einer Schaltperiode der elektrischen Schaltelemente (z.B. PWM-Periode) zumindest einmal umdreht. Das Umdrehen des Stromflusses durch die Speicherdrossel kann genutzt werden, um parasitäre Kapazitäten der elektrischen Schaltelemente zwischen den Schaltvorgängen umzuladen (z.B. vor dem Einschalten zu entladen), wodurch weichere Schaltvorgänge, d.h. Schaltvorgänge mit geringeren Spannungssprüngen, realisiert werden können. Da das Umdrehen des Stromflusses durch die Speicherdrossel von den Betriebsparametern des Gleichspannungswandlers abhängig ist, ist der Gleichspannungswandler darüber hinaus ausgelegt, um bei einer Veränderung von Betriebsparametern des Gleichspannungswandlers eine Schaltfrequenz der elektrischen Schaltelemente derart nachzuführen oder nachzuregeln, dass ein Richtungswechsel des Stromflusses durch die Speicherdrossel während einer Schaltperiode der elektrischen Schaltelemente gewährleistet wird.

Bei manchen Ausführungsbeispielen kann der Gleichspannungswandler ausgebildet sein, um die Schaltfrequenz der elektrischen Schaltelemente derart nachzuführen oder nachzuregeln, dass ein Richtungswechsel des Stromflusses durch die Speicherdrossel gewährleistet wird und zugleich ein minimaler Wert des Stromflusses durch die Speicherdrossel so eingestellt wird, dass einerseits ein Null-Spannungs-Schalten der elektrischen Schaltelemente während einer Schaltperiode der elektrischen Schaltelemente (z.B. PWM-Periode) gewährleistet wird und andererseits ein Stromrippel des Stromflusses durch die Speicherdrossel möglichst klein bleibt.

Weitere Ausführungsbeispiele beziehen sich auf ein Verfahren zum Betrieb eines Gleichspannungswandlers. Der Gleichspannungswandler weist ein erstes Gleichspannungstor, ein zweites Gleichspannungstor und eine Speicherdrossel auf. Die Speicherdrossel ist mittels elektrischer Schaltelemente zwischen dem ersten Gleichspannungstor und dem zweiten Gleichspannungstor gekoppelt. Der Gleichspannungswandler ist so ausgelegt, dass sich eine Richtung eines Stromflusses durch die Speicherdrossel während einer Schaltperiode der elektrischen Schaltelemente zumindest einmal umdreht. Das Verfahren umfasst Nachführen oder Nachregeln einer Schaltfrequenz der elektrischen Schaltelemente bei einer Veränderung von Betriebsparametern des Gleichspannungswandlers derart, dass ein Richtungswechsel des Stromflusses durch die Speicherdrossel während einer Schaltperiode der elektrischen Schaltelemente gewährleistet wird.

Weitere Ausführungsbeispiele schaffen einen Gleichspannungswandler mit einem ersten Gleichspannungstor, einem zweiten Gleichspannungstor und einer Speicherdrossel. Die Speicherdrossel ist mittels elektrischer Schaltelemente zwischen dem ersten Gleichspannungstor und dem zweiten Gleichspannungstor gekoppelt. Der Gleichspannungswandler ist so ausgelegt, dass sich eine Richtung eines Stromflusses durch die Speicherdrossel während einer Schaltperiode der elektrischen Schaltelemente zumindest einmal umdreht. Der Gleichspannungswandler ist ferner ausgelegt, um bei einer Veränderung von Betriebsparametern des Gleichspannungswandlers eine Schaltfrequenz der elektrischen Schaltelemente derart nachzuführen oder nachzuregeln, dass ein Richtungswechsel des Stromflusses durch die Speicherdrossel während einer Schaltperiode der elektrischen Schaltelemente gewährleistet wird. Die Speicherdrossel ist dabei so dimensioniert, dass ein minimaler Wert des Stromflusses durch die Speicherdrossel bei einer Sollschaltfrequenz so groß ist, dass bei einer Veränderung von Betriebsparametern des Gleichspannungswandlers für zumindest zwei aufeinander folgende Schaltperioden der elektrischen Schaltelemente ohne Nachführung der Schaltfrequenz der elektrischen Schaltelemente gewährleistet wird, dass sich jeweils während der zumindest zwei Schaltperioden die Richtung des Stromflusses durch die Speicherdrossel der elektrischen Schaltelemente zumindest einmal umdreht.

Ausführungsbeispiele der vorliegenden Erfindung werden bezugnehmend auf die beiliegenden Figuren näher erläutert. Es zeigen:

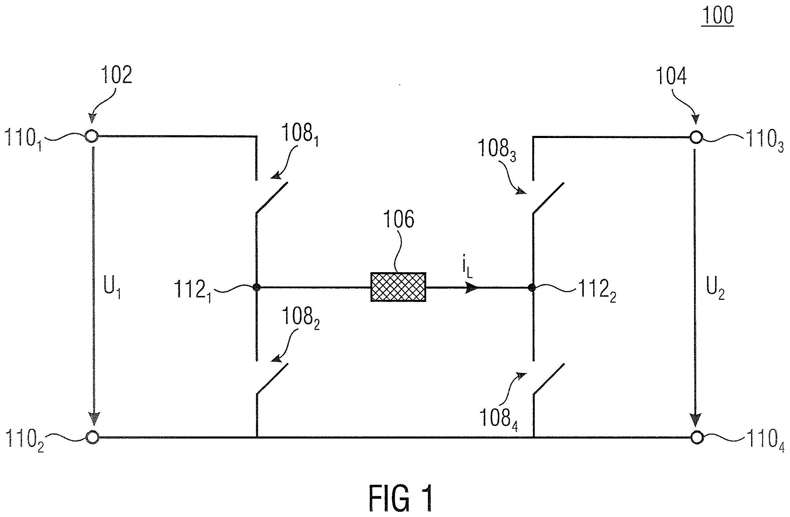

Fig. 1    ein schematisches Blockschaltbild eines Gleichspannungswandlers gemäß einem Ausführungsbeispiel;

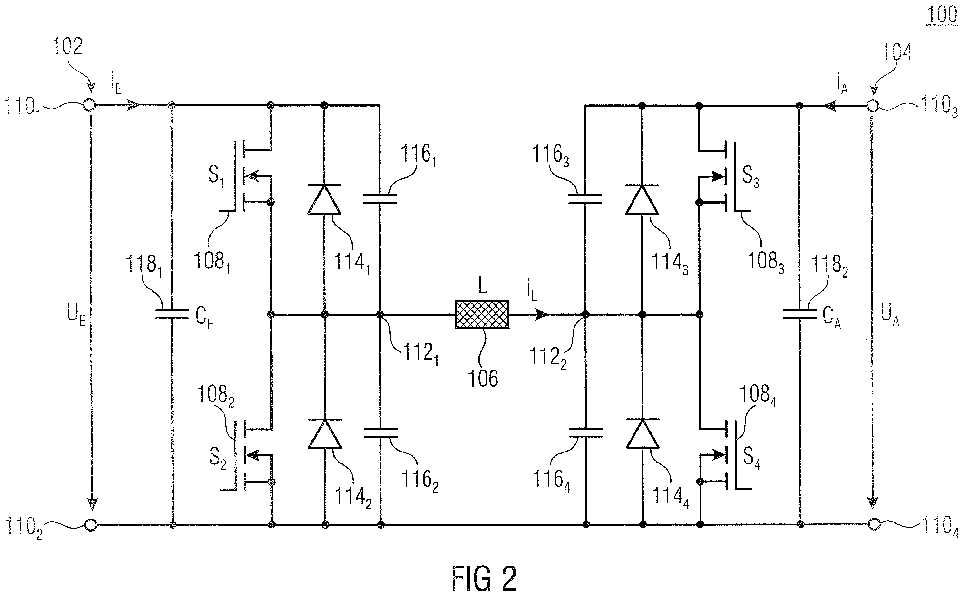

Fig. 2    ein schematisches Blockschaltbild des Gleichspannungswandlers gemäß einem Ausführungsbeispiel;

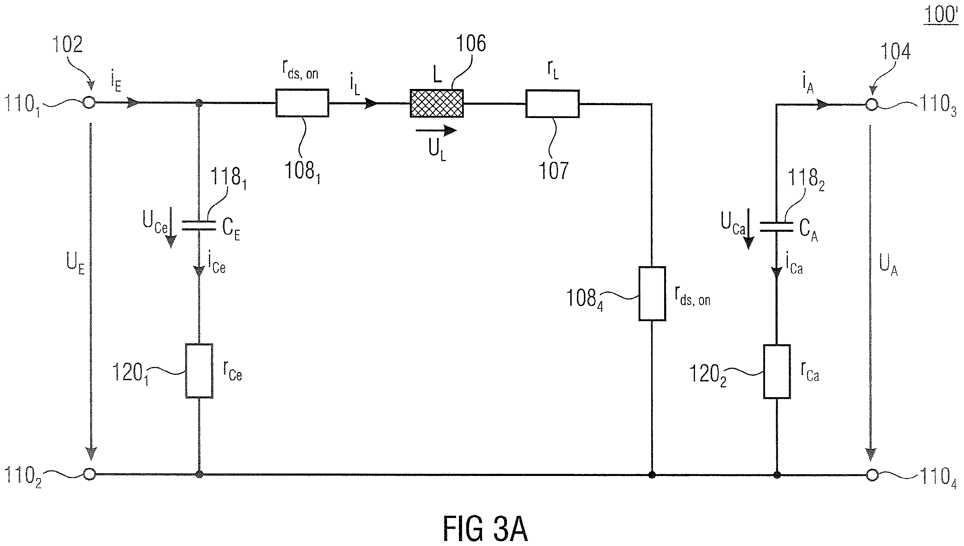

Fig. 3a    in einem schematischen Blockschaltbild eine äquivalente Schaltung des Gleichspannungswandlers in einem ersten Schaltzustand;

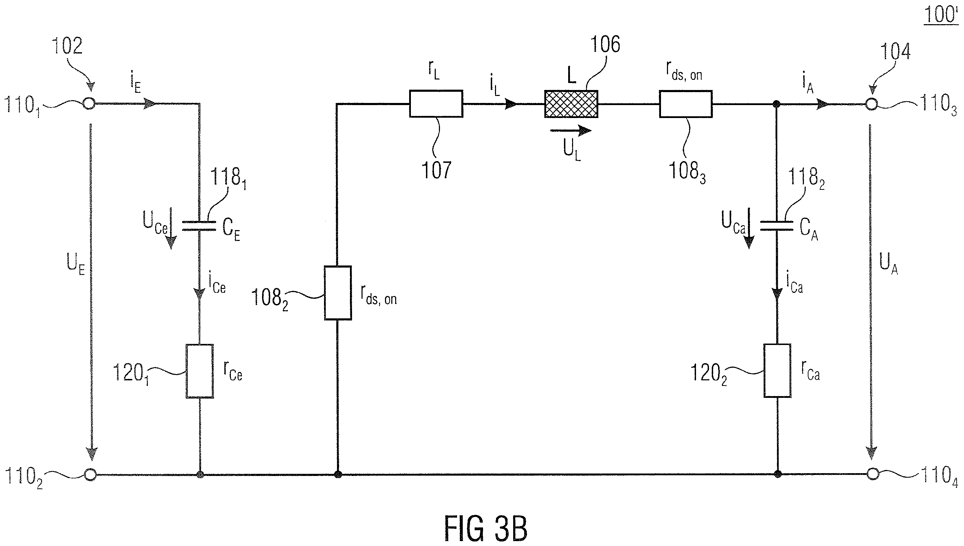

Fig. 3b in einem schematischen Blockschaltbild eine äquivalente Schaltung des Gleichspannungswandlers in einem zweiten Schaltzustand;

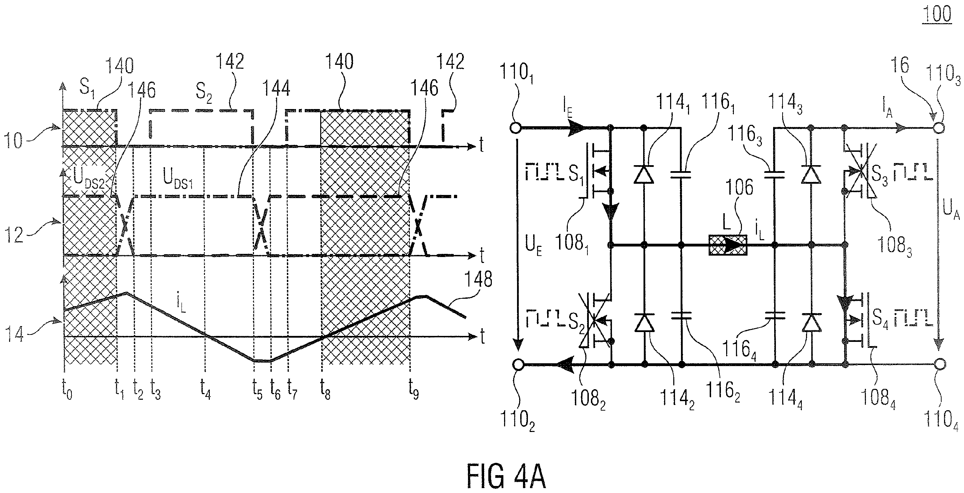

Fig. 4a in Diagrammen Steuersignal-, Strom- und Spannungsverläufe des Gleichspannungswandlers über eine Schaltperiode der elektrischen Schaltelemente (z.B. PWM-Periode) sowie in einem schematischen Blockschaltbild einen Schalt- und Stromflusszustand während eines ersten Zeitabschnitts der Schaltperiode der elektrischen Schaltelemente (z.B. PWM-Periode);

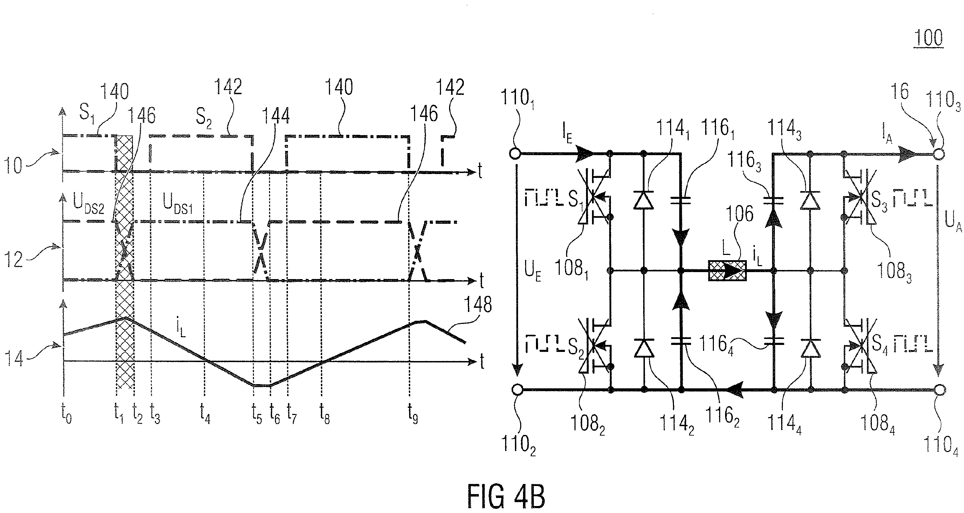

Fig. 4b in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines zweiten Zeitabschnitts der Schaltperiode der elektrischen Schaltelemente (z.B. PWM-Periode);

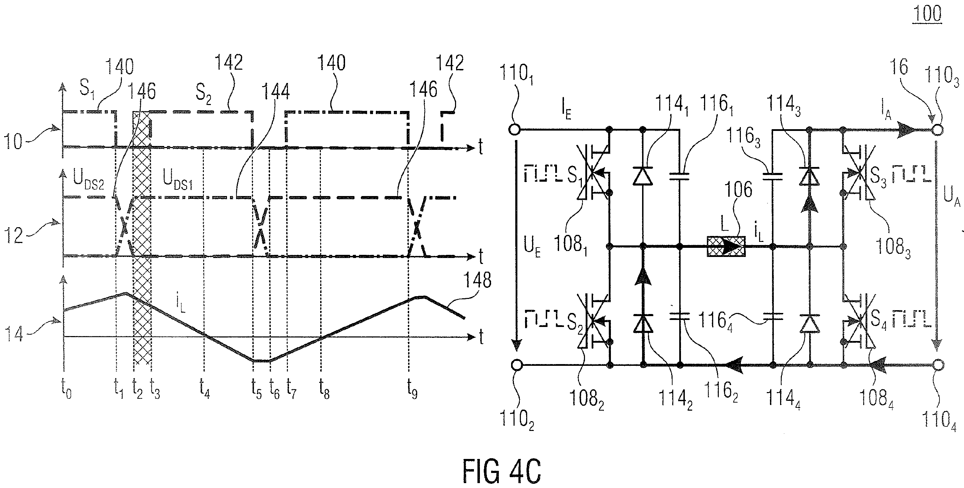

Fig. 4c in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines dritten Zeitabschnitts der Schaltperiode der elektrischen Schaltelemente (z.B. PWM-Periode);

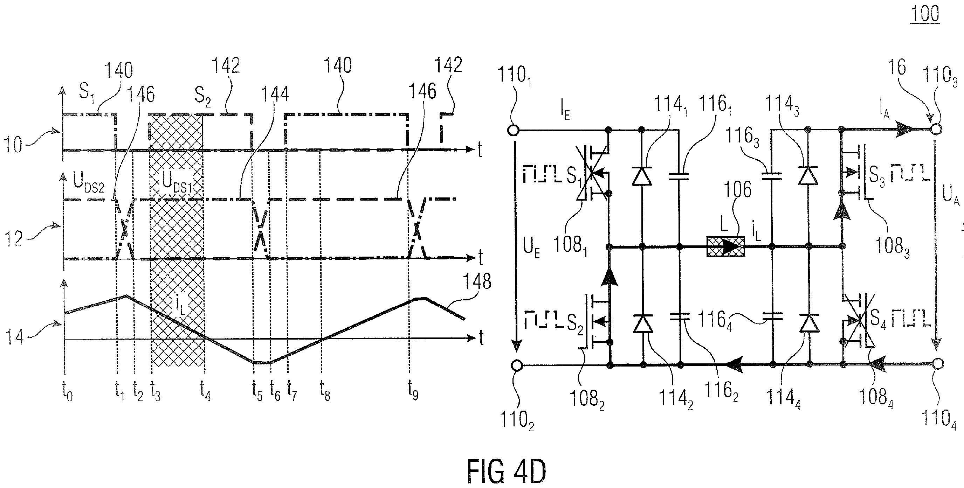

Fig. 4d in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines vierten Zeitabschnitts der Schaltperiode der elektrischen Schaltelemente (z.B. PWM-Periode);

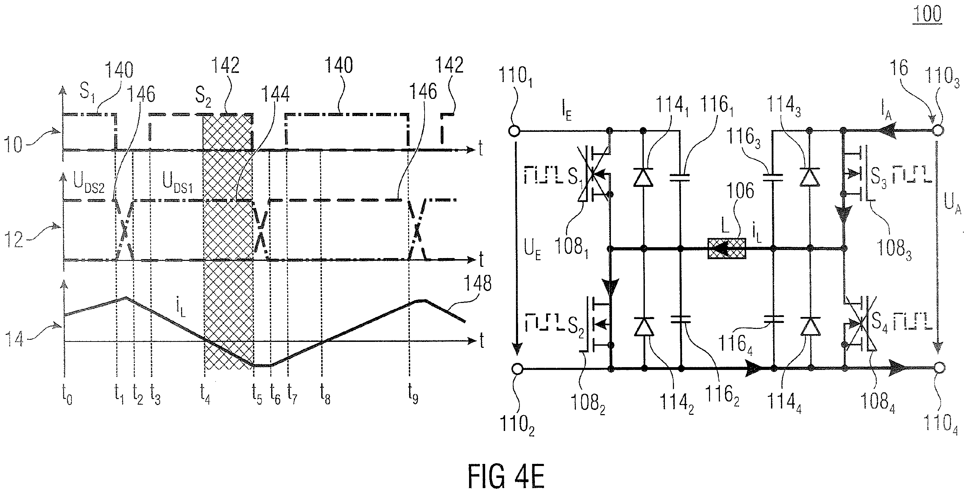

Fig. 4e in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines fünften Zeitabschnitts der Schaltperiode der elektrischen Schaltelemente (z.B. PWM-Periode);

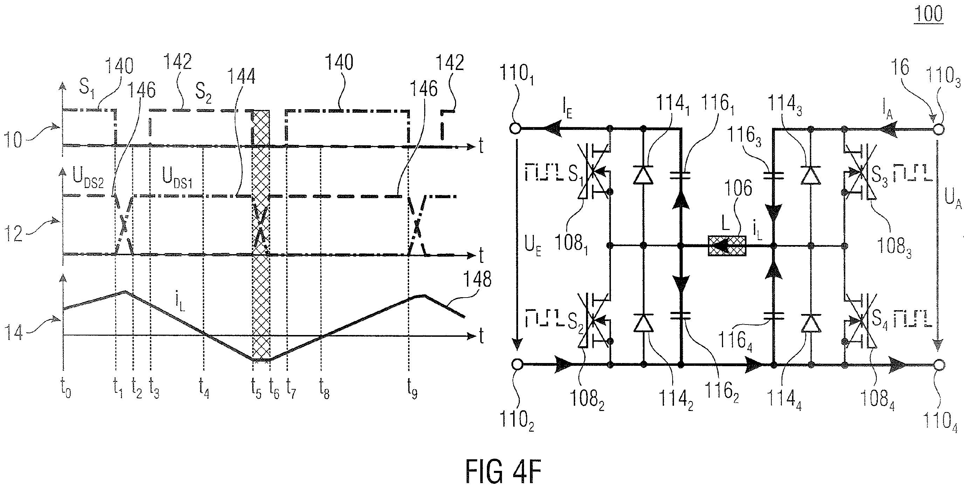

Fig. 4f in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines sechsten Zeitabschnitts der Schaltperiode der elektrischen Schaltelemente (z.B. PWM-Periode);

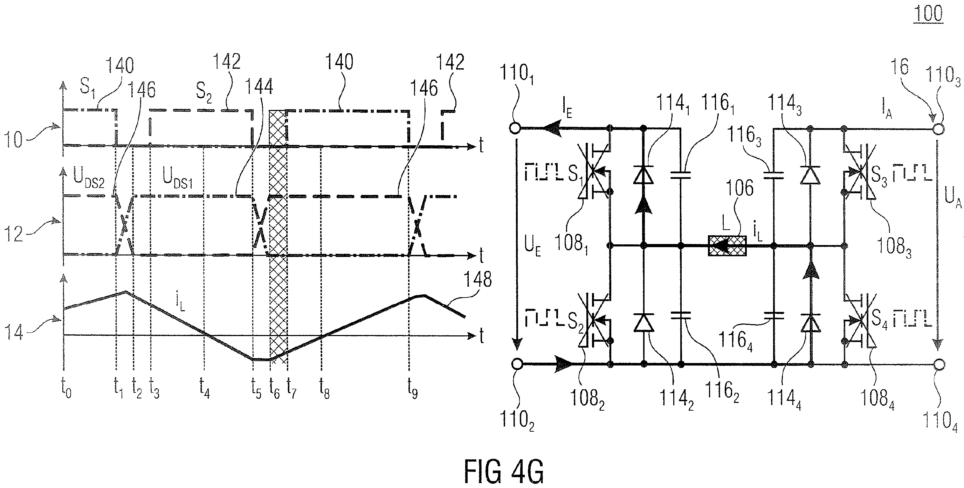

Fig. 4g in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines siebten Zeitabschnitts der Schaltperiode der elektrischen Schaltelemente (z.B. PWM-Periode);

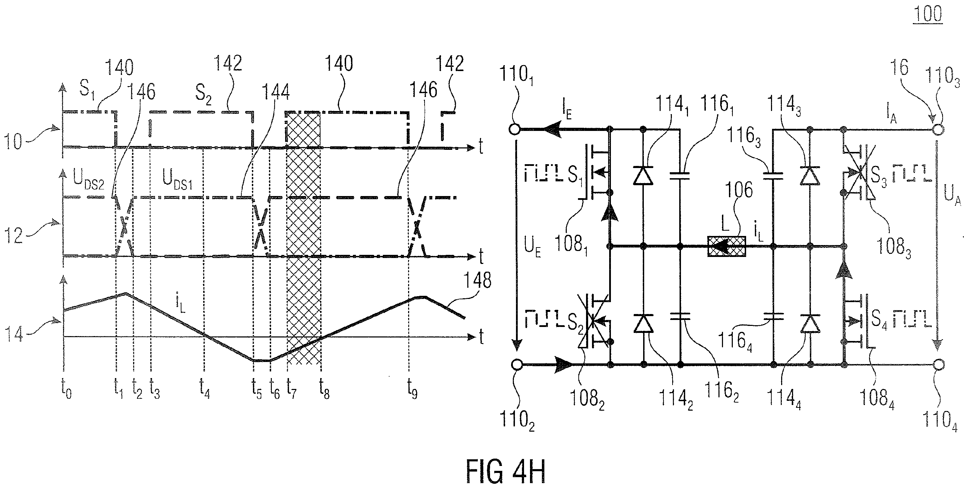

Fig. 4h in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines achten Zeitabschnitts der Schaltperiode der elektrischen Schaltelemente (z.B. PWM-Periode);

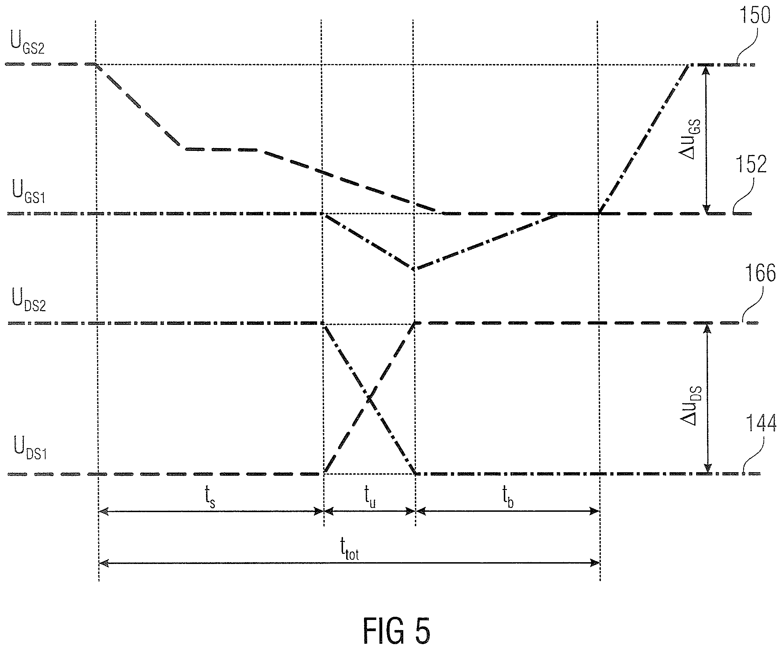

Fig. 5 in einem Diagramm einen Verlauf des Spannungsabfalls über dem ersten elektrischen Schaltelement, einen Verlauf des Spannungsabfalls über dem zweiten elektrischen Schaltelement, einen Verlauf einer Steuerspannung des ersten elektrischen Schaltelements und einen Verlauf einer Steuerspannung des zweiten elektrischen Schaltelements jeweils während einer Totzeit des Gleichspannungswandlers;

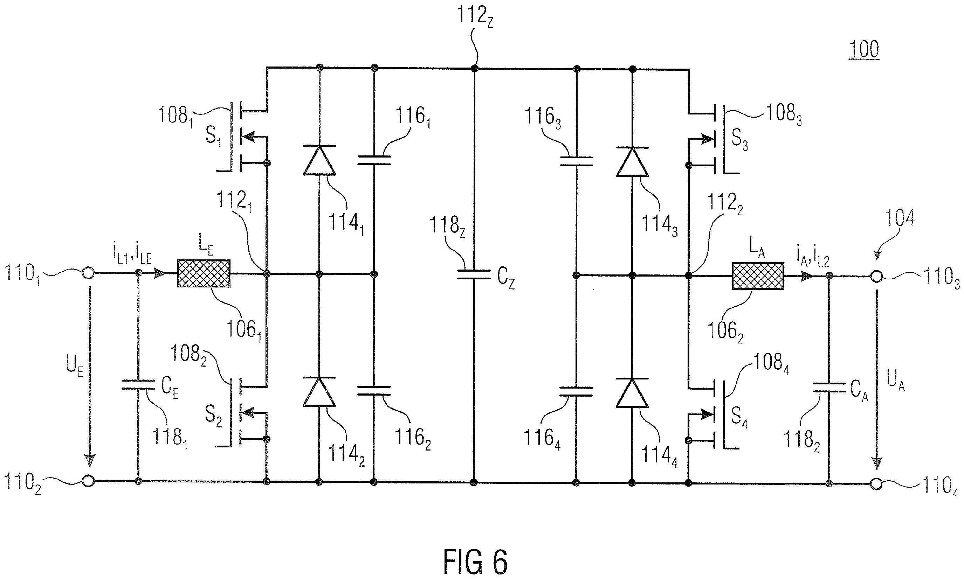

Fig. 6 ein schematisches Blockschaltbild des Gleichspannungswandlers gemäß einem weiteren Ausführungsbeispiel;

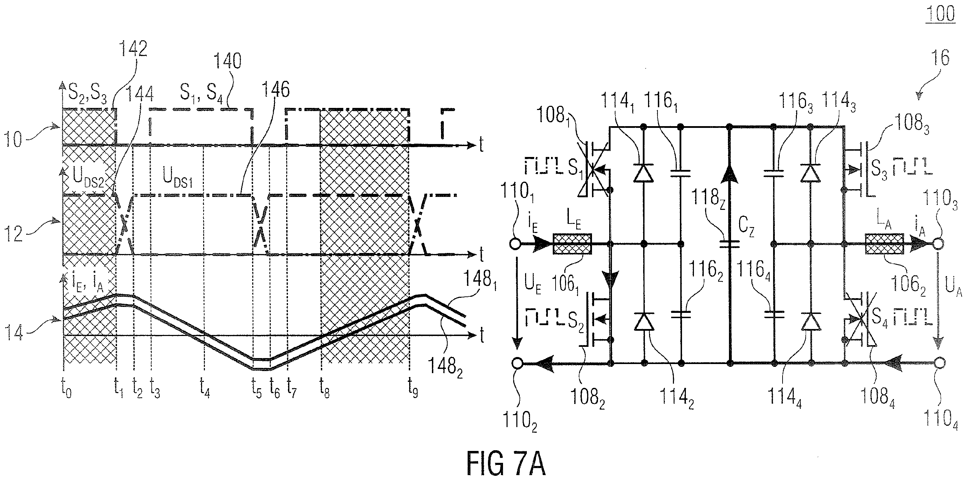

Fig. 7a in Diagrammen Steuersignal-, Strom- und Spannungsverläufe des Gleichspannungswandlers über eine Schaltperiode der elektrischen Schaltelemente (z.B. PWM-Periode) sowie in einem schematischen Blockschaltbild einen Schalt- und Stromflusszustand während eines ersten Zeitabschnitts der Schaltperiode der elektrischen Schaltelemente (z.B. PWM-Periode);

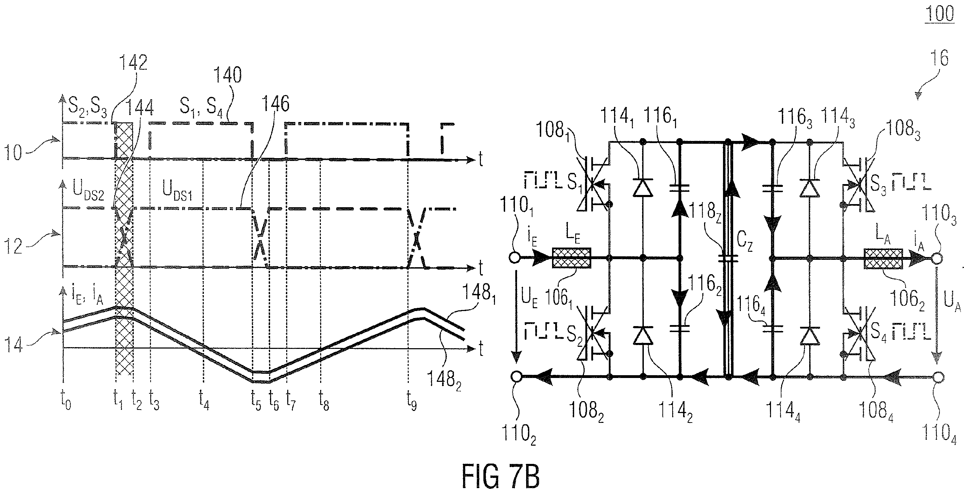

Fig. 7b in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines zweiten Zeitabschnitts der Schaltperiode der elektrischen Schaltelemente (z.B. PWM-Periode);

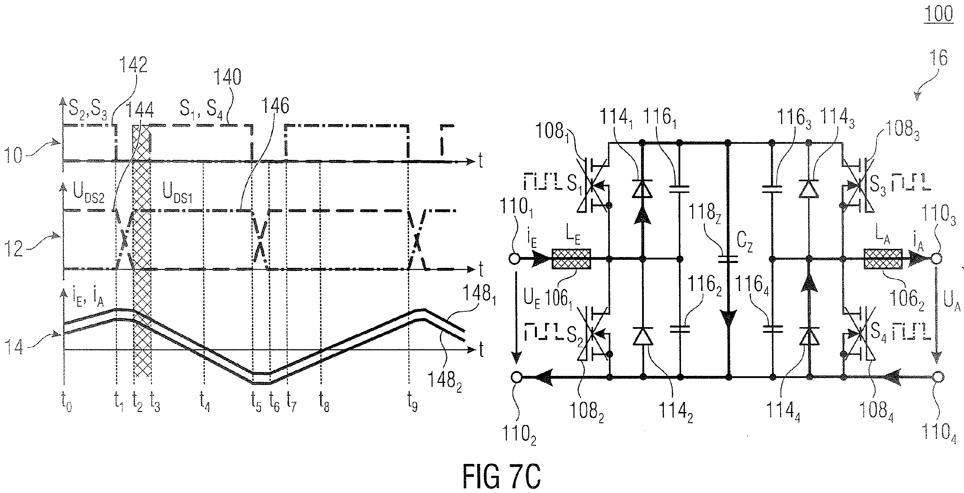

Fig. 7c    in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines dritten Zeitabschnitts der Schaltperiode der elektrischen Schaltelemente (z.B. PWM-Periode);

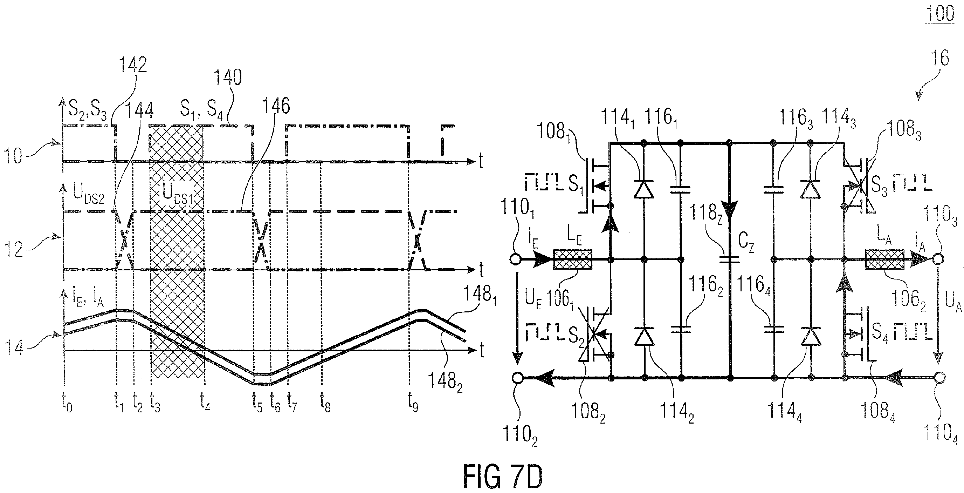

Fig. 7d    in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines vierten Zeitabschnitts der Schaltperiode der elektrischen Schaltelemente (z.B. PWM-Periode);

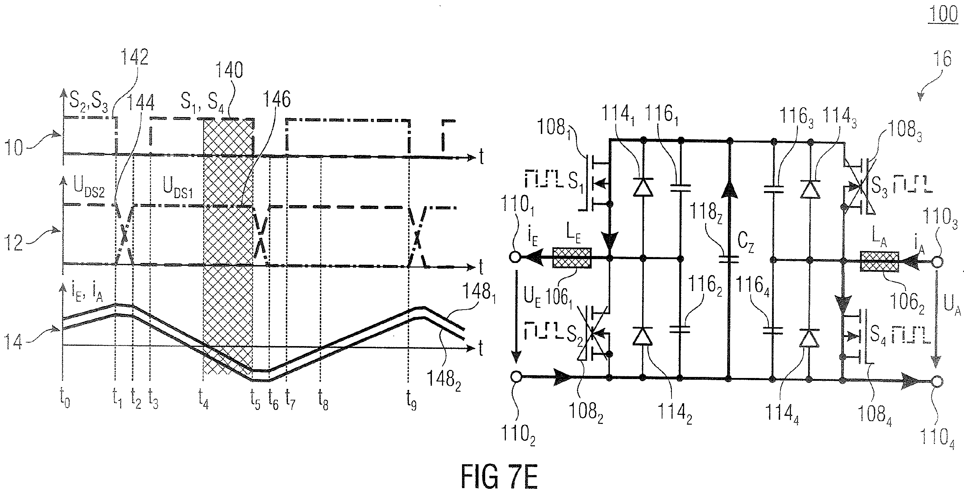

Fig. 7e    in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines fünften Zeitabschnitts der Schaltperiode der elektrischen Schaltelemente (z.B. PWM-Periode);

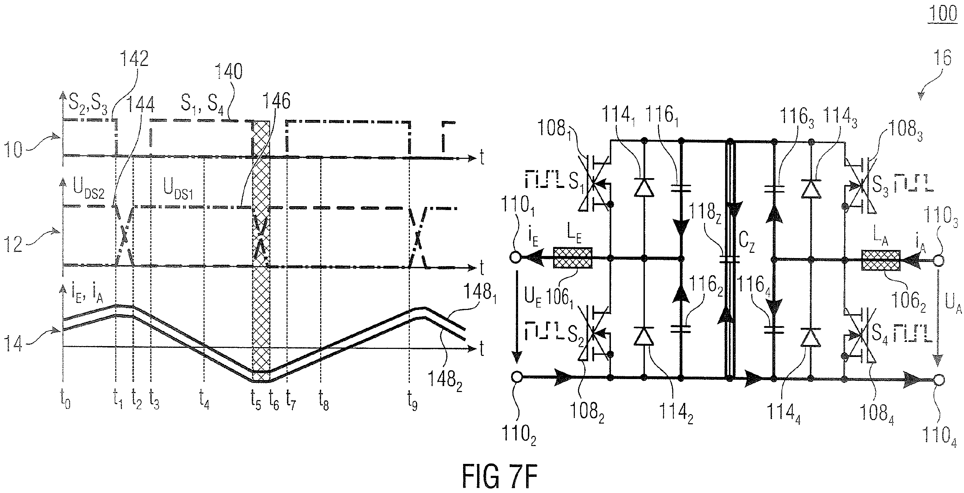

Fig. 7f    in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines sechsten Zeitabschnitts der Schaltperiode der elektrischen Schaltelemente (z.B. PWM-Periode);

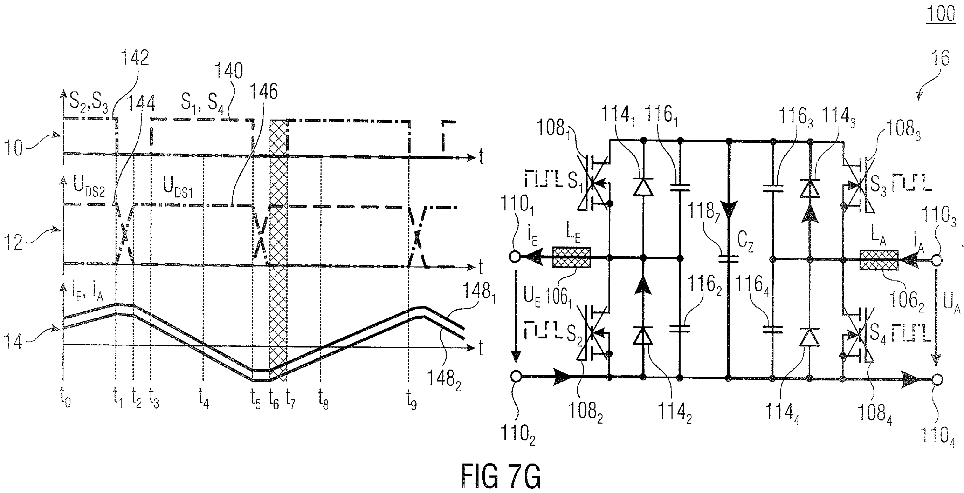

Fig. 7g    in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines siebten Zeitabschnitts der Schaltperiode der elektrischen Schaltelemente (z.B. PWM-Periode);

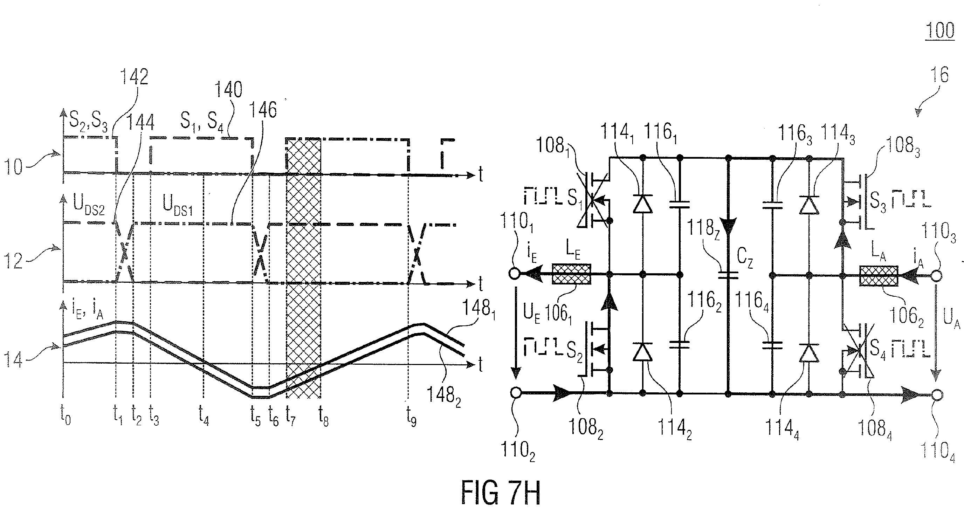

Fig. 7h    in Diagrammen die Steuersignal-, Strom- und Spannungsverläufe des Gleichspannungswandlers über die Schaltperiode der elektrischen Schaltelemente (z.B. PWM-Periode) sowie in einem schematischen Blockschaltbild einen Schalt- und Stromflusszustand während eines achten Zeitabschnitts der Schaltperiode der elektrischen Schaltelemente (z.B. PWM-Periode);

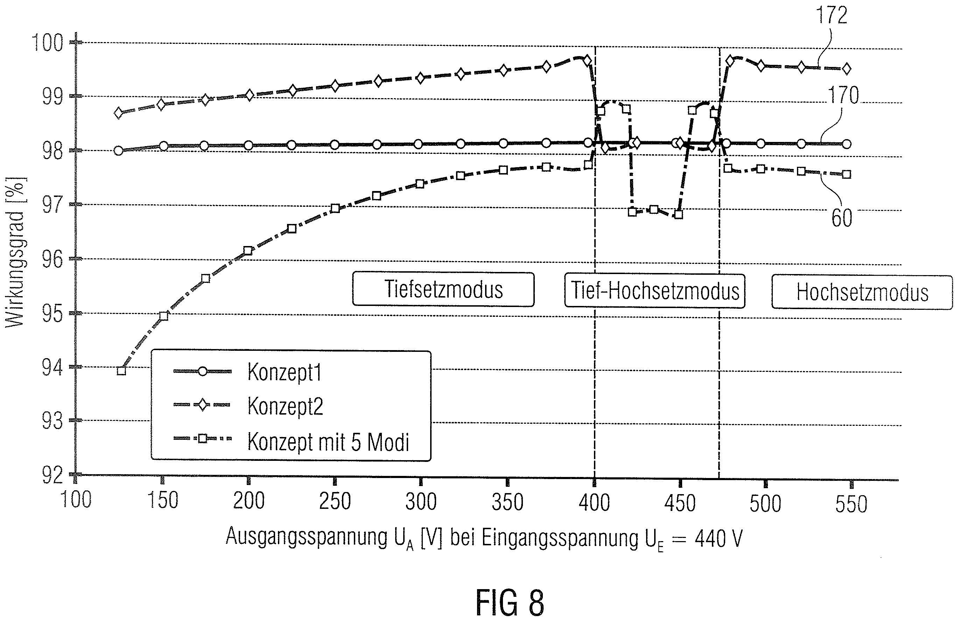

Fig. 8    in einem Diagramm den Wirkungsgrad des Gleichspannungswandlers mit resonanter Schaltentlastung ohne Übergangsphase und Frequenzmodulation, den Wirkungsgrad des Gleichspannungswandlers mit resonanter Schaltentlastung mit Übergangsphase und Frequenzmodulation, sowie den Wirkungsgrad des in der US 2012/0146594 A1 gezeigten Gleichspannungswandlers in Abhängigkeit von der Ausgangsspannung $U_A$ bei einer Eingangsspannung von $U_E$ = 440 V und nach Spezifikation erlaubter maximaler Eingangsleistung;

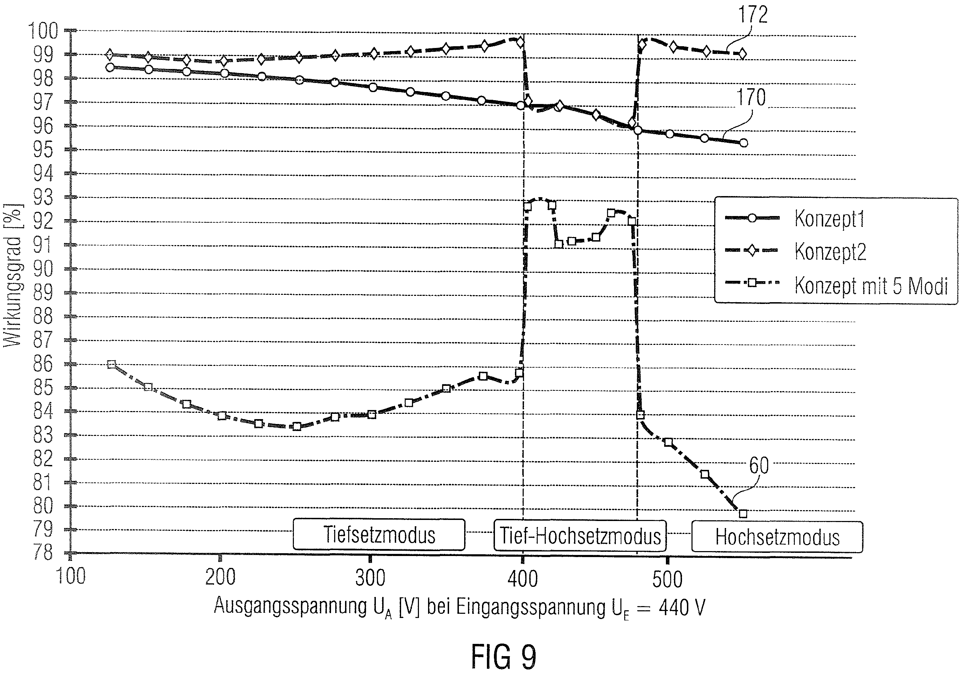

Fig. 9    in einem Diagramm den Wirkungsgrad des Gleichspannungswandlers mit resonanter Schaltentlastung ohne Übergangsphase und Frequenzmodulation, den Wirkungsgrad des Gleichspannungswandlers mit resonanter Schaltentlastung mit Übergangsphase und Frequenzmodulation, sowie den Wirkungsgrad des in der US 2012/0146594 A1 gezeigten Gleichspannungswandlers in Abhängigkeit von der Ausgangsspannung $U_A$ bei einer Eingangsspannung von $U_E$ = 440 V bei zwölfprozentiger der maximal zu liefernden Eingangsleistung;

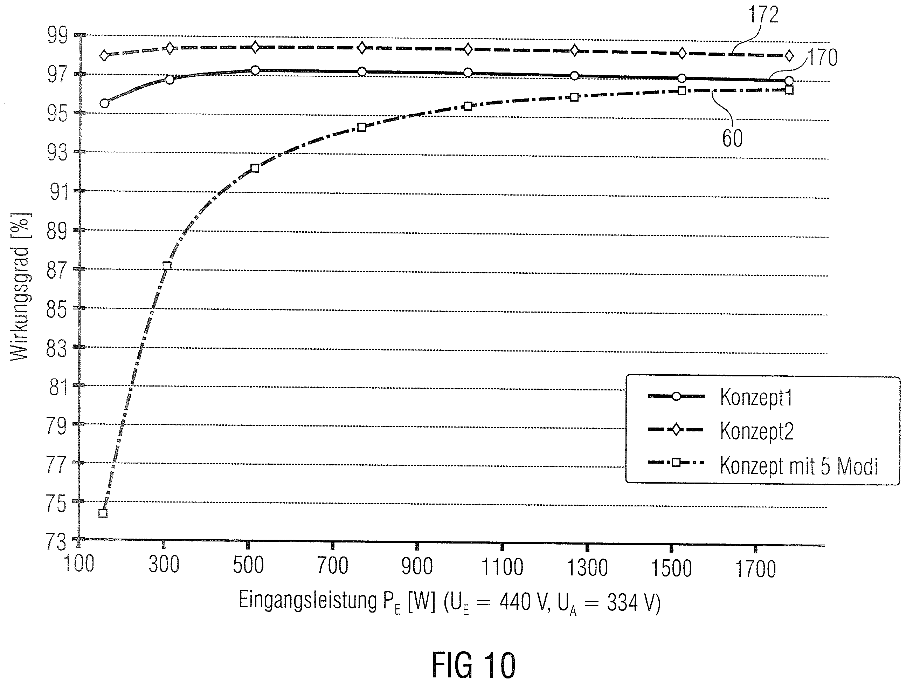

Fig. 10    in einem Diagramm den Wirkungsgrad des Gleichspannungswandlers mit resonanter Schaltentlastung ohne Übergangsphase und Frequenzmodulation, den Wirkungsgrad des Gleichspannungswandlers mit resonanter Schaltentlastung mit Übergangsphase und Frequenzmodulation, sowie den Wirkungsgrad des in der US 2012/0146594 A1 gezeigten Gleichspannungswandlers in Abhängigkeit von der Eingangsleistung bei einer Eingangsspannung von $U_E$ = 440V und einer Ausgangsspannung von $U_A$ = 334V; und

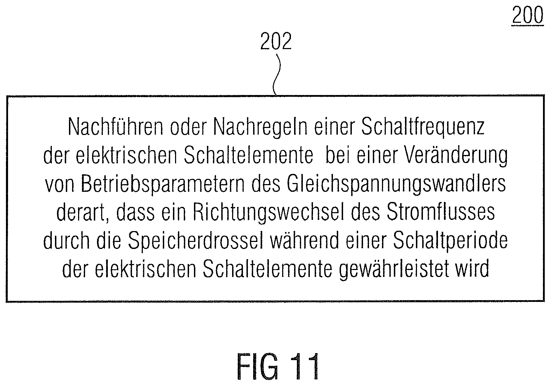

Fig. 11    ein Flussdiagramm eines Verfahrens zum Betrieb eines Gleichspannungswandlers, gemäß einem Ausführungsbeispiel der vorliegenden Erfindung.

In der nachfolgenden Beschreibung der Ausführungsbeispiele der Erfindung werden in den Figuren gleiche oder gleichwirkende Elemente mit den gleichen Bezugzeichen versehen, so dass deren Beschreibung in den unterschiedlichen Ausführungsbeispielen untereinander austauschbar ist.

Fig. 1 zeigt ein schematisches Blockschaltbild eines Gleichspannungswandlers 100 gemäß einem Ausführungsbeispiel. Der Gleichspannungswandler 100 weist ein erstes Gleichspannungstor 102, ein zweites Gleichspannungstor 104 und eine Speicherdrossel 106 auf. Die Speicherdrossel 106 ist mittels elektrischer Schaltelemente $108_1$ bis $108_n$ zwischen dem ersten Gleichspannungstor 102 und dem zweiten Gleichspannungstor 104 gekoppelt. Der Gleichspannungswandler 100 ist so ausgelegt, dass sich eine Richtung eines Stromflusses $i_L$ durch die Speicherdrossel 106 während einer Schaltperiode der elektrischen Schaltelemente $108_1$ bis $108_n$ (z.B. PWM-Periode) zumindest einmal umdreht. Der Gleichspannungswandler 100 ist ausgelegt, um bei einer Veränderung von Betriebsparametern des Gleichspannungswandlers 100 eine Schaltfrequenz der elektrischen Schaltelemente $108_1$ bis $108_n$ derart nachzuführen oder nachzuregeln, dass ein Richtungswechsel des Stromflusses $i_L$ durch die Speicherdrossel 106 während einer Schaltperiode der elektrischen Schaltelemente $108_1$ bis $108_n$ gewährleistet wird.

Bei Ausführungsbeispielen ist der Gleichspannungswandler 100 so ausgelegt, dass eine Richtung eines Stromflusses $i_L$ durch die Speicherdrossel 106 sich während einer Schaltperiode der elektrischen Schaltelemente $108_1$ bis $108_n$ (z.B. PWM-Periode) zumindest einmal umdreht. Das Umdrehen des Stromflusses durch die Speicherdrossel kann genutzt werden, um parasitäre Kapazitäten der elektrischen Schaltelemente $108_1$ bis $108_n$ zwischen den Schaltvorgängen umzuladen (z.B. um parasitäre Kapazitäten der elektrischen Schaltelemente $108_1$ bis $108_n$ vor dem Einschalten zu entladen), wodurch weichere Schaltvorgänge, d.h. Schaltvorgänge mit geringeren Spannungssprüngen, realisiert werden können. Da das Umdrehen des Stromflusses $i_L$ durch die Speicherdrossel 106 von den Betriebsparametern des Gleichspannungswandlers 100 abhängig ist, ist der Gleichspannungswandler 100 ausgelegt, um bei einer Veränderung von Betriebsparametern des Gleichspannungswandlers 100 eine Schaltfrequenz der elektrischen Schaltelemente $108_1$ bis $108_n$ derart nachzuführen oder nachzuregeln, dass ein Richtungswechsel des Stromflusses $i_L$ durch die Speicherdrossel 106 während einer Schaltperiode der elektrischen Schaltelemente $108_1$ bis $108_n$ gewährleistet wird.

Bei manchen Ausführungsbeispielen kann der Gleichspannungswandler ausgebildet sein, um die Schaltfrequenz der elektrischen Schaltelemente $108_1$ bis $108_n$ derart nachzuführen oder nachzuregeln, dass ein Richtungswechsel des Stromflusses $i_L$ durch die Speicherdrossel 106 gewährleistet wird und zugleich ein minimaler Wert des Stromflusses $i_L$ durch die Speicherdrossel 106 so eingestellt wird, dass ein Null-Volt-Schalten der elektrischen Schaltelemente $108_1$ bis $108_n$ während einer Schaltperiode der elektrischen Schaltelemente $108_1$ bis $108_n$ (z.B. PWM-Periode) gewährleistet ist und ein Stromrippel des Stromflusses durch die Speicherdrossel 106 möglichst klein bleibt.

Bei Ausführungsbeispielen kann der Gleichspannungswandler 100 so ausgelegt sein, dass sich eine Richtung eines Stromflusses $i_L$ durch die Speicherdrossel 106 während einer Schaltperiode der elektrischen Schaltelemente $108_1$ bis $108_n$ (z.B. PWM-Periode) (genau) zweimal umdreht.

Zu den Betriebsparametern des Gleichspannungswandlers 100 können beispielsweise Spannungen und Ströme an Anschlusspaaren des ersten und/oder zweiten Gleichspannungstors 102 und 104 zählen. Beispielsweise kann das erste Gleichspannungstor 102 mit einer Spannungs- oder Stromquelle verbunden sein, während das zweite Gleichspannungstor 104 mit einer Last verbunden sein kann, so dass die Betriebsparameter des Gleichspannungswandlers 100 durch die Spannungs- oder Stromquelle oder Last beeinflusst werden können.

Wie bereits erwähnt kann die Speicherdrossel 106 mittels elektrischer Schaltelemente $108_1$ bis $108_n$ zwischen dem ersten Gleichspannungstor 102 und dem zweiten Gleichspannungstor 104 gekoppelt sein. Der Begriff "gekoppelt" kann sich dabei auf eine direkte elektrische Verbindung bzw. niederohmsche Verbindung, wie z.B. ein Kabel, eine Leitung oder eine Leiterbahn, oder auf eine indirekte elektrische Verbindung, die mittels zumindest eines weiteren aktiven oder passiven elektrischen Bauelements, wie z.B. einem Widerstand, einer Diode, oder einem elektrischen Schalter, realisiert wird, beziehen.

Der Gleichspannungswandler 100 kann bis zu n elektrische Schaltelemente $108_1$ bis $108_n$ aufweisen, wobei n eine natürliche Zahl größer gleich zwei ist, $n \geq 2$.

Beispielsweise kann der Gleichspannungswandler 100, wie in Fig. 1 zu erkennen ist, vier (n = 4) elektrische Schaltelemente $108_1$ bis $108_4$ aufweisen, wobei ein erstes elektrisches Schaltelement $108_1$ und ein zweites elektrisches Schaltelement $108_2$ der vier elektrischen Schaltelemente $108_1$ bis $108_4$ in Reihe zwischen einem ersten Anschluss $110_1$ und einem zweiten Anschluss $110_2$ des ersten Gleichspannungstors 102 geschaltet sind, und wobei ein drittes elektrisches Schaltelement $108_3$ und ein viertes elektrisches Schaltelement $108_4$ der vier elektrischen Schaltelemente $108_1$ bis $108_4$ in Reihe zwischen einem dritten Anschluss $110_3$ und einem vierten Anschluss $110_4$ des zweiten Gleichspannungstors 104 geschaltet sind.

Dabei kann die Speicherdrossel 106 in Reihe zwischen einem ersten Knoten $112_1$ und einem zweiten Knoten $112_2$ geschaltet sein, wobei der erste Knoten $112_1$ in Reihe zwischen dem ersten elektrischen Schaltelement $108_1$ und dem zweiten elektrischen Schaltelement $108_2$ geschaltet sein kann, und wobei der zweite Knoten $112_2$ in Reihe zwischen dem dritten elektrischen Schaltelement $108_3$ und dem vierten elektrischen Schaltelement $108_4$ geschaltet sein kann.

Das erste elektrische Schaltelement $108_1$ kann somit in Reihe zwischen dem ersten Anschluss $110_1$ und dem ersten Knoten $112_1$ geschaltet sein, während das zweite elektrische Schaltelement $108_2$ in Reihe zwischen dem ersten Knoten $112_1$ und dem zweiten Anschluss $110_2$ geschaltet sein kann. Dementsprechend kann das dritte elektrische Schaltelement $108_3$ in Reihe zwischen dem dritten Anschluss $110_3$ und dem zweiten Knoten $112_2$ geschaltet sein, während das vierte elektrische Schaltelement $108_4$ in Reihe zwischen dem zweiten Knoten $112_2$ und dem vierten

Anschluss $110_4$ geschaltet sein kann.

Wie in Fig. 1 zu erkennen ist, kann an dem ersten Gleichspannungstor 102 eine erste Spannung $u_1$ anliegen, während an dem zweiten Gleichspannungstor 104 eine zweite Spannung $u_2$ anliegen kann. Der Gleichspannungswandler 100 kann dabei ausgebildet sein, um basierend auf der ersten Spannung $u_1$ die zweite Spannung $u_2$ bereitzustellen, wobei die zweite Spannung $u_2$ größer, kleiner oder gleich der ersten Spannung $u_1$ sein kann. Natürlich kann der Gleichspannungswandler 100 auch ausgebildet sein, um basierend auf der zweiten Spannung $u_2$ die erste Spannung $u_1$ bereitzustellen, wobei die erste Spannung $u_1$ größer, kleiner oder gleich der zweiten Spannung $u_2$ sein kann.

Somit kann Gleichspannungswandler 100 ein bidirektionaler Gleichspannungswandler sein. Ferner kann Gleichspannungswandler 100 im Tief-Hochsetzmodus betrieben werden. Des Weiteren kann der Gleichspannungswandler 100 auch im Tiefsetzmodus und/oder Hochsetzmodus betrieben werden. Darüber hinaus kann der Gleichspannungswandler 100 zwischen dem Tiefsetzmodus, Hochsetzmodus und Tief-Hochsetzmodus umgeschaltet werden.

Fig. 2 zeigt ein schematisches Blockschaltbild des Gleichspannungswandlers 100 gemäß einem Ausführungsbeispiel. Wie in Fig. 2 zu erkennen ist, können die vier elektrischen Schaltelemente $108_1$ bis $108_4$ durch MOSFETs implementiert werden (MOSFET = metaloxide-semiconductorfield-effecttransistor, dt. Metall-Oxid-Halbleiter-Feldeffekttransistor). Natürlich können die vier elektrischen Schaltelemente $108_1$ bis $108_4$ auch durch andere ansteuerbaren elektrischen Schaltelemente, wie z.B. Bipolartransistoren oder IGBTs (IGBT = insulated-gate bipolar transistor, dt. Bipolartransistor mit isolierter Gate-Elektrode) implementiert werden.

Der Gleichspannungswandler 100 kann ferner vier Dioden (Freilaufdioden) $114_1$ bis $114_4$ aufweisen, die antiparallel zu den vier elektrischen Schaltelementen $108_1$ bis $108_4$ geschaltet sind.

Beispielsweise kann eine erste Diode $114_1$ der vier Dioden $114_1$ bis $114_4$ parallel zu dem ersten elektrischen Schaltelement $108_1$ geschaltet sein, so dass eine Katode der ersten Diode $114_1$ mit dem ersten Anschluss $110_1$ verbunden ist, während eine Anode der ersten Diode $114_1$ mit dem ersten Knoten $112_1$ verbunden ist. Eine zweite Diode $114_2$ der vier Dioden $114_2$ bis $114_4$ kann parallel zu dem zweiten elektrischen Schaltelement $108_2$ geschaltet sein, so dass eine Katode der zweiten Diode $114_2$ mit dem ersten Knoten $112_1$ verbunden ist, während eine Anode der zweiten Diode $114_2$ mit dem zweiten Anschluss $110_2$ verbunden ist. Eine dritte Diode $114_3$ der vier Dioden $114_1$ bis $114_4$ kann parallel zu dem dritten elektrischen Schaltelement $108_3$ geschaltet sein, so dass eine Katode der dritten Diode $114_3$ mit dem dritten Anschluss $110_3$ verbunden ist, während eine Anode der dritten Diode $114_3$ mit dem zweiten Knoten $112_2$ verbunden ist. Eine vierte Diode $114_4$ der vier Dioden $114_1$ bis $114_4$ kann parallel zu der vierten elektrischen Schaltelement $108_4$ geschaltet sein, so dass eine Katode der vierten Diode $114_4$ mit dem zweiten Knoten $112_2$ verbunden ist, während eine Anode der vierten Diode $114_4$ mit dem vierten Anschluss $110_4$ verbunden ist.

Des Weiteren kann der Gleichspannungswandler 100 eine erste Kapazität $118_1$ (z.B. einen ersten Kondensator) und eine zweite Kapazität $118_2$ (z.B. einen zweiten Kondensator) aufweisen, wobei die erste Kapazität $118_1$ in Reihe zwischen dem ersten Anschluss $110_1$ und dem zweiten Anschluss $110_2$ geschaltet sein kann, und wobei die zweite Kapazität $118_2$ in Reihe zwischen dem dritten Anschluss $110_3$ und dem vierten Anschluss $110_4$ geschaltet sein kann.

Darüber hinaus weist das in Fig. 2 gezeigte schematische Blockschaltbild des Gleichspannungswandlers 100 vier Kapazitäten $116_1$ bis $116_4$ auf, welche die parasitären Kapazitäten der vier elektrischen Schaltelemente $108_1$ bis $108_4$ darstellen sollen. Die vier Kapazitäten $116_1$ bis $116_4$ können auch extern angeschlossene Kondensatoren, wie z. B. Snubber-Kondensatoren, sein.

Im Folgenden wird davon ausgegangen, dass das erste Gleichspannungstor 102 ein Gleichspannungseingangstor ist und dass das zweite Gleichspannungstor 104 ein Gleichspannungsausgangstor ist.

Dementsprechend kann die erste Spannung $u_1$, die an dem ersten Gleichspannungstor 102 anliegt, eine Eingangsspannung $u_E$ sein, während die zweite Spannung $u_2$, die an dem zweiten Gleichspannungstor 104 anliegt, eine Ausgangsspannung $u_A$ sein kann. Ferner kann die erste Kapazität $118_1$ eine Eingangskapazität $C_E$ sein, während die zweite Kapazität $118_2$ eine Ausgangskapazität $C_A$ sein kann.

Mit anderen Worten, Fig. 2 zeigt die Topologie des bidirektionalen Tief-Hochsetzstellers 100 bzw. des Gleichspannungswandlers 100, der als bidirektionaler (kaskadierter) Tief-Hochsetzsteller implementiert werden kann. Die elektrischen Schaltelemente (Schalter) $108_1(S_1)$ bis $108_4(S_4)$ können durch Leistungshalbleiter (z.B. MOSFETs oder IGBTs mit antiparallel geschalteter Diode) realisiert werden. In der folgenden Beschreibung wird ohne an Allgemeingültigkeit zu verlieren angenommen, dass die elektrischen Schaltelemente (Schalter) $108_1(S_1)$ bis $108_4(S_4)$ als MOSFETs betrachtet werden und die Energie von links nach rechts, d.h. vom Gleichspannungseingangstor 102 zum Gleichspannungsausgangstor 104 übertragen wird.

Wie bereits erwähnt, können die Schaltverluste des Gleichspannungswandlers 100 reduziert werden, indem zum Einen der Gleichspannungswandler 100 so ausgelegt ist, dass eine Richtung eines Stromflusses $i_L$ durch die Speicherdrossel 106 sich während einer Schaltperiode der elektrischen Schaltelemente $108_1$ bis $108_n$ (z.B. PWM-Periode) zumindest einmal umdreht, und zum Anderen die Schaltfrequenz der elektrischen Schaltelemente $108_1$ bis $108_4$ derart nachgeführt oder nachgeregelt wird, dass ein Richtungswechsel des Stromflusses $i_L$ durch die Speicherdrossel 106 während einer Schaltperiode der elektrischen Schaltelemente $108_1$ bis $108_n$ (z.B. PWM-Periode) gewährleistet wird. Dieses Konzept wird hierin als resonante Schaltentlastung mit Frequenzmodulation (Konzept 1) bezeichnet.

Im Folgenden wird das Konzept zur resonanten Schaltentlastung ohne Übergangsphase und mit Frequenzmodulation (Konzept 1) im Detail beschrieben.

Der Gleichspannungswandler 100 kann ausgebildet sein, um in einem Tief-Hochsetzmodus des Gleichspannungswandlers 100 zwischen einem ersten Schaltzustand, in dem das erste elektrische Schaltelement $108_1$ und das vierte elektrische Schaltelement $108_4$ eingeschaltet sind (und das zweite elektrische Schaltelement $108_2$ und das dritte elektrische Schaltelement $108_3$ ausgeschaltet sind), und einem zweiten Schaltzustand, in dem das zweite elektrische Schaltelement $108_2$ und das dritte elektrische Schaltelement $108_3$ eingeschaltet sind (und das erste elektrische Schal-telement $108_1$ und das vierte elektrische Schaltelement $108_4$ ausgeschaltet sind), (periodisch) umzuschalten.

Dabei kann der Gleichspannungswandler 100 ausgebildet sein, um zwischen dem ersten Schaltzustand und dem zweiten Schaltzustand derart umzuschalten, dass das Umschalten zwischen dem ersten Schaltzustand und dem zweiten Schaltzustand, und das Umschalten zwischen dem zweiten Schaltzustand und dem ersten Schaltzustand eine Totzeit aufweist, in der die elektrischen Schaltelemente $108_1$ bis $108_4$ ausgeschaltet sind.

Mit anderen Worten, bei dem Steuerungsverfahren ohne Übergangsphase können die elektrischen Schaltele-mente (Schalter) $108_1(S_1)$ und $108_4(S_4)$ stetig komplementär zu den elektrischen Schaltelementen (Schaltern) $108_2(S_2)$ und $108_3(S_3)$ ein- oder ausgeschaltet werden. Zur Vermeidung eines Kurzschlusses am Gleichspannungseingangstor (Eingang) 102 als auch am Gleichspannungsausgangstor (Ausgang) 104 des Gleichspannungswandlers (Wandlers) 100 kann zwischen Ein- und Ausschalten der elektrischen Schaltelemente (Leistungshalbleiter) $108_1$ bis $108_4$ (immer) eine Totzeit vorgesehen werden.

Entsprechend der Betriebsweise besitzt der Gleichspannungswandler (Tief-Hochsetzsteller) 100 somit innerhalb einer Schaltperiode der elektrischen Schaltelemente $108_1$ bis $108_n$ (z.B. PWM-Periode (PWM = Pulsweitenmodulation)) grundsätzlich zwei Zustände. Entweder werden die elektrischen Schaltelemente $108_1(S_1)$ und $108_4(S_4)$ gleich-zeitig eingeschaltet, während die elektrischen Schaltelemente $108_2(S_2)$ und $108_3(S_3)$ zugleich ausgeschaltet werden (erster Schaltzustand) oder umgekehrt (zweiter Schaltzustand). Auf diese Weise entstehen zwei Vorteile.

Ein Vorteil ist, dass die Ausgangsspannung $u_A$ des Gleichspannungswandlers 100 über das Tastverhältnis eines Paares komplementärer PWM-Signale kontinuierlich von null bis unendlich eingestellt werden kann. Dies bedeutet, dass der Gleichspannungswandler 100 (immer) im selben Modus -Tief-Hochsetzmodus- betrieben werden kann. Aus diesem Grund vermeidet das System (z.B. Gleichspannungswandler 100 verbunden mit Strom-/Spannungsquelle und Last) die während der Übergangsphasen zwischen verschiedenen Betriebsmodi von Spannungs- und Stromsprüngen verursachten Zuverlässigkeitsprobleme. Ein weiterer Vorteil ist, dass sich das System aus regelungstechnischer Sicht zu einer stabilen Regelstrecke entwickelt. Daher kann der Aufwand zum Reglerentwurf erheblich reduziert werden. Im Gegensatz dazu entstehen bei konventionellen Tief- und Hochsetzstellern instabile Regelstrecken aufgrund konjugiert komplexer Polpaare.

Diese Vorteile können direkt dem Zustandsraummodell des Gleichspannungswandlers 100 entnommen werden, wie im Folgenden anhand von Figuren 3a und 3b erläutert wird.

Fig. 3a zeigt in einem schematischen Blockschaltbild eine äquivalente Schaltung 100' des Gleichspannungswandlers (Tief-Hochsetzstellers) 100 im ersten Schaltzustand, bei dem das erste elektrische Schaltelement $108_1$ und das vierte elektrische Schaltelement $108_4$ eingeschaltet sind und das zweite elektrische Schaltelement $108_2$ und das dritte elektrische Schaltelement $108_3$ ausgeschaltet sind.

Dementsprechend weist die äquivalente Schaltung des Gleichspannungswandlers 100 die Speicherdrossel 106(L), einen parasitären Widerstand $107(r_L)$ der Speicherdrossel, einen Kanalwiderstand (Drain-Source-Widerstand) $r_{ds,on}$ des eingeschalteten ersten elektrischen Schaltelements $108_1$, einen Kanalwiderstand (Drain-Source-Widerstand) $r_{ds,on}$ des eingeschalteten vierten elektrischen Schaltelements $108_4$, die Eingangskapazität $118_1(C_E)$, einen parasitären Widerstand $120_1(r_{Ce})$ der Eingangskapazität, die Ausgangskapazität $118_2(C_A)$ und einen parasitären Widerstand $120_2(r_{ca})$ der Ausgangskapazität auf.

Dabei sind der Kanalwiderstand $r_{ds,on}$ des eingeschalteten ersten elektrischen Schaltelements $108_1$, die Spei-cherdrossel 106(L), der parasitäre Widerstand $r_L$ der Speicherdrossel 106 und der Kanalwiderstand $r_{ds,on}$ des einge-schalteten vierten elektrischen Schaltelements $108_4$ in Reihe zwischen dem ersten Anschluss $110_1$ und dem vierten Anschluss $110_4$ geschaltet, während die Eingangskapazität $118_1(C_E)$ und der parasitäre Widerstand $120_1(r_{CE})$ der Eingangskapazität in Reihe zwischen dem ersten Anschluss $110_1$ und dem zweiten Anschluss $110_2$ geschaltet sind, und während die Ausgangskapazität $118_2(C_A)$ und der parasitäre Widerstand $120_2(r_{ca})$ der Ausgangskapazität in Reihe zwischen dem dritten Anschluss $110_3$ und dem vierten Anschluss $110_4$ geschaltet sind.

Mit anderen Worten, in Fig. 3a wird die äquivalente Schaltung 100' des Gleichspannungswandlers 100 bei der Situation, in der die elektrischen Schaltelemente $108_1(S_1)$ und $108_4(S_4)$ eingeschaltet und die elektrischen Schaltele-mente $108_2(S_2)$ und $108_3(S_3)$ ausgeschaltet werden, abgebildet. Auf der linken Seite der Schaltung 100' wird die Speicherdrossel (Spule) 106 von der Eingangskapazität und ggf. einer zusätzlichen Energiequelle am Schaltungseingang $118_1(C_E)$ geladen. Entsprechend steigt der Strom $i_L$ in der Speicherdrossel 106 an. Auf der rechten Seite wird eine Last, die mit dem Gleichspannungsausgangstor 102 verbunden sein kann, vom Ausgangskondensator $118_2(C_A)$ gespeist. Der Energieinhalt des Ausgangskondensators $118_2(C_A)$ sinkt ab.

Fig. 3b zeigt in einem schematischen Blockschaltbild eine äquivalente Schaltung 100' des Gleichspannungswandlers (Tief-Hochsetzstellers) 100 im zweiten Schaltzustand, in dem das zweite elektrische Schaltelement $108_2$ und das dritte elektrische Schaltelement $108_3$ eingeschaltet sind, und das erste Schaltelement $108_1$ und das vierte elektrische Schaltelement $108_4$ ausgeschaltet sind.

Dementsprechend weist die äquivalente Schaltung 100' des Gleichspannungswandlers 100 die Speicherdrossel 106($L$), den parasitären Widerstand 107($r_L$) der Speicherdrossel, einen Kanalwiderstand (Drain-Source-Widerstand) $r_{ds,on}$ des eingeschalteten zweiten elektrischen Schaltelements $108_2$, einen Kanalwiderstand (Drain-Source-Widerstand) $r_{ds,on}$ des eingeschalteten dritten elektrischen Schaltelements $108_3$, die Eingangskapazität $118_1$($C_E$), den parasitären Widerstand $120_1$($r_{Ce}$) der Eingangskapazität, die Ausgangskapazität $118_2$($C_A$) und den parasitären Widerstand $120_2$($r_{ca}$) der Ausgangskapazität auf.

Dabei sind der Kanalwiderstand $r_{ds,on}$ des eingeschalteten zweiten elektrischen Schaltelements $108_2$, die Spei-cherdrossel 106($L$), der parasitäre Widerstand $r_L$ der Speicherdrossel 106 und der Kanalwiderstand $r_{ds,on}$ des einge-schalteten dritten elektrischen Schaltelements $108_3$ in Reihe zwischen dem zweiten Anschluss $110_2$ und dem dritten Anschluss $110_3$ geschaltet, während die Eingangskapazität $118_1$($C_E$) und der parasitäre Widerstand $120_1$($r_{CE}$) der Eingangskapazität in Reihe zwischen dem ersten Anschluss $110_1$ und dem zweiten Anschluss $110_2$ geschaltet sind, und während die Ausgangskapazität $118_2$($C_A$) und der parasitäre Widerstand $120_2$($r_{ca}$) der Ausgangskapazität in Reihe zwischen dem dritten Anschluss $110_3$ und dem vierten Anschluss $110_4$ geschaltet sind.

Mit anderen Worten, in Fig. 3b wird die äquivalente Schaltung 100' des Tief-Hochsetzstellers 100 bei der Situation, in der die elektrischen Schaltelemente $108_2$($S_2$) und $108_3$($S_3$) ein- und die elektrischen Schaltelemente $108_1$($S_1$) und $108_4$($S_4$) ausgeschaltet werden, dargestellt. In diesem Zustand wird die in der Speicherdrossel 106 gespeicherte Energie weiter an die Last, die mit dem Gleichspannungsausgangstor 104 verbunden sein kann, und den Ausgangskondensator $118_2$($C_A$) abgegeben. Die parasitären Widerstände der elektrischen Schaltelemente (Leistungshalbleiter) $r_{ds,on}$, der Speicherdrossel $r_L$ und der Kondensatoren $r_{ce}$ und $r_{ca}$ werden bei der Modellierung berücksichtigt.

Durch Einsetzen des sogenannten "State-Space-Averaging"-Verfahren (dt. etwa Zustandsraummittelungs-verfahren) unter der folgenden Definition

$$\text{Zustandsgrößen:} \qquad x = \begin{pmatrix} x_1 \\ x_2 \\ x_3 \end{pmatrix} = \begin{pmatrix} u_{Ce} \\ u_{Ca} \\ i_L \end{pmatrix} \qquad \text{(GL. 1-1)}$$

$$\text{Stellgröße:} \qquad u = d \ (\text{Tastgrad}) \qquad \text{(GL. 1-2)}$$

$$\text{Störgrößen:} \qquad p = \begin{pmatrix} p_1 \\ p_2 \end{pmatrix} = \begin{pmatrix} u_E \\ u_A \end{pmatrix} \qquad \text{(GL. 1-3)}$$

$$\text{Ausgangsgröße:} \qquad y = i_E \qquad \text{(GL. 1-4)}$$

lässt sich das Zustandsraummodell des Gleichspannungswandlers 100 beim Konzept zur resonanten Schaltentlastung ohne Übergangsphase und mit Frequenzmodulation herleiten:

$$\begin{pmatrix} \dot{x_1} \\ \dot{x_2} \\ \dot{x_3} \end{pmatrix} = \begin{pmatrix} -\dfrac{1}{r_{Ce} \cdot C_E} & 0 & 0 \\ 0 & -\dfrac{1}{r_{Ca} \cdot C_A} & 0 \\ 0 & 0 & -\dfrac{2 \cdot r_{ds,on} + r_L}{L} \end{pmatrix} \begin{pmatrix} x_1 \\ x_2 \\ x_3 \end{pmatrix} + \begin{pmatrix} \dfrac{1}{r_{Ce} \cdot C_E} & 0 \\ 0 & \dfrac{1}{r_{Ca} \cdot C_A} \\ \dfrac{1}{L} \cdot u & -\dfrac{1}{L} \cdot (1-u) \end{pmatrix}$$

$$\text{(GL. 1-5)}$$

$$y = \begin{pmatrix} -\dfrac{1}{r_{Ce}} & 0 & u \end{pmatrix} \begin{pmatrix} x_1 \\ x_2 \\ x_3 \end{pmatrix} + \begin{pmatrix} \dfrac{1}{r_{Ce}} & 0 \end{pmatrix} \begin{pmatrix} p_1 \\ p_2 \end{pmatrix} \qquad \text{(GL. 1-6)}$$

Die Zustände innerhalb der Totzeit werden vernachlässigt. Aus (GL. 1-5) ergibt sich, dass die Systemmatrix des Modells drei reale negative Polstellen $-\dfrac{1}{r_{Ce} \cdot C_E}$, $-\dfrac{1}{r_{Ca} \cdot C_A}$ und $-\dfrac{2 \cdot r_{ds,on} + r_L}{L}$ besitzt. Das offene System des Gleichspannungswandlers 100 ist daher eine stabile Regelstrecke. Darüber hinaus ist im stationären Zustand, und zwar für $\dot{x}_1 = \dot{x}_2 = \dot{x}_3 = 0$, der mathematische Zusammenhang zwischen der Eingangsspannung $U_E$ und der Ausgangsspannung $U_A$ näherungsweise durch (GL. 1-7) zu beschreiben:

$$\frac{U_A}{U_E} = \frac{D}{1-D} \qquad \text{(GL. 1-7)}$$

Hier ist D das Tastverhältnis (Stellgröße) im stationären Zustand. Daraus ist zu schließen, dass die Ausgangsspannung $U_A$ des Tief-Hochsetzstellers 100 durch Einstellen des Tastverhältnisses D kontinuierlich von null bis unendlich geregelt werden kann.

Die oben dargestellte Betriebsweise der elektrischen Schaltelemente (Schalter) $108_1$ bis $108_4$ führt jedoch zu einem schlechteren Umwandlungswirkungsgrad verglichen mit konventionellen Tief- oder Hochsetzstellern. Zum einen werden immer vier Schalter $108_1$ bis $108_4$ gleichzeitig getaktet und hierdurch höhere Schaltverluste hervorgerufen. Zum anderen steigt der Strom $i_L$ durch die Speicherdrossel 106 beim Tief-Hochsetzsteller 100 an. Entsprechend sind die Durchlassverluste sowohl in den elektrischen Schaltelementen (Schaltern) $108_1$ bis $108_4$ als auch in der Speicherdrossel 106 größer, wodurch der Wirkungsgrad des Gleichspannungswandlers 100 reduziert wird.

Dieser Nachteil kann durch den im Folgenden beschriebenen ZVS-entlasteten Betrieb der elektrischen Schaltelemente (Halbleiterschalter) $108_1$ bis $108_4$ vermieden werden (ZVS = Zero Voltage Switching, dt. Null-Spannungs-Schalten).

Bei Ausführungsbeispielen kann eine Induktivität L der Speicherdrossel 106 so dimensioniert sein, dass eine Richtung eines Stromflusses $i_L$ durch die Speicherdrossel 106 sich während einer Schaltperiode der elektrischen Schaltelemente $108_1$ bis $108_4$ (z.B. PWM-Periode) zumindest einmal umdreht.

Ferner kann die Induktivität L der Speicherdrossel 106 so dimensioniert sein, dass ein Stromrippel des Stromflusses $i_L$ durch die Speicherdrossel 106 so groß ist, dass sich eine Richtung eines Stromflusses $i_L$ durch die Speicherdrossel 106 während einer Schaltperiode der elektrischen Schaltelemente $108_1$ bis $108_4$ (z.B. PWM-Periode) zumindest einmal umdreht.

Des Weiteren kann die Induktivität $L$ der Speicherdrossel 106 so dimensioniert sein, dass durch den Stromfluss $i_L$ durch die Speicherdrossel 106 parasitäre Kapazitäten $116_1$ bis $116_4$ einzuschaltender elektrischer Schaltelemente $108_1$ bis $108_4$ vor dem Einschalten entladen werden, und/oder dass durch den Stromfluss $i_L$ durch die Speicherdrossel 106 parasitäre Kapazitäten $116_1$ bis $116_4$ zuvor eingeschalteter elektrischer Schaltelemente $108_1$ bis $108_4$ aufgeladen werden.

Die Induktivität L der Speicherdrossel 106 kann also so dimensioniert sein, dass während einer Totzeit des Gleichspannungswandlers 100, während der die Schaltelemente $108_1$ bis $108_4$ ausgeschaltet sind, parasitäre Kapazitäten $116_1$ bis $116_4$ der Schaltelemente $108_1$ bis $108_4$, die nach der Totzeit eingeschaltet werden, durch den Stromfluss $i_L$ durch die Speicherdrossel 106 entladen werden, und/oder parasitäre Kapazitäten $116_1$ bis $116_4$ der elektrischen Schaltelemente $108_1$ bis $108_4$, die vor der Totzeit eingeschaltet waren, durch den Stromfluss $i_L$ durch die Speicherdrossel 106 aufgeladen werden.

Somit dreht sich bei dem ZVS-entlasteten Betrieb der elektrischen Schaltelemente (Schalter) $108_1$ bis $108_4$ der Strom $i_L$ in der Speicherdrossel (Induktivität) 106 innerhalb einer Schaltperiode der elektrischen Schaltelemente $108_1$ bis $108_4$ (z.B. PWM-Periode) durch ein entsprechendes Design der Speicherdrossel 106 zweimal um. Dies führt dazu, dass die parasitären Kondensatoren $116_1$ bis $116_4$ der elektrischen Schaltelemente (z.B. Leistungshalbleiter) $108_1$ bis $108_4$ (immer) vor ihrem Einschalten zwischen der Totzeit vom Speicherdrosselstrom $i_L$ entladen werden können. Auf diese Weise können die elektrischen Schaltelemente $108_1$ bis $108_4$ (ständig) weich (ZVS) geschaltet werden. Die Schaltverluste können dadurch reduziert (oder sogar minimiert) werden.

Mit anderen Worten, zur Minimierung der Leistungsverluste können die elektrischen Schaltelemente $108_1(S_1)$ bis $108_4(S_4)$ durch ein entsprechendes Design der Speicherdrossel 106 ZVS-entlastet betrieben werden. Bei der Auslegung der Speicherdrossel 106 kann auf zwei Randbedingungen geachtet werden. Die eine Randbedingung ist, dass der Wert der Induktivität so klein ist, dass sich der Strom $i_L$ in der Speicherdrossel 106 innerhalb einer Schaltperiode der elektrischen Schaltelemente $108_1$ bis $108_4$ (z.B. PWM-Periode) zweimal umdrehen kann. Dieses hat zur Folge, dass beispielsweise die parasitäre Kapazität $116_1$ vom ersten elektrischen Schaltelement $108_1(S_1)$ (immer) vor dem Einschalten vom Speicherdrosselstrom $i_L$ entladen wird und die parasitäre Kapazität $116_2$ vom zweiten elektrischen Schaltelement $108_2(S_2)$ aufgeladen wird. Die Schaltverluste können somit reduziert (oder sogar minimiert) werden. Jedoch steigen die Kernverluste der Speicherdrossel 106 durch die Vergrößerung des Stromrippels an. Der anderen Randbedingung entsprechend sind zur Kompensation der zunehmenden Kernverluste die Kerne mit kleinerer Permeabilität auszuwählen.

Fig. 4a bis 4h zeigen in Diagrammen Steuersignal-, Strom- und Spannungsverläufe des Gleichspannungswandlers 100 über eine Schaltperiode der elektrischen Schaltelemente $108_1$ bis $108_4$ (z.B. PWM-Periode) sowie in schematischen Blockschaltbildern Schalt- und Stromflusszustände des Gleichspannungswandlers 100 während unterschiedlichen Zeitabschnitten der Schaltperiode der elektrischen Schaltelemente $108_1$ bis $108_4$ (z.B. PWM-Periode).

Im Detail zeigen Fig. 4a bis 4h jeweils in einem ersten Diagramm 10 einen Verlauf eines ersten Steuersignals 140 des ersten und vierten elektrischen Schaltelements $108_1$ und $108_4$ und einen Verlauf eines zweiten Steuersignals 142 des zweiten und dritten elektrischen Schaltelements $108_2$ und $108_3$, in einem zweiten Diagramm 12 einen Verlauf eines Spannungsabfalls 144 (Drain-Source-Spannung $U_{DS1}$) über dem ersten elektrischen Schaltelement $108_1$ und einen Verlauf eines Spannungsabfalls 146 (Drain-Source-Spannung $\mu_{DS2}$) über dem zweiten elektrischen Schaltelement $108_2$, und in einem dritten Diagramm 14 einen Verlauf des Stromflusses 148 ($i_L$) durch die Speicherdrossel 106.

Dabei zeigt 4a in einem schematischen Blockschaltbild 16 den Stromfluss in dem Gleichspannungswandler 100 zwischen den Zeitpunkten $t_0$ und $t_1$ (während eines ersten Zeitabschnitts der Schaltperiode der elektrischen Schaltelemente $108_1$ bis $108_4$ (z.B. PWM-Periode)). Zwischen den Zeitpunkten $t_0$ und $t_1$ befindet sich der Gleichspannungswandler 100 in dem ersten Schaltzustand, d.h. das erste elektrische Schaltelement $108_1$ und das vierte elektrische Schaltelement $108_4$ sind eingeschaltet, während das zweite elektrische Schaltelement $108_2$ und das dritte elektrische Schaltelement $108_3$ ausgeschaltet sind. Dies führt zu einem ersten Stromflusszustand in dem der Strom in dem Gleichspannungswandler 100 von dem ersten Anschluss $110_1$ über das erste elektrische Schaltelement $108_1$, die Speicherdrossel 106 und das vierte elektrische Schaltelement $108_4$ zu dem zweiten Anschluss $110_2$ fließt. Mit anderen Worten, Fig. 4a zeigt einen ersten Zustand des Stromflusses während einer Schaltperiode der elektrischen Schaltelemente $108_1$ bis $108_4$ (z.B. PWM-Periode).

Fig. 4b zeigt in einem schematischen Blockschaltbild 16 den Stromfluss in dem Gleichspannungswandler 100 zwischen den Zeitpunkten $t_1$ und t2 (während eines zweiten Zeitabschnitts der Schaltperiode der elektrischen Schaltelemente $108_1$ bis $108_4$ (z.B. PWM-Periode)). Zwischen den Zeitpunkten $t_1$ und $t_2$ befindet sich der Gleichspannungswandler 100 in einem Todzeitschaltzustand, d.h. das erste, zweite, dritte und vierte elektrische Schaltelement $108_1$ bis $108_4$ sind ausgeschaltet. Der Stromfluss durch Speicherdrossel 106 kann sich nicht sprunghaft ändern, so dass die Speicherdrossel 106 ein Weiterfließen des Stromes $i_L$ bewirkt. Dies führt, wie in Fig. 4b gezeigt ist, zu einem zweiten Stromflusszustand in dem parasitäre Kapazitäten zuvor eingeschalteter Schaltelemente, d.h. die parasitären Kapazitäten $116_1$ und $116_4$ der ersten und vierten elektrischen Schaltelemente $108_1$ und $108_4$, durch den Stromfluss $i_L$ durch die Speicherdrossel 106 aufgeladen werden, und in dem parasitäre Kapazitäten einzuschaltender Schaltelemente, d.h. die parasitären Kapazitäten $116_2$ und $116_3$ der zweiten und dritten elektrischen Schaltelemente $108_2$ und $108_3$, vor dem Einschalten entladen werden. Mit anderen Worten, Fig. 4b zeigt einen zweiten Zustand des Stromflusses während einer Schaltperiode der elektrischen Schaltelemente $108_1$ bis $108_4$ (z.B. PWM-Periode).

Fig. 4c zeigt in einem schematischen Blockschaltbild 16 den Stromfluss in dem Gleichspannungswandler 100 zwischen den Zeitpunkten t2 und t3 (während eines dritten Zeitabschnitts der Schaltperiode der elektrischen Schaltelemente $108_1$ bis $108_4$ (z.B. PWM-Periode)). Zwischen den Zeitpunkten $t_2$ und $t_3$ befindet sich der Gleichspannungswandler 100 noch immer in dem Todzeitschaltzustand. Da zum Zeitpunkt $t_2$ die parasitären Kapazitäten der zuvor eingeschalteten Schaltelemente (vollständig) aufgeladen sind sowie die parasitären Kapazitäten einzuschaltender Schaltelemente (vollständig) entladen sind und die Speicherdrossel 106 weiterhin ein Weiterfließendes Stromes $i_L$ bewirkt, ergibt sich zwischen den Zeitpunkten $t_2$ und $t_3$ ein dritter Schaltzustand, in dem der Strom in dem Gleichspannungswandler 100 von dem vierten Anschluss $110_4$ über die zweite Diode $114_2$, die Speicherdrossel 106 und die dritte Diode $114_3$ zu dem dritten Anschluss $110_3$ fließt. Mit anderen Worten, Fig. 4c zeigt einen dritten Zustand des Stromflusses während einer Schaltperiode der elektrischen Schaltelemente $108_1$ bis $108_4$ (z.B. PWM-Periode).

Fig. 4d zeigt in einem schematischen Blockschaltbild 16 den Stromfluss in dem Gleichspannungswandler 100 zwischen den Zeitpunkten t3 und t4 (während einem vierten Zeitabschnitts der Schaltperiode der elektrischen Schaltelemente $108_1$ bis $108_4$ (z.B. PWM-Periode)). Zwischen den Zeitpunkten $t_3$ und $t_4$ befindet sich der Gleichspannungswandler 100 in dem zweiten Schaltzustand, d.h. das zweite elektrische Schaltelement $108_2$ und das dritte elektrische Schaltelement $108_3$ sind eingeschaltet, während das erste elektrische Schaltelement $108_1$ und das vierte elektrische Schaltelement $108_4$ ausgeschaltet sind. Dies führt zu einem vierten Stromflusszustand in dem der Strom in dem Gleichspannungswandler 100 von dem vierten Anschluss $110_4$ über das zweite elektrische Schaltelement $108_2$, die Speicherdrossel 106 und das dritte elektrische Schaltelement $108_3$ zu dem dritten Anschluss $110_3$ fließt. Mit anderen Worten, Fig. 4d zeigt einen vierten Zustand des Stromflusses während einer Schaltperiode der elektrischen Schaltelemente $108_1$

bis $108_4$ (z.B. PWM-Periode).

Fig. 4e zeigt in einem schematischen Blockschaltbild 16 den Stromfluss in dem Gleichspannungswandler 100 zwischen den Zeitpunkten $t_4$ und $t_5$ (während eines fünften Zeitabschnitts der Schaltperiode der elektrischen Schaltelemente $108_1$ bis $108_4$ (z.B. PWM-Periode)). Zwischen den Zeitpunkten $t_4$ und $t_5$ befindet sich der Gleichspannungswandler 100 noch immer in dem zweiten Schaltzustand. Zu dem Zeitpunkt $t_4$ hat sich die Richtung des Stromflusses $i_L$ durch die Speicherdrossel 106 jedoch umgedreht, wodurch sich auch der Strom in dem Gleichspannungswandler (bezogen auf Fig. 4d) umgedreht hat, oder mit anderen Worten, was zu einem fünften Stromflusszustand führt, in dem der Strom in dem Gleichspannungswandler 100 von dem dritten Anschluss $110_3$ über das dritte elektrische Schaltelement $108_3$, über die Speicherdrossel 106 und über das zweite elektrische Schaltelemente $108_2$ zu dem vierten Anschluss $110_4$ fließt. Mit anderen Worten, Fig. 4e zeigt einen fünften Zustand des Stromflusses während einer Schaltperiode der elektrischen Schaltelemente $108_1$ bis $108_4$ (z.B. PWM-Periode).

Fig. 4f zeigt in einem schematischen Blockschaltbild 16 den Stromfluss in dem Gleichspannungswandler 100 zwischen den Zeitpunkten $t_5$ und $t_6$ (während eines sechsten Zeitabschnitts der Schaltperiode der elektrischen Schaltelemente $108_1$ bis $108_4$ (PWM-Periode)). Zwischen den Zeitpunkten $t_5$ und $t_6$ befindet sich der Gleichspannungswandler 100 in einem Todzeitschaltzustand, d.h. das erste, zweite, dritte und vierte elektrische Schaltelement $108_1$ bis $108_4$ sind ausgeschaltet. Der Stromfluss durch Speicherdrossel 106 kann sich nicht sprunghaft ändern, so dass die Speicherdrossel 106 ein Weiterfließen des Stromes $i_L$ bewirkt. Dies führt wie in Fig. 4f gezeigt zu einem sechsten Stromflusszustand, in dem parasitäre Kapazitäten zuvor eingeschalteter Schaltelemente, d.h. die parasitären Kapazitäten $116_2$ und $116_3$ der zweiten und dritten elektrischen Schaltelemente $108_2$ und $108_3$, durch den Stromfluss $i_L$ durch die Speicherdrossel 106 aufgeladen werden, und in dem parasitäre Kapazitäten einzuschaltender Schaltelemente, d.h. die parasitären Kapazitäten $116_1$ und $116_4$ der ersten und vierten elektrischen Schaltelemente $108_1$ und $108_4$, vor dem Einschalten entladen werden. Mit anderen Worten, Fig. 4f zeigt einen sechsten Zustand des Stromflusses während einer Schaltperiode der elektrischen Schaltelemente $108_1$ bis $108_4$ (z.B. PWM-Periode).

Fig. 4g zeigt in einem schematischen Blockschaltbild 16 den Stromfluss in dem Gleichspannungswandler 100 zwischen den Zeitpunkten $t_6$ und $t_7$ (während eines siebten Zeitabschnitts der Schaltperiode der elektrischen Schaltelemente $108_1$ bis $108_4$ (z.B. PWM-Periode)). Zwischen den Zeitpunkten $t_6$ und $t_7$ befindet sich der Gleichspannungswandler 100 noch immer in dem Todzeitschaltzustand. Da zum Zeitpunkt $t_6$ die parasitären Kapazitäten der zuvor eingeschalteten Schaltelemente (vollständig) aufgeladen sind sowie die parasitären Kapazitäten einzuschaltender Schaltelemente (vollständig) entladen sind und die Speicherdrossel 106 weiterhin ein Weiterfließendes Stromes $i_L$ bewirkt, ergibt sich zwischen den Zeitpunkten $t_6$ und $t_7$ ein siebter Schaltzustand, in dem der Strom in dem Gleichspannungswandler 100 von dem zweiten Anschluss $110_2$ über die vierte Diode $114_4$, die Speicherdrossel 106 und die erste Diode $114_1$ zu dem ersten Anschluss $110_1$ fließt. Mit anderen Worten, Fig. 4g zeigt einen siebten Zustand des Stromflusses während einer Schaltperiode der elektrischen Schaltelemente $108_1$ bis $108_4$ (z.B. PWM-Periode).

Fig. 4h zeigt in einem schematischen Blockschaltbild 16 den Stromfluss in dem Gleichspannungswandler 100 zwischen den Zeitpunkten $t_7$ und $t_8$ (während eines achten Zeitabschnitts der Schaltperiode der elektrischen Schaltelemente $108_1$ bis $108_4$ (z.B. PWM-Periode)). Zwischen den Zeitpunkten $t_7$ und $t_8$ befindet sich der Gleichspannungswandler 100 wieder in dem ersten Schaltzustand, d.h. das erste elektrische Schaltelement $108_1$ und das vierte elektrische Schaltelement $108_4$ sind eingeschaltet, während das zweite elektrische Schaltelement $108_2$ und das dritte elektrische Schaltelement $108_3$ ausgeschaltet sind. Dies führt zu einem achten Stromflusszustand in dem der Strom in dem Gleichspannungswandler 100 von dem zweiten Anschluss $110_2$ über das vierte elektrische Schaltelement $108_4$, die Speicherdrossel 106 und dem ersten elektrischen Schaltelement $108_1$ zu dem ersten Anschluss $110_1$ fließt. Mit anderen Worten, Fig. 4h zeigt einen achten Zustand des Stromflusses während einer Schaltperiode der elektrischen Schaltelemente $108_1$ bis $108_4$ (z.B. PWM-Periode).

Zwischen den Zeitpunkten $t_8$ und $t_9$ befindet sich der Gleichspannungswandler 100 noch immer in dem ersten Schaltzustand, jedoch dreht sich die Richtung des Stromflusses $i_L$ durch die Speicherdrossel 106 zu dem Zeitpunkt tg erneut um, so dass sich in dem Gleichspannungswandler 100 erneut der in Fig. 4a gezeigte erste Stromflusszustand einstellt.

Es sei daraufhingewiesen, dass die in Fig. 4a bis 4h gezeigten acht Zeitabschnitte, die sich über die Zeitpunkte $t_0$ bis $t_8$ erstrecken, keine vollständige Schaltperiode der elektrischen Schaltelemente $108_1$ bis 1084 zeigen. Eine vollständige Schaltperiode der elektrischen Schaltelemente $108_1$ bis $108_4$ hätte beispielsweise die Periodendauer T = $t_9$ - $t_1$.

Mit anderen Worten, in Fig. 4a bis Fig. 4h werden die acht verschiedenen Zustände des Stromflusses im Tief-Hochsetzsteller 100 innerhalb einer Schaltperiode der elektrischen Schaltelemente $108_1$ bis $108_4$ (z.B. PWM-Periode) abgebildet. Auch werden die Vorgänge zwischen der Totzeit berücksichtigt. In jedem Bild werden links die komplementären PWM-Signale 140 und 142 zur Steuerung der elektrischen Schaltelemente (Leistungshalbleiter) $108_1(S_1)$ $(108_4(S_4))$ und $108_2(S_2)$ $(108_3(S_3))$, die Drain-Source-Spannungen 144 und 146 von den elektrischen Schaltelementen $108_1(S_1)$ $(108_4(S_4))$ und $108_2(S_2)$ $(108_3(S_3))$ und der Strom $i_L$ durch die Speicherdrossel 106 dargestellt. Rechts wird der Stromfluss beim jeweiligen Zustand in der Schaltung veranschaulicht. Im zweiten Stromflusszustand (Fig. 4b) werden nach dem Ausschalten des ersten elektrischen Schalelements $108_1(S_1)$ und des vierten elektrischen Schaltelements

$108_4(S_4)$ die parasitären Kondensatoren $116_2$ und $116_3$ des zweiten elektrischen Schaltelements $108_2(S_2)$ und des dritten elektrischen Schaltelements $108_3(S_3)$ vor ihrem Einschalten entladen.

Zugleich werden die parasitären Kondensatoren $116_1$ und $116_4$ des ersten elektrischen Schalelements $108_1(S_1)$ und des vierten elektrischen Schaltelements $108_4(S_4)$ aufgeladen. Im Unterschied zu hart schaltenden Konzepten ist bei diesem Konzept der Stromrippel in der Speicherdrossel (Induktivität) 106 so groß, dass sich der Strom $i_L$ innerhalb einer Schaltperiode der elektrischen Schaltelemente $108_1$ bis $108_4$ (z.B. PWM-Periode) umdrehen kann. Mithilfe des invertierten Stroms werden im sechsten Stromflusszustand (siehe Fig. 4f) die parasitären Kondensatoren $116_1$ und $116_4$ des ersten elektrischen Schalelements $108_1(S_1)$ und des vierten elektrischen Schaltelements $108_4(S_4)$ vor ihrem Einschalten entladen. Mit diesem Konzept können die elektrischen Schaltelemente (Leistungshalbleiter) $108_1$ bis $108_4$ innerhalb einer Schaltperiode der elektrischen Schaltelemente $108_1$ bis $108_4$ (z.B. PWM-Periode)(immer) weich geschaltet werden.

Jedoch muss beachtet werden, dass der Stromrippel in Abhängigkeit von der Eingangsspannung $u_E$ und der Ausgangsspannung $u_A$ variieren kann. Dementsprechend kann sich der minimale Wert des Stromflusses $i_L$ durch die Speicherdrossel 106 bzw. des Speicherdrosselstroms $i_L$ verändern. Ferner kann der arithmetische Mittelwert des Stromflusses $i_L$ durch die Speicherdrossel 106 auch einen Einfluss auf den minimalen Wert des Stromflusses $i_L$ durch die Speicherdrossel 106 haben. Folglich muss eine Lösung gefunden werden, so dass die Bedingung für den ZVS-entlasteten Betrieb der elektrischen Schaltelemente $108_1$ bis $108_4$ bei allen Betriebspunkten gewährleistet ist und zugleich der Stromrippel nicht zu groß ist, so dass eine verbesserte (oder sogar maximale) Effizienz des Gleichspannungswandlers 100 erzielt werden kann. Die Lösung dafür ist die Modulation der Schaltfrequenz der elektrischen Schaltelemente $108_1$ bis $108_4$, die im Folgenden detailliert beschrieben wird.

Wie bereits erwähnt kann der Gleichspannungswandler 100 ausgelegt sein, um bei einer Veränderung von Betriebsparametern des Gleichspannungswandlers 100 eine Schaltfrequenz der elektrischen Schaltelemente $108_1$ bis $108_1$ derart nachzuführen oder nachzuregeln, dass ein Richtungswechsel des Stromflusses $i_L$ durch die Speicherdrossel 106 gewährleistet wird und zugleich der minimale Wert des Stromflusses $i_L$ durch die Speicherdrossel 106 in einen optimalen Bereich eingestellt wird. Ziel ist, dass der ZVS-entlastete Betrieb der elektrischen Schaltelemente $108_1$ bis $108_n$ während einer Schaltperiode der elektrischen Schaltelemente $108_1$ bis $108_4$ (z.B. PWM-Periode) gewährleistet ist und der Stromrippel des Stromflusses durch die Speicherdrossel 106 möglichst klein bleibt. Auf diese Weise kann eine optimale Effizienz des Gleichspannungswandlers 100 erzielt werden.

Dabei kann der Gleichspannungswandler 100 ausgelegt sein, um die Schaltfrequenz der elektrischen Schaltelemente $108_1$ bis $108_4$ derart nachzuführen oder nachzuregeln, dass ein Stromrippel des Stromflusses $i_L$ durch die Speicherdrossel 106 so groß ist, dass eine Richtung eines Stromflusses $i_L$ durch die Speicherdrossel 106 sich während einer Schaltperiode der elektrischen Schaltelemente $108_1$ bis $108_4$ zumindest einmal umdreht und so der ZVS-entlastete Betrieb der elektrischen Schaltelemente $108_1$ bis $108_4$ während einer Schaltperiode der elektrischen Schaltelemente $108_1$ bis $108_4$ (z.B. PWM-Periode) gewährleistet wird.

Des Weiteren kann der Gleichspannungswandler 100 ausgelegt sein, um die Schaltfrequenz der elektrischen Schaltelemente $108_1$ bis $108_4$ derart nachzuführen oder nachzuregeln, dass der Stromrippel des Stromflusses $i_L$ durch die Speicherdrossel 106 zumindest so groß ist, dass parasitäre Kapazitäten $116_1$ bis $116_4$) einzuschaltender elektrischer Schaltelemente $108_1$ bis $108_4$ vor dem Einschalten auf zumindest 25 % einer ersten Spannung $u_1$, die an dem ersten Gleichspannungstor 102 anliegt, oder einer zweiten Spannung $u_2$, die an dem zweiten Gleichspannungstor 104 anliegt, entladen werden.

Mit anderen Worten, bei der Modulation der Schaltfrequenz der elektrischen Schaltelemente $108_1$ bis $108_4$ kann der Stromrippel in der Speicherdrossel (Induktivität) 106 durch eine Veränderung der Schaltfrequenz ständig in der Weise angepasst werden, dass einerseits die elektrischen Schaltelemente $108_1$ bis $108_4$ (stets) ZVS-entlastet betrieben werden und andererseits so, dass der Stromrippel nicht zu groß wird, und die Durchlassverluste in den elektrischen Schaltelementen (Schalter) $108_1$ bis $108_4$ und die Verluste in der Speicherdrossel 106 nicht deutlich steigen.

Dabei ist es möglich, die Schaltfrequenz der elektrischen Schaltelemente (Leistungshalbleiter) $108_1$ bis $108_4$ über den gesamten Betriebsbereich zu modulieren.

Unter Verwendung der oben beschriebenen Betriebsweise der elektrischen Schaltelemente (Leistungshalbleiter) $108_1$ bis $108_4$ kann der Stromrippel $\Delta i_L$ in der Speicherdrossel (Induktivität) 106 wie folgt ermittelt werden:

$$u_E = L \cdot \frac{\Delta i_L}{D \cdot T} \rightarrow \Delta i_L = \frac{u_E \cdot u_A}{u_E + u_A} \cdot \frac{1}{L \cdot f} \qquad \text{(GL. 1-8)}$$

Wenn $I_L$ der arithmetischer Mittelwert des Stromflusses $i_L$ durch die Speicherdrossel 106 ist, und $I_{L,min}$ der minimale Wert des Stromflusses $i_L$ durch die Speicherdrossel 106 innerhalb einer Schaltperiode der elektrischen Schaltelemente $108_1$ bis $108_4$ (PWM-Periode) ist, dann ergibt sich:

$$\Delta i_L \;=\; 2\big(I_L - I_{L,min}\big) \;=\; 2\big(I_L + |I_{L,min}|\big) \tag{GL. 1-9}$$

Aus (GL. 1-8) ist ersichtlich, dass der Stromrippel unabhängig von der übertragenen Leistung durch den Tief-Hochsetzsteller 100 ist, solange sich die Schaltfrequenz f, Eingangsspannung $u_E$ und Ausgangsspannung $u_A$ nicht verändern. Dies führt dazu, dass der Wirkungsgrad des Gleichspannungswandlers 100 bei geringeren Leistungen aufgrund des unveränderten Stromrippels $\Delta i_L$ schlechter ist als bei großen Leistungen. Eine Möglichkeit zur Reduzierung der Leistungsverluste ist die Variierung der Induktivität L. Dies ist schaltungstechnisch jedoch sehr aufwendig. Die hierin vorgeschlagene Lösung besteht darin, den Stromrippel $\Delta i_L$ durch Variierung der Schaltfrequenz f der elektrischen Schaltelemente $108_1$ bis $108_4$ adaptiv zu ändern, um die Bedingung für weiches Schalten (ZVS-entlastet) zu gewährleisten. Gleichzeitig darf der Stromrippel nicht zu groß werden, so dass eine verbesserte (oder sogar maximale) Effizienz des Wandlers 100 in jedem Arbeitspunkt erzielt werden kann. Die erforderliche Schaltfrequenz f kann für einen Arbeitspunkt in vier Schritten bestimmt werden.

Ein erster Schritt zur Bestimmung der Schaltfrequenz der elektrischen Schaltelemente $108_1$ bis $108_4$ umfasst das Bestimmen des minimalen Werts des Stromflusses $I_{L,min}$ durch die Speicherdrossel 106 (Sicherstellung der Bedingung für den ZVS-entlasteten Betrieb).

Fig. 5 zeigt in einem Diagramm einen Verlauf des Spannungsabfalls 144 über dem ersten elektrischen Schaltelement $108_1$, einen Verlauf des Spannungsabfalls 146 über dem zweiten elektrischen Schaltelement $108_2$, einen Verlauf einer Steuerspannung 150 des ersten elektrischen Schaltelements $108_1$ und einen Verlauf einer Steuerspannung 152 des zweiten elektrischen Schaltelements $108_2$ jeweils während einer Totzeit des Gleichspannungswandlers 100.

Die Totzeit des Gleichspannungswandlers 100 kann dabei die Zeit sein, während der sich der Gleichspannungswandler in dem Totzeitzustand befindet, d.h. während der die elektrischen Schaltelemente $108_1$ bis $108_4$ ausgeschaltet sind. Mit anderen Worten, die Dauer des Totzeitzustands des Gleichspannungswandlers 100 kann als Totzeit bezeichnet werden.

Wie bereits erwähnt können die elektrischen Schaltelemente $108_1$ bis $108_4$ mittels MOSFETs implementiert werden, so dass der Spannungsabfall 144 über dem ersten elektrischen Schaltelement $108_1$ eine erste Drain-Source-Spannung $u_{DS1}$ sein kann, der Spannungsabfall 146 über dem zweiten elektrischen Schaltelement $108_2$ eine zweite Drain-Source-Spannung $u_{DS2}$ sein kann, die Steuerspannung 150 des ersten elektrischen Schaltelements $108_1$ eine erste Gate-Source-Spannung $u_{GS1}$ sein kann und die Steuerspannung 152 des zweiten elektrischen Schaltelements $108_2$ eine zweite Gate-Source-Spannung $u_{GS2}$ sein kann.

Fig. 5 kann dabei entnommen werden, dass die Totzeit $t_t$ in eine Zeitdauer zur kompletten Sperrung des Kanals des zweiten elektrischen Schaltelements $108_2$ ($S_2$), eine Zeitdauer $t_u$ zum Umladen der parasitären Kondensatoren der MOSFETs vom negativen Speicherdrosselstrom, und in eine Bufferzeit $t_b$ unterteilt werden ($t_t = ts + t_u + t_b$).

Ferner ist in Fig. 5 eine Differenz $\Delta u_{GS}$ der Gate-Source-Spannungen $u_{GS1}$ und $u_{GS2}$ sowie eine Differenz der Drain-Source-Spannungen $u_{DS1}$ und $u_{DS2}$ eingezeichnet.

Mit anderen Worten, Fig. 5 zeigt ein Kommutierungsvorgang innerhalb der Totzeit $t_{tot}$ zwischen Ausschalten des zweiten elektrischen Schaltelements $108_2$($S_2$) und Einschalten des ersten elektrischen Schaltelements $108_1$ ($S_2$).

Die Zeit $t_s$ zur kompletten Sperrung des Kanals des elektrischen Schaltelements ist von der Eingangskapazität des elektrischen Schaltelements (z.B. MOSFETs), dem Gatewiderstand des elektrischen Schaltelements und der Differenz $\Delta u_{GS}$ der Gate-Source-Spannungen $u_{GS1}$ und $u_{GS2}$ abhängig und kann über Messungen fest bestimmt werden. Da die Änderung des Stromflusses $i_L$ in der Speicherdrossel (Induktivität) 106 beim Umladen der parasitären Kapazitäten $116_1$ bis $116_4$ sehr klein ist, kann angenommen werden, dass der Stromfluss $i_L$ durch die Speicherdrossel 106 während der Totzeit $t_u$ konstant bleibt. Folglich kann die Totzeit $t_u$ näherungsweise aus (GL. 1-10) bestimmt werden:

$$|I_{L,min}| \;=\; 2 \cdot C_{oss}\frac{\Delta u_{DS}}{t_u} \;\rightarrow\; t_u = \frac{\Delta u_{DS}\cdot 2C_{oss}}{|I_{L,min}|} \tag{GL. 1-10}$$

Dabei ist $C_{oss}$ ist die Ausgangskapazität des elektrischen Schaltelements (z.B. MOSFETs). Die Differenz $\Delta u_{GS}$ der Gate-Source-Spannungen $u_{GS1}$ und $u_{GS2}$ ist bei dem ersten elektrischen Schaltelement $108_1$($S_1$) und dem zweiten elektrischen Schaltelement $108_2$($S_2$) ungefähr gleich der Eingangsspannung $u_E$. Um die elektrischen Schaltelemente (z.B. MOSFETs) weich zu schalten, kann die folgende Bedingung erfüllt sein:

$$t_b \geq 0 \;\rightarrow\; t_s + t_u \leq t_{tot} \tag{GL. 1-11}$$

Durch Einsetzen von (GL. 1-10) in (GL. 1-11) ergibt sich für den minimalen Spulenstrom:

$$\left|I_{L,min}\right| \geq \frac{u_E \cdot 2C_{oss}}{t_{tot}-t_s} \qquad \text{(GL. 1-12)}$$

Ein zweiter Schritt zur Bestimmung der Schaltfrequenz der elektrischen Schaltelemente $108_1$ bis $108_4$ umfasst das Ermitteln der optimalen Schaltfrequenz $f_{soll}$.

Durch Einsetzen von (GL. 1-9) in (GL. 1-8) lässt sich die optimale Schaltfrequenz bestimmen:

$$f_{soll} = \frac{u_E \cdot u_A}{u_E+u_A} \cdot \frac{1}{2 \cdot L \cdot (I_L+\left|I_{L,min}\right|)} \qquad \text{(GL. 1-13)}$$

Dabei können die Eingangsspannung $u_E$, die Ausgangsspannung $u_A$ und der arithmetische Mittelwert $I_L$ des Stromflusses durch die Speicherdrossel 106 von Messsensoren erfasst werden.

Ein vierter Schritt zur Bestimmung der Schaltfrequenz der elektrischen Schaltelemente $108_1$ bis $108_4$ umfasst das Berücksichtigen der maximalen und minimalen Grenzwerte $f_{max}$ und $f_{min}$ der Schaltfrequenz.

Die maximal mögliche Schaltfrequenz $f_{max}$ wird von der minimalen Schaltgeschwindigkeit der elektrischen Schaltelemente (z.B. MOSFETs) $108_1$ bis $108_4$ begrenzt. Wird $T_{on,min}$ (z.B. 500 ns) als die minimal mögliche Zeitdauer der Einschaltzeit bzw. der Arbeitszeit der elektrischen Schaltelemente (z.B. MOSFETs) $108_1$ bis $108_4$ definiert, so ergibt sich:

$$D \cdot T = \frac{u_A}{u_E+u_A} \cdot \frac{1}{f} \geq T_{on,min} \qquad \text{(GL. 1-14)}$$

$$(1 - D) \cdot T = \frac{u_E}{u_E+u_A} \cdot \frac{1}{f} \geq T_{on,min} \qquad \text{(GL. 1-15)}$$

Damit gilt für die maximale Schaltfrequenz $f_{max}$ für die beiden folgenden Ein- und Ausgangsspannungen:

Wenn $u_E > u_A$, dann

$$f_{max} = \frac{u_A}{u_E+u_A} \cdot \frac{1}{T_{on,min}} \qquad \text{(GL. 1-16)}$$

Wenn $u_E < u_A$, dann

$$f_{max} = \frac{u_E}{u_E+u_A} \cdot \frac{1}{T_{on,min}} \qquad \text{(GL. 1-17)}$$

Die minimal mögliche Schaltfrequenz $f_{min}$ kann im Wesentlichen über das Vermeiden von Überlastung der Ein- und Ausgangskondensatoren $118_1$ und $118_2$ sowie eine akustische Belästigung der Verbraucher bei zu geringer Schaltfrequenz bestimmt werden.

Ein vierter Schritt zur Bestimmung der Schaltfrequenz der elektrischen Schaltelemente $108_1$ bis $108_4$ umfasst das Festlegen der Schaltfrequenz $f_{ist}$.

Die Schaltfrequenz kann z.B. über ein C-Programm wie folgt definiert werden:

$$\text{if } (f_{soll} >= f_{max})$$
$$f_{ist} = f_{max};$$
$$\text{else if } (f_{min} < f_{soll} < f_{max})$$
$$f_{ist} = f_{soll};$$
$$\text{else}$$
$$f_{ist} = f_{min};$$

Fig. 6 zeigt ein schematisches Blockschaltbild des Gleichspannungswandlers 100 gemäß einem Ausführungsbeispiel. Wie in Fig. 6 zu erkennen ist kann der Gleichspannungswandler 100 eine erste Speicherdrossel $106_1$ (Eingangsspeicherdrossel $L_E$), eine zweite Speicherdrossel $106_2$ (Ausgangsspeicherdrossel $L_A$) und vier elektrische Schaltelemente $108_1$ bis $108_4$ aufweisen.

Dabei können ein erstes elektrisches Schaltelement $108_1$ und ein zweites elektrisches Schaltelement $108_2$ der vier elektrischen Schaltelemente $108_1$ bis $108_4$ in Reihe zwischen einem Zwischenkreisknoten $112_Z$ und einem zweiten Anschluss $110_2$ des ersten Gleichspannungstors 102 geschaltet sein, während ein drittes elektrisches Schaltelement $108_3$ und ein viertes elektrisches Schaltelement $108_4$ der vier elektrischen Schaltelemente $108_1$ bis $108_4$ in Reihe zwischen dem Zwischenkreisknoten $112_Z$ und einem vierten Anschluss $110_4$ des zweiten Gleichspannungstors 104 geschaltet sind.

Die erste Speicherdrossel $106_1$ kann in Reihe zwischen einem ersten Anschluss $110_1$ des ersten Gleichspannungstors 102 und einem ersten Knoten $112_1$ geschaltet sein, während die zweite Speicherdrossel $106_2$ in Reihe zwischen einem dritten Anschluss $110_3$ des zweiten Gleichspannungstors 104 und einem zweiten Knoten $112_2$ geschaltet sein kann. Dabei kann der erste Knoten $112_1$ in Reihe zwischen dem ersten elektrischen Schaltelement $108_1$ und dem zweiten elektrischen Schaltelement $108_2$ geschaltet sein, während er zweite Knoten $112_2$ in Reihe zwischen dem dritten elektrischen Schaltelement $108_3$ und dem vierten elektrischen Schaltelement $108_4$ geschaltet sein kann.

Das erste elektrische Schaltelement $108_1$ kann somit in Reihe zwischen dem ersten Anschluss $110_1$ und dem ersten Knoten $112_1$ geschaltet sein, während das zweite elektrische Schaltelement $108_2$ in Reihe zwischen dem ersten Knoten $112_1$ und dem zweiten Anschluss $110_2$ geschaltet sein kann. Dementsprechend kann das dritte elektrische Schaltelement $108_3$ in Reihe zwischen dem dritten Anschluss $110_3$ und dem zweiten Knoten $112_2$ geschaltet sein, während das vierte elektrische Schaltelement $108_4$ in Reihe zwischen dem zweiten Knoten $112_2$ und dem vierten Anschluss $110_4$ geschaltet sein kann.

Wie in Fig. 6 zu erkennen ist, kann an dem ersten Gleichspannungstor 102 eine erste Spannung $u_1$ anliegen, während an dem zweiten Gleichspannungstor 104 eine zweite Spannung $u_2$ anliegen kann. Der Gleichspannungswandler 100 kann dabei ausgebildet sein, um basierend auf der ersten Spannung $u_1$ die zweite Spannung $u_2$ bereitzustellen, wobei die zweite Spannung $u_2$ größer, kleiner oder gleich der ersten Spannung $u_1$ sein kann. Natürlich kann der Gleichspannungswandler 100 auch ausgebildet sein, um basierend auf der zweiten Spannung $u_2$ die erste Spannung $u_1$ bereitzustellen, wobei die erste Spannung $u_1$ größer, kleiner oder gleich der zweiten Spannung $u_2$ sein kann.

Der Gleichspannungswandler 100 kann ferner vier Dioden (Freilaufdioden) $114_1$ bis $114_4$ aufweisen, die antiparallel zu den vier elektrischen Schaltelementen $108_1$ bis $108_4$ geschaltet sind.

Beispielsweise kann eine erste Diode $114_1$ der vier Dioden $114_1$ bis $114_4$ parallel zu dem ersten elektrischen Schaltelement $108_1$ geschaltet sein, so dass eine Katode der ersten Diode $114_1$ mit dem ersten Anschluss $110_1$ verbunden ist, während eine Anode der ersten Diode $114_1$ mit dem ersten Knoten $112_1$ verbunden ist. Eine zweite Diode $114_2$ der vier Dioden $114_2$ bis $114_4$ kann parallel zu dem zweiten elektrischen Schaltelement $108_2$ geschaltet sein, so dass eine Katode der zweiten Diode $114_2$ mit dem ersten Knoten $112_1$ verbunden ist, während eine Anode der zweiten Diode $114_2$ mit dem zweiten Anschluss $110_2$ verbunden ist. Eine dritte Diode $114_3$ der vier Dioden $114_1$ bis $114_4$ kann parallel zu dem dritten elektrischen Schaltelement $108_3$ geschaltet sein, so dass eine Katode der dritten Diode $114_3$ mit dem dritten Anschluss $110_3$ verbunden ist, während eine Anode der dritten Diode $114_3$ mit dem zweiten Knoten $112_2$ verbunden ist. Eine vierte Diode $114_4$ der vier Dioden $114_1$ bis $114_4$ kann parallel zu der vierten elektrischen Schaltelement $108_4$ geschaltet sein, so dass eine Katode der vierten Diode $114_4$ mit dem zweiten Knoten $112_2$ verbunden ist, während eine Anode der vierten Diode $114_4$ mit dem vierten Anschluss $110_4$ verbunden ist.

Des Weiteren kann der Gleichspannungswandler 100 eine erste Kapazität $118_1$ (z.B. einen ersten Kondensator) und eine zweite Kapazität $118_2$ (z.B. einen zweiten Kondensator) aufweisen, wobei die erste Kapazität $118_1$ in Reihe zwischen dem ersten Anschluss $110_1$ und dem zweiten Anschluss $110_2$ geschaltet sein kann, und wobei die zweite Kapazität $118_2$ in Reihe zwischen dem dritten Anschluss $110_3$ und dem vierten Anschluss $110_4$ geschaltet sein kann.

Ferner kann der Gleichspannungswandler 100 eine Zwischenkreiskapazität $118_Z$ aufweisen, die in Reihe zwischen dem Zwischenkreisknoten $112_Z$ und dem zweiten Anschluss $110_2$ bzw. dem vierten Anschluss $110_4$ geschaltet sein kann.

Darüber hinaus weist das in Fig. 6 gezeigte schematische Blockschaltbild des Gleichspannungswandlers 100 vier Kapazitäten $116_1$ bis $116_4$ auf, welche die parasitären Kapazitäten der vier elektrischen Schaltelemente $108_1$ bis $108_4$ darstellen sollen. Die vier Kapazitäten $116_1$ bis $116_4$ können auch extern angeschlossene Kondensatoren, wie z. B. Snubber-Kondensatoren, sein.

Im Folgenden wird davon ausgegangen, dass das erste Gleichspannungstor 102 ein Gleichspannungseingangstor ist und dass das zweite Gleichspannungstor 104 ein Gleichspannungsausgangstor ist.

Dementsprechend kann die erste Spannung $u_1$, die an dem ersten Gleichspannungstor 102 anliegt, eine Eingangsspannung $u_E$ sein, während die zweite Spannung $u_2$, die an dem zweiten Gleichspannungstor 104 anliegt, eine Ausgangsspannung $u_A$ sein kann. Ferner kann die erste Kapazität $118_1$ eine Eingangskapazität $C_E$ sein, während die zweite Kapazität $118_2$ eine Ausgangskapazität $C_A$ sein kann.

Die Schaltverluste des Gleichspannungswandlers 100 können reduziert werden, indem zum Einen der Gleichspannungswandler 100 so ausgelegt ist, dass sich eine Richtung eines Stromflusses $i_{L1}$ (Eingangsstrom $i_E$) durch die erste Speicherdrossel $106_1$ und eine Richtung eines Stromflusses $i_{L2}$ (Ausgangsstrom iA) durch die zweite Speicherdrossel $106_2$ während einer Schaltperiode der elektrischen Schaltelemente $108_1$ bis $108_4$ (z.B. PWM-Periode) zumindest einmal umdreht, und zum Anderen die Schaltfrequenz der elektrischen Schaltelemente $108_1$ bis $108_4$ derart nachgeführt oder nachgeregelt wird, dass ein Richtungswechsel des Stromflusses $i_{L1}$ durch die erste Speicherdrossel $106_1$ und des Stromflusses $i_{L2}$ durch die zweite Speicherdrossel $106_2$ während einer Schaltperiode der elektrischen Schaltelemente $108_1$ bis $108_4$ (z.B. PWM-Periode) gewährleistet wird. Dieses Konzept wird hierin als resonante Schaltentlastung mit Frequenzmodulation (Konzept 1) bezeichnet.

Im Folgenden wird das Konzept zur resonanten Schaltentlastung ohne Übergangsphase und mit Frequenzmodulation (Konzept 1) im Detail beschrieben.

Der Gleichspannungswandler 100 kann ausgebildet sein, um in einem Tief-Hochsetzmodus des Gleichspannungswandlers 100 zwischen einem ersten Schaltzustand, in dem das erste elektrische Schaltelement $108_1$ und das vierte elektrische Schaltelement $108_4$ eingeschaltet sind (und das zweite elektrische Schaltelement $108_2$ und das dritte elektrische Schaltelement $108_3$ ausgeschaltet sind), und einem zweiten Schaltzustand, in dem das zweite elektrische Schaltelement $108_2$ und das dritte elektrische Schaltelement $108_3$ eingeschaltet sind (und das erste elektrische Schaltelement $108_1$ und das vierte elektrische Schaltelement $108_4$ ausgeschaltet sind), (periodisch) umzuschalten.

Dabei kann der Gleichspannungswandler 100 ausgebildet sein, um zwischen dem ersten Schaltzustand und dem zweiten Schaltzustand derart umzuschalten, dass das Umschalten zwischen dem ersten Schaltzustand und dem zweiten Schaltzustand, und das Umschalten zwischen dem zweiten Schaltzustand und dem ersten Schaltzustand eine Totzeit aufweist, in der die elektrischen Schaltelemente $108_1$ bis $108_4$ ausgeschaltet sind.

Mit anderen Worten, bei dem Steuerungsverfahren ohne Übergangsphase können die elektrischen Schaltelemente (Schalter) $108_1(S_1)$ und $108_4(S_4)$ stetig komplementär zu den elektrischen Schaltelementen (Schaltern) $108_2(S_2)$ und $108_3(S_3)$ ein- oder ausgeschaltet werden. Zur Vermeidung eines Kurzschlusses am Gleichspannungseingangstor (Eingang) 102 als auch am Gleichspannungsausgangstor (Ausgang) 104 des Gleichspannungswandlers (Wandlers) 100 kann zwischen Ein- und Ausschalten der elektrischen Schaltelemente (Leistungshalbleiter) $108_1$ bis $108_4$ (immer) eine Totzeit vorgesehen werden. Im stationären Zustand ergibt sich:

$$\frac{U_A}{U_E} = \frac{I_E}{I_A} = \frac{I_{L1}}{I_{L2}} = \frac{D}{1-D} \qquad \text{(GL. 1-18)}$$

Dabei ist D das Tastverhältnis im stationären Zustand und ist als Division zwischen der Einschaltzeit der Schalter $108_2(S_2)$ und $108_3(S_3)$ und der Schaltperiode (PWM-Periode) definiert. Daraus ist zu schließen, dass die Ausgangsspannung des Hoch-Tiefsetzstellers 100 durch Einstellen des Tastverhältnisses kontinuierlich auf von null bis unendlich geregelt werden kann.

Bei Ausführungsbeispielen können eine Induktivität $L1$ der ersten Speicherdrossel $106_1$ und eine Induktivität $L2$ der zweiten Speicherdrossel so dimensioniert sein, dass sich eine Richtung eines Stromflusses $i_{L1}$ durch die erste Speicherdrossel $106_1$ und eine Richtung eines Stromflusses $i_{L2}$ durch die zweite Speicherdrossel $106_2$ während einer Schaltperiode der elektrischen Schaltelemente $108_1$ bis $108_4$ (z.B. PWM-Periode) zumindest einmal umdrehen.

Dabei können die Induktivität $L1$ der ersten Speicherdrossel $106_1$ und die Induktivität $L2$ der zweiten Speicherdrossel $106_2$ so dimensioniert sein, dass ein Stromrippel des Stromflusses $i_{L1}$ durch die erste Speicherdrossel $106_1$ und ein Stromrippel des Stromflusses $i_{L2}$ durch die zweite Speicherdrossel $106_2$ so groß ist, dass sich eine Richtung eines Stromflusses $i_{L1}$ durch die erste Speicherdrossel $106_1$ und eine Richtung eines Stromflusses $i_{L2}$ durch die zweite Speicherdrossel $106_2$ während einer Schaltperiode der elektrischen Schaltelemente $108_1$ bis $108_4$ (z.B. PWM-Periode) zumindest einmal umdrehen.

Des Weiteren können die Induktivität *L1* der ersten Speicherdrossel $106_1$ und die Induktivität L2 der zweiten Speicherdrossel $106_2$ so dimensioniert sein, dass durch den Stromfluss $i_{L1}$ durch die erste Speicherdrossel $106_1$ und durch den Stromfluss $i_{L2}$ durch die zweite Speicherdrossel $106_2$ parasitäre Kapazitäten $116_1$ bis $116_4$ einzuschaltender elektrischer Schaltelemente $108_1$ bis $108_4$ vor dem Einschalten entladen werden, und/oder dass durch den Stromfluss $i_{L1}$ durch die erste Speicherdrossel $106_1$ und durch den Stromfluss $i_{L2}$ durch die zweite Speicherdrossel $106_2$ parasitäre Kapazitäten $116_1$ bis $116_4$ zuvor eingeschalteter elektrischer Schaltelemente $108_1$ bis $108_4$ aufgeladen werden.

Somit dreht sich bei dem ZVS-entlasteten Betrieb der elektrischen Schaltelemente (Schalter) $108_1$ bis $108_4$ der Strom $i_L$ in der Speicherdrossel (Induktivität) 106 innerhalb einer Schaltperiode der elektrischen Schaltelemente $108_1$ bis $108_4$ (z.B. PWM-Periode) durch ein entsprechendes Design der Speicherdrossel 106 zweimal um. Dies führt dazu, dass die parasitären Kondensatoren $116_1$ bis $116_4$ der elektrischen Schaltelemente (z.B. Leistungshalbleiter) $108_1$ bis $108_4$ (immer) vor ihrem Einschalten zwischen der Totzeit vom Speicherdrosselstrom $i_L$ entladen werden können. Auf diese Weise können die elektrischen Schaltelemente $108_1$ bis $108_4$ (ständig) weich (ZVS) geschaltet werden. Die Schaltverluste können dadurch reduziert (oder sogar minimiert) werden.

Fig. 7a bis 7h zeigen in Diagrammen Steuersignal-, Strom- und Spannungsverläufe des Gleichspannungswandlers 100 über eine Schaltperiode der elektrischen Schaltelemente $108_1$ bis $108_4$ (z.B. PWM-Periode) sowie in schematischen Blockschaltbildern Schalt- und Stromflusszustände des Gleichspannungswandlers 100 während unterschiedlichen Zeitabschnitten der Schaltperiode der elektrischen Schaltelemente $108_1$ bis $108_4$ (z.B. PWM-Periode).

Im Detail zeigen Fig. 7a bis 7h jeweils in einem ersten Diagramm 10 einen Verlauf eines ersten Steuersignals 140 des ersten und vierten elektrischen Schaltelements $108_1$ und $108_4$ und einen Verlauf eines zweiten Steuersignals 142 des zweiten und dritten elektrischen Schaltelements $108_2$ und $108_3$, in einem zweiten Diagramm 12 einen Verlauf eines Spannungsabfalls 144 (Drain-Source-Spannung $U_{DS1}$) über dem ersten elektrischen Schaltelement $108_1$ und einen Verlauf eines Spannungsabfalls 146 (Drain-Source-Spannung $u_{DS2}$) über dem zweiten elektrischen Schaltelement $108_2$, und in einem dritten Diagramm 14 einen Verlauf des Stromflusses $148_1$ ($i_{L1}$) durch die erste Speicherdrossel $106_1$ und einen Verlauf des Stromflusses $148_2$ ($i_{L2}$) durch die zweite Speicherdrossel $106_2$.

Dabei zeigt Fig. 7a in einem schematischen Blockschaltbild 16 den Stromfluss in dem Gleichspannungswandler 100 zwischen den Zeitpunkten $t_0$ und $t_1$ (während eines ersten Zeitabschnitts der Schaltperiode der elektrischen Schal-telemente $108_1$ bis $108_4$ (z.B. PWM-Periode)). Zwischen den Zeitpunkten $t_0$ und $t_1$ befindet sich der Gleichspannungs-wandler 100 in dem zweiten Schaltzustand, d.h. das erste elektrische Schaltelement $108_1$ und das vierte elektrische Schaltelement $108_4$ sind ausgeschaltet, während das zweite elektrische Schaltelement $108_2$ und das dritte elektrische Schaltelement $108_3$ eingeschaltet sind. Dies führt zu einem ersten Stromflusszustand mit einem ersten Strompfad, der sich von dem ersten Anschluss $110_1$ über die erste Speicherdrossel $106_1$, das zweite elektrische Schaltelement $108_2$ zu dem zweiten Anschluss $110_2$ erstreckt, und einem zweiten Strompfad, der sich von dem vierten Anschluss $110_4$ über die Zwischenkreiskapazität $118_Z$, dem dritten elektrischen Schaltelement $108_3$, der zweiten Speicherdrossel $106_2$ zu dem dritten Anschluss $110_3$ erstreckt. Mit anderen Worten, Fig. 7a zeigt einen ersten Zustand des Stromflusses während einer Schaltperiode der elektrischen Schaltelemente $108_1$ bis $108_4$ (z.B. PWM-Periode).

Fig. 7b zeigt in einem schematischen Blockschaltbild 16 den Stromfluss in dem Gleichspannungswandler 100 zwischen den Zeitpunkten t1 und t2 (während eines zweiten Zeitabschnitts der Schaltperiode der elektrischen Schalt-elemente $108_1$ bis $108_4$ (z.B. PWM-Periode)). Zwischen den Zeitpunkten $t_1$ und $t_2$ befindet sich der Gleichspannungs-wandler 100 in einem Todzeitschaltzustand, d.h. das erste, zweite, dritte und vierte elektrische Schaltelement $108_1$ bis $108_4$ sind ausgeschaltet. Der Stromfluss durch die erste Speicherdrossel $106_1$ und der Stromfluss durch die zweite Speicherdrossel $106_2$ können sich nicht sprunghaft ändern, so dass die erste Speicherdrossel $106_1$ ein Weiterfließen des Stromes $i_{L1}$ bewirkt, während die zweite Speicherdrossel ein Weiterfließen des Stromes $i_{L2}$ bewirkt. Dies führt, wie in Fig. 7b gezeigt ist, zu einem zweiten Stromflusszustand mit einem ersten Strompfad, der sich von dem ersten Anschluss $110_1$ über die erste Speicherdrossel $106_1$, die erste parasitäre Kapazität $116_1$ und der Zwischenkreiskapazität $118_Z$ zu dem zweiten Anschluss $110_2$ erstreckt, einem zweiten Strompfad, der sich von dem ersten Anschluss $110_1$ über die erste Speicherdrossel $106_1$, die zweite parasitäre Kapazität $116_2$ zu dem zweiten Anschluss $110_2$ erstreckt, einem dritten Strompfad, der sich von dem vierten Anschluss $110_4$ über die Zwischenkreiskapazität $118_Z$, die dritte parasitäre Kapazität $116_3$ und die zweite Speicherdrossel $106_2$ zu dem dritten Anschluss $110_3$ erstreckt, und einem vierten Strompfad, der sich von dem vierten Anschluss $110_4$ über die vierte parasitäre Kapazität $116_4$ und die zweite Speicherdrossel $106_2$ zu dem dritten Anschluss $110_3$ erstreckt, so dass die parasitären Kapazitäten $116_2$ und $116_3$ der elektrischen Schaltelemente $108_2$ und $108_3$ nach dem Ausschalten aufgeladen werden und die parasitären Kapazitäten $116_1$ und $116_4$ der elektrischen Schaltelemente $108_1$ und $108_4$ vor dem Einschalten entladen werden. Mit anderen Worten, Fig. 7b zeigt einen zweiten Zustand des Stromflusses während einer Schaltperiode der elektrischen Schaltelemente $108_1$ bis $108_4$ (z.B. PWM-Periode).

Fig. 7c zeigt in einem schematischen Blockschaltbild 16 den Stromfluss in dem Gleichspannungswandler 100 zwischen den Zeitpunkten t2 und t3 (während eines dritten Zeitabschnitts der Schaltperiode der elektrischen Schalt-elemente $108_1$ bis $108_4$ (z.B. PWM-Periode)). Zwischen den Zeitpunkten $t_2$ und $t_3$ befindet sich der Gleichspannungs-wandler 100 noch immer in dem Todzeitschaltzustand. Da zum Zeitpunkt $t_2$ die parasitären Kapazitäten der zuvor eingeschalteten Schaltelemente (vollständig) aufgeladen sind sowie die parasitären Kapazitäten einzuschaltender Schaltelemente (vollständig) entladen sind und die Speicherdrosseln $106_1$ und $106_2$ weiterhin ein Weiterfließen des Stromes $i_{L1}$ und des Stromes $i_{L2}$ bewirken, ergibt sich zwischen den Zeitpunkten $t_2$ und $t_3$ ein dritter Stromflusszustand mit einem ersten Strompfad, der sich von dem ersten Anschluss $110_1$ über die erste Speicherdrossel $106_1$, die erste Diode $114_1$ und die Zwischenkreiskapazität $118_Z$ zu dem zweiten Anschluss $110_2$ erstreckt, und einem zweiten Strompfad, der sich von dem vierten Anschluss $110_4$ über die vierte Diode $114_4$ und die zweite Speicherdrossel $106_2$ zu dem dritten Anschluss $110_3$ erstreckt. Mit anderen Worten, Fig. 7c zeigt einen dritten Zustand des Stromflusses während einer Schaltperiode der elektrischen Schaltelemente $108_1$ bis $108_4$ (z.B. PWM-Periode).

Fig. 7d zeigt in einem schematischen Blockschaltbild 16 den Stromfluss in dem Gleichspannungswandler 100 zwischen den Zeitpunkten t3 und t4 (während einem vierten Zeitabschnitts der Schaltperiode der elektrischen Schaltelemente $108_1$ bis $108_4$ (z.B. PWM-Periode)). Zwischen den Zeitpunkten $t_3$ und $t_4$ befindet sich der Gleichspannungswandler 100 in dem ersten Schaltzustand, d.h. das zweite elektrische Schaltelement $108_2$ und das dritte elektrische Schaltelement $108_3$ sind ausgeschaltet, während das erste elektrische Schaltelement $108_1$ und das vierte elektrische Schaltelement $108_4$ eingeschaltet sind. Dies führt zu einem vierten Stromflusszustand mit einem ersten Strompfad, der sich von dem ersten Anschluss $110_1$ über die erste Speicherdrossel $106_1$, das erste elektrische Schaltelement $108_1$ und die Zwischenkreiskapazität $118_Z$ zu dem zweiten Anschluss $110_2$ erstreckt, und einem zweiten Strompfad, der sich von dem vierten Anschluss $110_4$ über das vierte elektrische Schaltelement $108_4$ und die zweite Speicherdrossel $106_2$ zu dem dritten Anschluss $110_3$ erstreckt. Mit anderen Worten, Fig. 7d zeigt einen vierten Zustand des Stromflusses während einer Schaltperiode der elektrischen Schaltelemente $108_1$ bis $108_4$ (z.B. PWM-Periode).

Fig. 7e zeigt in einem schematischen Blockschaltbild 16 den Stromfluss in dem Gleichspannungswandler 100 zwischen den Zeitpunkten $t_4$ und $t_5$ (während eines fünften Zeitabschnitts der Schaltperiode der elektrischen Schaltelemente $108_1$ bis $108_4$ (z.B. PWM-Periode)). Zwischen den Zeitpunkten $t_4$ und $t_5$ befindet sich der Gleichspannungswandler 100 noch immer in dem zweiten Schaltzustand. Zu dem Zeitpunkt $t_4$ haben sich die Richtung des Stromflusses $i_{L1}$ durch die erste Speicherdrossel $106_1$ und die Richtung des Stromflusses $i_{L2}$ durch die zweite Speicherdrossel $106_2$ jedoch umgedreht. Dies führt zu einem fünften Stromflusszustand mit einem ersten Strompfad, der sich von dem zweiten Anschluss $110_2$ über die Zwischenkreiskapazität $118_Z$, das erste elektrische Schaltelement $108_1$ und die erste Speicherdrossel $106_1$ zu dem ersten Anschluss $110_1$ erstreckt, und einem zweiten Strompfad, der sich von dem dritten Anschluss $110_3$ über die zweite Speicherdrossel $106_2$ und das vierte elektrische Schaltelement $108_4$ zu dem vierten Anschluss $110_4$ erstreckt. Mit anderen Worten, Fig. 7e zeigt einen fünften Zustand des Stromflusses während einer Schaltperiode der elektrischen Schaltelemente $108_1$ bis $108_4$ (z.B. PWM-Periode).

Fig. 7f zeigt in einem schematischen Blockschaltbild 16 den Stromfluss in dem Gleichspannungswandler 100 zwischen den Zeitpunkten $t_5$ und $t_6$ (während eines sechsten Zeitabschnitts der Schaltperiode der elektrischen Schaltelemente $108_1$ bis $108_4$ (PWM-Periode)). Zwischen den Zeitpunkten $t_5$ und $t_6$ befindet sich der Gleichspannungswandler 100 in einem Todzeitschaltzustand, d.h. das erste, zweite, dritte und vierte elektrische Schaltelement $108_1$ bis $108_4$ sind ausgeschaltet. Der Stromfluss durch die erste Speicherdrossel $106_1$ und der Stromfluss durch die zweite Speicherdrossel $106_2$ können sich nicht sprunghaft ändern, so dass die erste Speicherdrossel $106_1$ ein Weiterfließen des Stromes $i_{L1}$ bewirkt, während die zweite Speicherdrossel ein Weiterfließen des Stromes $i_{L2}$ bewirkt. Dies führt, wie in Fig. 7f gezeigt ist, zu einem sechsten Stromflusszustand mit einem ersten Strompfad, der sich von dem zweiten Anschluss $110_2$ über die zweite parasitäre Kapazität $116_2$ und die erste Speicherdrossel $106_1$ zu dem ersten Anschluss $110_1$ erstreckt, einem zweiten Strompfad, der sich von dem zweiten Anschluss $110_2$ über die Zwischenkreiskapazität $118_Z$, die erste parasitäre Kapazität $116_1$ und die erste Speicherdrossel $106_1$ zu dem ersten Anschluss $110_1$ erstreckt, einem dritten Strompfad, der sich von dem dritten Anschluss $110_3$ über die zweite Speicherdrossel $106_2$ und die vierte parasitäre Kapazität $116_4$ zu dem vierten Anschluss $110_4$ erstreckt, und einem vierten Strompfad, der sich von dem dritten Anschluss $110_3$ über die zweite Speicherdrossel $106_2$ die dritte parasitäre Kapazität $116_3$ und die Zwischenkreiskapazität $118_Z$ zu dem vierten Anschluss $110_4$ erstreckt, so dass die parasitären Kapazitäten $116_1$ und $116_4$ der ersten und vierten elektrischen Schaltelemente $108_1$ und $108_4$ nach dem Ausschalten aufgeladen werden und die parasitären Kapazitäten $116_2$ und $116_3$ der zweiten und dritten elektrischen Schaltelemente $108_2$ und $108_3$ vor dem Einschalten entladen werden. Mit anderen Worten, Fig. 7f zeigt einen sechsten Zustand des Stromflusses während einer Schaltperiode der elektrischen Schaltelemente $108_1$ bis $108_4$ (z.B. PWM-Periode).

Fig. 7g zeigt in einem schematischen Blockschaltbild 16 den Stromfluss in dem Gleichspannungswandler 100 zwischen den Zeitpunkten $t_6$ und $t_7$ (während eines siebten Zeitabschnitts der Schaltperiode der elektrischen Schaltelemente $108_1$ bis $108_4$ (z.B. PWM-Periode)). Zwischen den Zeitpunkten $t_6$ und $t_7$ befindet sich der Gleichspannungswandler 100 noch immer in dem Todzeitschaltzustand. Da zum Zeitpunkt $t_6$ die parasitären Kapazitäten der zuvor eingeschalteten Schaltelemente (vollständig) aufgeladen sind sowie die parasitären Kapazitäten einzuschaltender Schaltelemente (vollständig) entladen sind und die erste Speicherdrossel $106_1$ weiterhin ein Weiterfließendes Stromes $i_{L1}$ bewirkt und die zweite Speicherdrossel $106_2$ weiterhin ein Weiterfließendes Stromes $i_{L2}$ bewirkt, ergibt sich zwischen den Zeitpunkten $t_6$ und $t_7$ ein siebter Stromflusszustand mit einem ersten Strompfad, der sich von dem zweiten Anschluss $110_2$ über die zweite Diode $114_2$ und die erste Speicherdrossel $106_1$ zu dem ersten Anschluss $110_1$ erstreckt, und einem

zweiten Strompfad, der sich von dem dritten Anschluss $110_3$ über die zweite Speicherdrossel $106_2$, die dritte Diode $114_3$ und die Zwischenkreiskapazität $118_Z$ zu dem vierten Anschluss $110_4$ erstreckt. Mit anderen Worten, Fig. 7g zeigt einen siebten Zustand des Stromflusses während einer Schaltperiode der elektrischen Schaltelemente $108_1$ bis $108_4$ (z.B. PWM-Periode).

Fig. 7h zeigt in einem schematischen Blockschaltbild 16 den Stromfluss in dem Gleichspannungswandler 100 zwischen den Zeitpunkten $t_7$ und $t_8$ (während eines achten Zeitabschnitts der Schaltperiode der elektrischen Schaltelemente $108_1$ bis $108_4$ (z.B. PWM-Periode)). Zwischen den Zeitpunkten $t_7$ und $t_8$ befindet sich der Gleichspannungswandler 100 wieder in dem zweiten Schaltzustand, d.h. das erste elektrische Schaltelement $108_1$ und das vierte elektrische Schaltelement $108_4$ sind ausgeschaltet, während das zweite elektrische Schaltelement $108_2$ und das dritte elektrische Schaltelement $108_3$ eingeschaltet sind. Dies führt zu einem achten Stromflusszustand mit einem ersten Strompfad, der sich von dem zweiten Anschluss $110_2$ über das zweite elektrische Schaltelement $108_2$ und die erste Speicherdrossel $106_1$ zu dem ersten Anschluss $110_1$ erstreckt, und einem zweiten Strompfad, der sich von dem dritten Anschluss $110_3$ über die zweite Speicherdrossel $106_2$, das dritte elektrische Schaltelement $108_3$ und die Zwischenkreiskapazität $118_Z$ zu dem vierten Anschluss $110_4$ erstreckt. Mit anderen Worten, Fig. 7h zeigt einen achten Zustand des Stromflusses während einer Schaltperiode der elektrischen Schaltelemente $108_1$ bis $108_4$ (z.B. PWM-Periode).

Wie bereits erwähnt kann der Gleichspannungswandler 100 ausgelegt sein, um bei einer Veränderung von Betriebsparametern des Gleichspannungswandlers 100 eine Schaltfrequenz der elektrischen Schaltelemente $108_1$ bis $108_4$ derart nachzuführen oder nachzuregeln, dass ein Richtungswechsel des Stromflusses durch die erste Speicherdrossel $106_1$ und ein Richtungswechsel des Stromflusses durch die zweite Speicherdrossel $106_2$ während einer Schaltperiode der elektrischen Schaltelemente $108_1$ bis $108_4$ gewährleistet wird.

Beispielsweise kann der Gleichspannungswandler 100 ausgebildet sein, um in dem Tief-Hochsetzmodus des Gleichspannungswandlers 100 die Schaltfrequenz $f_{soll1}$ $(f_E)$ des ersten elektrischen Schaltelements $108_1$ und des zweiten elektrischen Schaltelements $108_2$ innerhalb eines Toleranzbereichs von $\pm 50\%$ basierend auf der Formel

$$f_{soll1} = \frac{u_E u_A}{u_E + u_A} \cdot \frac{1}{2 \cdot L1 \left( I_{L1} + |I_{L1,min}| \right)} \qquad \text{(GL. 1-19)}$$

nachzuführen oder nachzuregeln, wobei $u_E$ eine erste Spannung (Eingangsspannung) ist, die am ersten Gleichspannungstor (102) anliegt, wobei $u_A$ eine zweite Spannung (Ausgangsspannung) ist, die am zweiten Gleichspannungstor (104) anliegt, wobei $L1$ eine Induktivität der ersten Speicherdrossel ($106_1$) (Induktivität $L_E$ der Eingangsspeicherdrossel) ist, und wobei $I_{L1}$ ein arithmetischer Mittelwert des Stromflusses durch die erste Speicherdrossel ($106_1$) (arithmetischer Mittelwert des Eingangsstroms $I_E$) ist.

Ferner kann der Gleichspannungswandler ausgebildet sein, um in dem Tief-Hochsetzmodus des Gleichspannungswandlers 100 die Schaltfrequenz $f_{soll2}$ $(f_A)$ des dritten elektrischen Schaltelements $108_3$ und des vierten elektrischen Schaltelements $108_4$ innerhalb eines Toleranzbereichs von $\pm 50\%$ basierend auf der Formel

$$f_{soll2} = \frac{u_E u_A}{u_E + u_A} \cdot \frac{1}{2 \cdot L2 \left( I_{L2} + |I_{L2,min}| \right)} \qquad \text{(GL. 1-20)}$$

nachzuführen oder nachzuregeln, wobei $u_E$ eine erste Spannung (Eingangsspannung) ist, die am ersten Gleichspannungstor (102) anliegt, wobei $u_2$ eine zweite Spannung (Ausgangsspannung) ist, die am zweiten Gleichspannungstor (104) anliegt, wobei L2 eine Induktivität der zweiten Speicherdrossel ($106_2$) (Induktivität $L_A$ der Ausgansspeicherdrossel) ist, und wobei $I_{L2}$ ein arithmetischer Mittelwert des Stromflusses durch die zweite Speicherdrossel ($106_2$) (arithmetischer Mittelwert des Ausgangsstroms $I_A$) ist.

Ferner kann der Gleichspannungswandler 100 ausgebildet sein, um basierend auf der aus GL. 1-19 ermittelten Schaltfrequenz $f_{soll1}$ und der aus GL. 1-20 ermittelten Schaltfrequenz $f_{soll2}$ eine gemeinsame Schaltfrequenz $f_{soll}$ für die elektrischen Schaltelemente $108_1$ bis $108_4$ zu ermitteln.

Die Schaltfrequenz $f_{soll}$ kann z.B. über ein C-Programm wie folgt definiert werden:

$$f_{\text{soll}} = \min(f_{\text{soll1}}, f_{soll2}), \text{ und zwar:}$$

$$\text{if } (f_{\text{soll1}} >= f_{soll2})$$
$$f_{\text{soll}} = f_{soll2};$$
$$\text{else}$$
$$f_{\text{soll}} = f_{\text{soll1}};$$

Zusammenfassend lässt sich das Konzept zur resonanten Schaltentlastung ohne Übergangsphase und mit Frequenzmodulation durch folgende Eigenschaften charakterisieren.

Erstens, durch das Steuerungsverfahren ohne Übergangsphase bei dem die Schalter $108_1(S_1)$ und $108_4(S_4)$ stetig komplementär zu den Schaltern $108_2(S_2)$ und $108_3(S_3)$ ein- oder ausgeschaltet werden. Zur Vermeidung eines Kurzschlusses am Gleichspannungseingangstor 102 als auch am Gleichspannungsausgangstor 104 des Gleichspannungswandlers 100 kann zwischen Ein- und Ausschalten der elektrischen Schaltelemente (Leistungshalbleiter) $108_1$ bis $108_4$ (immer) eine Totzeit vorgesehen werden.

Zweitens, durch den ZVS-entlasteten Betrieb der elektrischen Schaltelemente (Schalter) $108_1$ bis $108_4$ kann sich der Strom $i_L$ in der Speicherdrossel (Induktivität) 106 innerhalb einer Schaltperiode der elektrischen Schaltelemente $108_1$ bis $108_4$ (z.B. PWM-Periode) durch ein entsprechendes Design der Speicherdrossel 106 einmal umdrehen. Dies führt dazu, dass die parasitären Kondensatoren $116_1$ bis $116_4$ der elektrischen Schaltelemente (z.B. bipolare Leistungshalbleiter) $108_1$ bis $108_4$ (immer) vor ihrem Einschalten zwischen der Totzeit vom Speicherdrosselstrom $i_L$ entladen werden können. Auf diese Weise können die elektrischen Schaltelemente $108_1$ bis $108_4$ (ständig) weich (ZVS) geschaltet werden. Die Schaltverluste können dadurch reduziert (oder sogar minimiert) werden.

Drittens, durch die Modulation der Schaltfrequenz der elektrischen Schaltelemente $108_1$ bis $108_4$. Der Stromrippel in der Speicherdrossel (Induktivität) 106 kann durch eine Veränderung der Schaltfrequenz (ständig) in der Weise angepasst werden, dass einerseits die elektrischen Schaltelemente $108_1$ bis $108_4$ (stets) ZVS-entlastet betrieben werden und andererseits so, dass der Stromrippel nicht zu groß wird, und die Durchlassverluste in den elektrischen Schaltelementen (Schalter) $108_1$ bis $108_4$ und die Verluste in der Speicherdrossel 106 nicht deutlich steigen.

Unter Verwendung des Konzepts zur resonanten Schaltentlastung ohne Übergangsphase und mit Frequenzmodulation (Konzept 1) kann der Gleichspannungswandler 100 im Tief-Hochsetzmodus sowohl bei gesamten Spannungsbetriebspunkten als auch bei kleinen Leistungsbetriebspunkten hohen Wirkungsgrad erreichen.

Im Folgenden wird ein Konzept zur resonanten Schaltentlastung mit Übergangsphase und Frequenzmodulation (Konzept 2) beschrieben.

Dabei wird auf Basis des oben beschriebenen Konzepts zur resonanten Schaltentlastung ohne Übergangsphase und mit Frequenzmodulation (Konzept 1) das Konzept zur resonanten Schaltentlastung mit Übergangsphase und Frequenzmodulation (Konzept 2) beschrieben.

Gemäß dem Konzept zur resonanten Schaltentlastung mit Übergangsphase und Frequenzmodulation (Konzept 2) kann der Gleichspannungswandler 100 im Tiefsetzmodus, Hochsetzmodus und Tief-Hochsetzmodus betrieben werden.

Wie bereits oben ausführlich beschrieben wurde, kann der Gleichspannungswandler 100 ausgebildet sein, um in dem Tief-Hochsetzmodus zwischen einem ersten Schaltzustand, in dem das erste elektrische Schaltelement $108_1$ und das vierte elektrische Schaltelement $108_4$ eingeschaltet sind (und das zweite elektrische Schaltelement $108_2$ und das dritte elektrische Schaltelement $108_3$ ausgeschaltet sind), und einem zweiten Schaltzustand, in dem das zweite elektrische Schaltelement $108_2$ und das dritte elektrische Schaltelement $108_3$ eingeschaltet sind (und das erste elektrische Schaltelement $108_1$ und das vierte elektrische Schaltelemente $108_4$ ausgeschaltet sind), umzuschalten.

Darüber hinaus kann der Gleichspannungswandler 100 ausgebildet sein, um in dem Tiefsetzmodus zwischen einem dritten Schaltzustand, in dem das erste elektrische Schaltelement $108_1$ eingeschaltet ist (und das zweite elektrische Schaltelement $108_2$ ausgeschaltet ist), und einem vierten Schaltzustand, in dem das zweite elektrische Schaltelement $108_2$ eingeschaltet ist (und das erste elektrische Schaltelement $108_1$ ausgeschaltet ist), umzuschalten, wobei in dem Tiefsetzmodus unabhängig von dem Schaltzustand das dritte elektrische Schaltelement $108_3$ eingeschaltet und das vierte elektrische Schaltelement $108_4$ ausgeschaltet sind.

Des Weiteren kann der Gleichspannungswandler 100 ausgebildet sein, um in dem Hochsetzmodus zwischen einem fünften Schaltzustand, in dem das dritte elektrische Schaltelement $108_3$ eingeschaltet ist (und das vierte elektrische Schaltelement $108_4$ ausgeschaltet ist), und einem sechsten Schaltzustand, in dem das vierte elektrische Schaltelement eingeschaltet ist (und das dritte elektrische Schaltelement $108_3$ ausgeschaltet ist), umzuschalten, wobei in dem Hochsetzmodus unabhängig von dem Schaltzustand das erste elektrische Schaltelement $108_1$ eingeschaltet und das zweite elektrische Schaltelement $108_2$ ausgeschaltet ist.

Mit anderen Worten, beim Tiefsetzmodus sind das dritte elektrische Schaltelement $108_3(S_3)$ permanent ein- und das vierte elektrische Schaltelement $108_4(S_4)$ permanent ausgeschaltet, während das erste elektrische Schaltelement $108_1(S_1)$ und das zweite elektrische Schaltelement $108_2(S_2)$ durch eine komplementäre Ansteuerung geschaltet werden. Im Vergleich dazu sind beim Hochsetzmodus das erste elektrische Schaltelement $108_1(S_1)$ dauerhaft ein- und das zweite elektrische Schaltelement $108_2(S_2)$ dauerhaft ausgeschaltet, während das dritte elektrische Schaltelement $108_3(S_3)$ und das vierte elektrische Schaltelement $108_4(S_4)$ durch eine komplementäre Ansteuerung geschaltet werden. Beim Tief-Hochsetzmodus werden die Schalter genau wie bei dem Konzept zur resonanten Schaltentlastung ohne Übergangsphase und mit Frequenzmodulation (Konzept 1) betrieben.

Ferner kann der Gleichspannungswandler 100 ausgebildet sein, um die elektrischen Schaltelemente (Leistungshalbleiter) $108_1$ bis $108_4$ in allen drei Modi, d.h. im Tiefsetzmodus, Hochsetzmodus und Tief-Hochsetzmodus, ZVS-entlastet zu schalten. Bei Auslegung der Speicherdrossel 106 kann beachtet werden, dass der Strom $i_L$ in der Speicherdrossel (Induktivität) 106 innerhalb einer Schaltperiode der elektrischen Schaltelemente $108_1$ bis $108_4$ (z.B. PWM-Periode) umkehren kann, damit die Bedingung für weiches Schalten erfüllt ist.

Darüber hinaus kann der Stromrippel durch Variierung der Schaltfrequenz ständig angepasst werden, um einen verbesserten (oder sogar maximal möglichen) Wirkungsgrad bei allen Arbeitspunkten in den drei Betriebsmodi zu erzielen.

Im Unterschied zum Konzept zur resonanten Schaltentlastung ohne Übergangsphase und mit Frequenzmodulation (Konzept 1) wird die optimale Schaltfrequenz $f_{soll}$ für die Tief- und Hochsetzmodi wie folgt ermittelt:

Optimale Schaltfrequenz beim Tiefsetzmodus:

$$u_E - u_A = L \cdot \frac{\Delta i_L}{D \cdot T} = L \cdot \frac{2(I_L + |I_{L,min}|)}{D \cdot T} \rightarrow f_{soll} = \frac{u_E \cdot u_A - u_A^2}{u_E} \cdot \frac{1}{2 \cdot L(I_L + |I_{L,min}|)}$$

$$(\text{GL. 2-1})$$

Optimale Schaltfrequenz beim Hochsetzmodus:

$$u_E = L \cdot \frac{\Delta i_L}{D \cdot T} = L \cdot \frac{2(I_L + |I_{L,min}|)}{D \cdot T} \rightarrow f_{soll} = \frac{u_E \cdot u_A - u_E^2}{u_A} \cdot \frac{1}{2 \cdot L(I_L + |I_{L,min}|)}$$

$$(\text{GL. 2-2})$$

Im Folgenden werden die beiden hierin beschriebenen Konzepte zur resonanten Schaltentlastung (ohne Übergangsphase und mit Übergangsphase) gegenübergestellt und mit dem in der US 2012/0146594 A1 gezeigten Konzept verglichen.

Fig. 8 zeigt in einem Diagramm den Wirkungsgrad 170 des Gleichspannungswandlers 100 mit resonanter Schaltentlastung ohne Übergangsphase und Frequenzmodulation (Konzept 1), den Wirkungsgrad 172 des Gleichspannungswandlers 100 mit resonanter Schaltentlastung mit Übergangsphase und Frequenzmodulation (Konzept 2), sowie den Wirkungsgrad 60 des in der US 2012/0146594 A1 gezeigten Gleichspannungswandlers (Konzept mit 5 Modi) in Abhängigkeit von der Ausgangsspannung $U_A$ bei einer Eingangsspannung von $U_E = 440$ V und nach Spezifikation erlaubter maximaler Eingangsleistung.

Fig. 9 zeigt in einem Diagramm den Wirkungsgrad 170 des Gleichspannungswandlers 100 mit resonanter Schaltentlastung ohne Übergangsphase und Frequenzmodulation (Konzept 1), den Wirkungsgrad 172 des Gleichspannungswandlers 100 mit resonanter Schaltentlastung mit Übergangsphase und Frequenzmodulation, sowie den Wirkungsgrad des in der US 2012/0146594 A1 gezeigten Gleichspannungswandlers (Konzept mit 5 Modi) in Abhängigkeit von der Ausgangsspannung $U_A$ bei einer Eingangsspannung von $U_E = 440$ V bei zwölf Prozent der maximal zu liefernden Eingangsleistung.

Fig. 10 zeigt in einem Diagramm den Wirkungsgrad 170 des Gleichspannungswandlers 100 mit resonanter Schaltentlastung ohne Übergangsphase und Frequenzmodulation (Konzept 1), den Wirkungsgrad 172 des Gleichspannungswandlers 100 mit resonanter Schaltentlastung mit Übergangsphase und Frequenzmodulation (Konzept 2), sowie den Wirkungsgrad 60 des in der US 2012/0146594 A1 gezeigten Gleichspannungswandlers (Konzept mit 5 Modi) in Abhängigkeit von der Eingangsleistung bei einer Eingangsspannung von $U_E = 440$V und einer Ausgangsspannung von $U_A = 334$V.

Mit anderen Worten, in den Figuren 8 bis 10 werden der Wirkungsgrad 170 vom Konzept zur resonanten Schaltentlastung ohne Übergangsphase und mit Frequenzmodulation (Konzept 1), der Wirkungsgrad 172 vom Konzept

EP 3 028 377 B1

vom Konzept zur resonanten Schaltentlastung mit Übergangsphase und mit Frequenzmodulation (Konzept 2) und der Wirkungsgrad 60 des in der US 2012/0146594 A1 vorgestellten Konzepts (Konzept mit 5 Modi) gegenübergestellt und abgebildet.

Für den Vergleich in Fig. 8 wird vorausgesetzt, dass mit Eingangs- und Ausgangsstrombegrenzung die maximal mögliche Leistung bei verschiedenen Spannungsbetriebspunkten vom Tief-Hochsetzsteller 100 transportiert wird. Im in Fig. 9 dargestellten Vergleich wird der Gleichspannungswandler 100 bei verschiedenen Spannungsbetriebspunkten immer mit 12% der maximal zu liefernden Leistung belastet. In Fig. 10 wird der Wirkungsgrad in Abhängigkeit der Eingangsleistung beim Spannungsbetriebspunkt $U_E$ = 440V und $U_A$ = 334 V gezeigt. Die folgenden Wirkungsgradverläufe wurden mittels entsprechender Simulationssoftware ermittelt. Hierbei wurden sowohl die Schalt- und Leitverluste in den elektrischen Schaltelementen (Leistungshalbleitern) $108_1$ und $108_4$ als auch die Kupfer- und Kernverluste in den Speicherdrosseln 106 berücksichtigt.

Aus den Vergleichen in Figuren 8 bis 10 ist zu entnehmen, dass die Effizienz des Tief-Hochsetzstellers unter Verwendung des Konzepts zur resonanten Schaltentlastung ohne Übergangsphase und mit Frequenzmodulation (Konzept 1) gegenüber dem in der US 2012/0146594 A1 gezeigten Konzept (Konzept mit 5 Modi) sowohl bei verschiedenen Spannungsbereichen als auch bei unterschiedlichen Leistungsbereichen verbessert wird. Das Konzept zur resonanten Schaltentlastung mit Übergangsphase und mit Frequenzmodulation (Konzept 2) ermöglicht auf Basis des Konzepts zur resonanten Schaltentlastung ohne Übergangsphase und mit Frequenzmodulation (Konzept 2) eine noch bessere Systemeffizienz.

Fig. 11 zeigt ein Flussdiagramm eines Verfahrens 200 zum Betrieb eines Gleichspannungswandlers 100, gemäß einem Ausführungsbeispiel. Der Gleichspannungswandler umfasst ein erstes Gleichspannungstor 102, ein zweites Gleichspannungstor 104 und eine Speicherdrossel 106, die mittels elektrischer Schaltelemente $108_1$ bis $108_n$ zwischen dem ersten Gleichspannungstor 102 und dem zweiten Gleichspannungstor 104 gekoppelt ist, wobei der Gleichspannungswandler 100 so ausgelegt ist, dass eine Richtung eines Stromflusses durch die Speicherdrossel 106 sich während einer Schaltperiode der elektrischen Schaltelemente $108_1$ bis $108_n$ zumindest einmal umdreht. Das Verfahren 200 umfasst einen Schritt 202 des Nachführens oder Nachregelns einer Schaltfrequenz der elektrischen Schaltelemente $108_1$ bis $108_n$ bei einer Veränderung von Betriebsparametern des Gleichspannungswandlers 100 derart, dass ein Richtungswechsel des Stromflusses durch die Speicherdrossel 106 während einer Schaltperiode der elektrischen Schaltelemente $108_1$ bis $108_n$ gewährleistet wird.

Zusammenfassend beziehen sich Ausführungsbeispiele der vorliegenden Erfindung auf einen bidirektionalen kaskadierten Tief-Hochsetzsteller 100 und insbesondere auf zwei Konzepte zum Auslegen und Steuern des Tief-Hochsetzstellers 100. Mit diesen Konzepten kann die Effizienz der Gleichspannungswandler 100 sowohl im gesamten Spannungsbereich als auch bei kleinen Leistungen verbessert werden.

Weitere Ausführungsbeispiele schaffen einen Gleichspannungswandler 100 mit einem ersten Gleichspannungstor 102, einem zweiten Gleichspannungstor 104 und einer Speicherdrossel 106, die mittels elektrischen Schaltelementen $108_1$ bis $108_n$ zwischen dem ersten Gleichspannungstor 102 und dem zweiten Gleichspannungstor 104 gekoppelt ist. Der Gleichspannungswandler 100 ist dabei so ausgelegt, dass eine Richtung eines Stromflusses $i_L$ durch die Speicherdrossel 106 sich während einer Schaltperiode der elektrischen Schaltelemente $108_1$ bis $108_n$ zumindest einmal umdreht. Ferner ist der Gleichspannungswandler 100 ausgelegt, um bei einer Veränderung von Betriebsparametern des Gleichspannungswandlers 100 eine Schaltfrequenz der elektrischen Schaltelemente $108_1$ bis $108_n$ derart nachzuführen oder nachzuregeln, dass ein Richtungswechsel des Stromflusses $i_L$ durch die Speicherdrossel 106 während einer Schaltperiode der elektrischen Schaltelemente $108_1$ bis $108_n$ gewährleistet wird. Die Speicherdrossel 106 ist dabei so dimensioniert, dass ein minimaler Wert des Stromflusses $i_L$ durch die Speicherdrossel 106 bei einer Sollschaltfrequenz so groß ist, dass bei einer Veränderung von Betriebsparametern des Gleichspannungswandlers 100 für zumindest zwei aufeinander folgende Schaltperioden der elektrischen Schaltelemente $108_1$ bis $108_n$ ohne Nachführung der Schaltfrequenz der elektrischen Schaltelemente $108_1$ bis $108_n$ gewährleistet wird, dass sich jeweils während der zumindest zwei Schaltperioden die Richtung des Stromflusses $i_L$ durch die Speicherdrossel 106 der elektrischen Schaltelemente zumindest einmal umdreht.

Bei Ausführungsbeispielen kann der Gleichspannungswandler 100 ausgelegt sein, um die Schaltfrequenz der elektrischen Schaltelemente $108_1$ bis $108_n$ frühestens nach zwei aufeinander folgenden Schaltperioden der elektrischen Schaltelemente $108_1$ bis $108_n$ nachzuführen.

Bei Ausführungsbeispielen kann der minimale Wert des Stromflusses durch die Speicherdrossel 106 bei einer Sollschaltfrequenz kann dabei so dimensioniert sein, dass ein Richtungswechsel des Stromflusses durch die Speicherdrossel 106 während einer Schaltperiode der elektrischen Schaltelemente $108_1$ bis $108_n$ gewährleistet ist und die Schaltfrequenz nach zumindest zwei (oder mehr als zwei) Schaltperioden zu einer neuen Sollfrequenz nachgeführt wird, damit der minimale Stromfluss $I_{L,min}$ durch die Speicherdrossel 106 immer kleiner als Null bleibt.

Bei Ausführungsbeispielen kann die Speicherdrossel 106 somit nach GL. 1-13 so dimensioniert sein, dass der minimale Wert des Stromflusses $I_{L,min}$ durch die Speicherdrossel 106 so groß ist, dass die Schaltfrequenz erst nach mehr als 2 Schaltperioden zu einer neuen Sollfrequenz $f_{soll}$ nachgeführt werden muss und weiterhin gewährleistet wird,

23

dass sich eine Richtung des Stromflusses $i_L$ durch die Speicherdrossel 106 während einer Schaltperiode der elektrischen Schaltelemente $108_1$ bis $108_n$ zumindest einmal (z.B. genau zweimal) umdreht.

Die Sollschaltfrequenz kann dabei die Frequenz sein, die bei der Dimensionierung des Gleichspannungswandlers zugrunde gelegt wird.

Der Wert der Speicherdrossel kann bei der Dimensionierung des Gleichspannungswandlers so ausgelegt werden, dass z.B. der minimale Stromfluss $I_{L,min}$ durch die Speicherdrossel 106 zehn Prozent des Mittelwertes des Spulenstroms beträgt. Ein Ausführungsbeispiel nach GL 1-13 ergibt bei Annahme einer Eingangsspannung von 400V, einer Ausgangsspannung von 200V, einem mittleren Spulenstrom von 5A und einer Sollschaltfrequenz von 50kHz einen Wert für die Speicherdrossel von 242µH.

Bei Ausführungsbeispielen kann der Gleichspannungswandler 100 ferner so ausgelegt sein, dass eine Totzeit der elektrischen Schaltelemente $108_1$ bis $108_n$ während einer Schaltperiode der elektrischen Schaltelemente $108_1$ bis $108_n$ konstant ist.

Gemäß einem ersten Aspekt kann ein Gleichspannungswandler (100) folgende Merkmale aufweisen: einen ersten Gleichspannungstor (102); einen zweiten Gleichspannungstor (104); und eine Speicherdrossel (106), die mittels elektrischen Schaltelementen ($108_1$:$108_n$) zwischen dem ersten Gleichspannungstor (102) und dem zweiten Gleichspannungstor (104) gekoppelt ist; wobei der Gleichspannungswandler (100) so ausgelegt ist, dass eine Richtung eines Stromflusses ($i_L$) durch die Speicherdrossel (106) sich während einer Schaltperiode der elektrischen Schaltelemente $108_1$ bis $108_4$ zumindest einmal umdreht; und wobei der Gleichspannungswandler (100) ausgelegt ist, um bei einer Veränderung von Betriebsparametern des Gleichspannungswandlers (100) eine Schaltfrequenz der elektrischen Schaltelemente ($108_1$:$108_n$) derart nachzuführen oder nachzuregeln, dass ein Richtungswechsel des Stromflusses ($i_L$) durch die Speicherdrossel (106) während einer Schaltperiode der elektrischen Schaltelemente ($108_1$:$108_n$) gewährleistet wird.

Gemäß einem zweiten Aspekt unter Bezugnahme auf den ersten Aspekt kann bei dem Gleichspannungswandler (100) die Speicherdrossel (106) so dimensioniert sein, dass eine Richtung eines Stromflusses ($i_L$) durch die Speicherdrossel (106) sich während einer Schaltperiode der elektrischen Schaltelemente ($108_1$:$108_n$) zumindest einmal umdreht.

Gemäß einem dritten Aspekt unter Bezugnahme auf den zweiten Aspekt kann bei dem Gleichspannungswandler (100) die Speicherdrossel (106) so dimensioniert sein, dass ein Stromrippel des Stromflusses ($i_L$) durch die Speicherdrossel (106) so groß ist, dass eine Richtung eines Stromflusses ($i_L$) durch die Speicherdrossel (106) sich während einer Schaltperiode der elektrischen Schaltelemente ($108_1$:$108_n$) zumindest einmal umdreht.

Gemäß einem vierten Aspekt unter Bezugnahme auf zumindest einen des ersten oder zweiten Aspekts kann bei dem Gleichspannungswandler (100) die Speicherdrossel (106) ferner so dimensioniert sein, dass durch den Stromfluss ($i_L$) durch die Speicherdrossel (106) parasitäre Kapazitäten ($116_1$:$116_4$) einzuschaltender elektrischer Schaltelemente ($108_1$:$108_4$) vor dem Einschalten entladen werden.

Gemäß einem fünften Aspekt unter Bezugnahme auf zumindest einen des zweiten bis vierten Aspekts kann bei dem Gleichspannungswandler (100) die Speicherdrossel (106) ferner so dimensioniert sein, dass durch den Stromfluss ($i_L$) durch die Speicherdrossel (106) parasitäre Kapazitäten ($116_1$:$116_4$) zuvor eingeschalteter elektrischer Schaltelemente ($108_1$:$108_4$) aufgeladen werden.

Gemäß einem sechsten Aspekt unter Bezugnahme auf zumindest einen des zweiten oder dritten Aspekts kann bei dem Gleichspannungswandler (100) die Speicherdrossel (106) so dimensioniert sein, dass während einer Totzeit des Gleichspannungswandlers (100), während der die elektrischen Schaltelemente ($108_1$:$108_4$) ausgeschaltet sind, parasitäre Kapazitäten ($116_1$:$116_4$) der elektrischen Schaltelemente ($108_1$:$108_4$), die nach der Totzeit eingeschaltet werden, durch den Stromfluss ($i_L$) durch die Speicherdrossel (106) entladen werden, und parasitäre Kapazitäten ($116_1$:$116_4$) der eklektischen Schaltelemente ($108_1$:$108_4$), die vor der Totzeit eingeschaltet waren, durch den Stromfluss ($i_L$) durch die Speicherdrossel (106) aufgeladen werden.

Gemäß einem siebten Aspekt unter Bezugnahme auf zumindest einen des zweiten bis sechsten Aspekts kann bei dem Gleichspannungswandler (100) die Speicherdrossel (106) so dimensioniert sein, dass ein Null-Spannungs-Schalten der elektrischen Schaltelemente ($108_1$:$108_4$) gewährleistet wird.

Gemäß einem achten Aspekt unter Bezugnahme auf zumindest einen des ersten bis siebten Aspekts kann bei dem Gleichspannungswandler (100) eine Permeabilität eines Kerns der Speicherdrossel (106) so dimensioniert sein, dass Kernverluste reduziert sind.

Gemäß einem neunten Aspekt unter Bezugnahme auf zumindest einen des ersten bis achten Aspekts kann der Gleichspannungswandler (100) ausgelegt sein, um die Schaltfrequenz der elektrischen Schaltelemente ($108_1$:$108_4$) ferner derart nachzuführen oder nachzuregeln, dass ein Stromrippel des Stromflusses ($i_L$) durch die Speicherdrossel (106) so groß ist, dass eine Richtung eines Stromflusses ($i_L$) durch die Speicherdrossel (106) sich während einer Schaltperiode der elektrischen Schaltelemente ($108_1$:$108_n$) zumindest einmal umdreht.

Gemäß einem zehnten Aspekt unter Bezugnahme auf den neunten Aspekt kann der Gleichspannungswandler (100) ausgelegt sein, um die Schaltfrequenz der elektrischen Schaltelemente ($108_1$:$108_4$) ferner derart nachzuführen oder nachzuregeln, dass der Stromrippel des Stromflusses ($i_L$) durch die Speicherdrossel (106) zumindest so groß ist,

dass parasitäre Kapazitäten ($116_1$:$116_4$) einzuschaltender elektrischer Schaltelemente ($108_1$:$108_4$) vor dem Einschalten auf zumindest 25 % einer ersten Spannung, die an dem ersten Gleichspannungstor anliegt, oder einer zweiten Spannung, die an dem zweiten Gleichspannungstor anliegt, entladen werden.

Gemäß einem elften Aspekt unter Bezugnahme auf zumindest einen des ersten bis zehnten Aspekts kann der Gleichspannungswandler (100) ausgebildet sein, um in einem Tief-Hochsetzmodus des Gleichspannungswandlers (100) die Schaltfrequenz $f_{soll}$ der elektrischen Schaltelemente ($108_1$:$108_4$) innerhalb eines Toleranzbereichs von $\pm 50\%$ basierend auf der Formel

$$f_{soll} = \frac{u_1 u_2}{u_1 + u_2} \cdot \frac{1}{2L(I_L + |I_{L,min}|)}$$

nachzuführen oder nachzuregeln, wobei $u_1$ eine erste Spannung ist, die am ersten Gleichspannungstor (102) anliegt, wobei $u_2$ eine zweite Spannung ist, die am zweiten Gleichspannungstor (104) anliegt, wobei L eine Induktivität der Speicherdrossel (106) ist, und wobei $I_L$ ein arithmetischer Mittelwert des Stromflusses durch die Speicherdrossel (106) ist.

Gemäß einem zwölften Aspekt unter Bezugnahme auf zumindest einen des ersten bis elften Aspekts kann der Gleichspannungswandler (100) ausgebildet sein, um in einem Tiefsetzmodus des Gleichspannungswandlers (100) die Schaltfrequenz $f_{soll}$ der elektrischen Schaltelemente ($108_1$:$108_4$) innerhalb eines Toleranzbereichs von $\pm 50\%$ basierend auf der Formel

$$f_{soll} = \frac{u_1 u_2 - u_2^2}{u_1} \cdot \frac{1}{2L(I_L + |I_{L,min}|)}$$

nachzuführen oder nachzuregeln, wobei $u_1$ eine erste Spannung ist, die am ersten Gleichspannungstor (102) anliegt, wobei $u_2$ eine zweite Spannung ist, die am zweiten Gleichspannungstor (104) anliegt, wobei L eine Induktivität der Speicherdrossel (106) ist, wobei $I_L$ ein arithmetischer Mittelwert des Stromflusses durch die Speicherdrossel (106) ist, und wobei $I_{L,min}$ ein minimaler Wert des Stromflusses durch die Speicherdrossel (106) innerhalb einer Schaltperiode der elektrischen Schaltelemente ($108_1$:$108_n$) ist.

Gemäß einem dreizehnten Aspekt unter Bezugnahme auf zumindest einen des ersten bis elften Aspekts kann der Gleichspannungswandler (100) ausgebildet sein, um in einem Hochsetzmodus des Gleichspannungswandlers (100) die Schaltfrequenz $f_{soll}$ der elektrischen Schaltelemente ($108_1$:$108_4$) innerhalb eines Toleranzbereichs von $\pm 50\%$ basierend auf der Formel

$$f_{soll} = \frac{u_1 u_2 - u_1^2}{u_2} \cdot \frac{1}{2L(I_L + |I_{L,min}|)}$$

nachzuführen oder nachzuregeln, wobei $u_1$ eine erste Spannung ist, die am ersten Gleichspannungstor (102) anliegt, wobei $u_2$ eine zweite Spannung ist, die am zweiten Gleichspannungstor (104) anliegt, wobei L eine Induktivität der Speicherdrossel (106) ist, und wobei $I_{L,min}$ ein minimaler Wert des Stromflusses durch die Speicherdrossel (106) innerhalb einer Schaltperiode der elektrischen Schaltelemente ($108_1$:$108_4$) ist.

Gemäß einem vierzehnten Aspekt unter Bezugnahme auf zumindest einen des zehnten bis dreizehnten Aspekts kann der Gleichspannungswandler (100) ausgebildet sein, um die erste Spannung $u_1$, die am ersten Gleichspannungstor (102) anliegt, die zweite Spannung $u_2$, die am zweiten Gleichspannungstor (104) anliegt, oder den arithmetischer Mittelwert des Stromflusses $I_L$ durch die Speicherdrossel unter Verwendung von zumindest einem Messsensor zu ermitteln.

Gemäß einem fünfzehnten Aspekt unter Bezugnahme auf zumindest einen des ersten bis vierzehnten Aspekts kann bei dem Gleichspannungswandler ein erstes elektrisches Schaltelement ($108_1$) und ein zweites elektrisches Schaltelement ($108_2$) der elektrischen Schaltelemente ($108_1$:$108_4$) in Reihe zwischen einem ersten Anschluss ($110_1$) und einem zweiten Anschluss ($110_2$) des ersten Gleichspannungstors (102) geschaltet sein, und ein drittes elektrisches Schaltelement ($108_3$) und ein viertes elektrisches Schaltelement ($108_4$) der elektrischen Schaltelemente ($108_1$:$108_4$) in Reihe zwischen einem dritten Anschluss ($110_3$) und einem vierten Anschluss ($110_4$) des zweiten Gleichspannungstors (104) geschaltet sein; wobei die Speicherdrossel (106) in Reihe zwischen einem ersten Knoten ($112_1$) und einem zweiten Knoten ($112_2$) geschaltet ist, wobei der erste Knoten ($112_1$) in Reihe zwischen dem ersten elektrischen Schaltelement ($108_1$) und dem zweiten elektrischen Schaltelement ($108_2$) geschaltet ist, und der zweite Knoten ($112_2$) in Reihe zwischen dem dritten elektrischen Schaltelement ($108_3$) und dem vierten elektrischen Schaltelement ($108_4$) geschaltet ist.

Gemäß einem sechszehnten Aspekt unter Bezugnahme auf den fünfzehnten Aspekt kann der Gleichspannungswandler (100) ausgebildet sein, um in einem Tief-Hochsetzmodus des Gleichspannungswandlers (100) zwischen einem ersten Schaltzustand, in dem das erste elektrische Schaltelement ($108_1$) und das vierte elektrische Schaltelement ($108_4$) eingeschaltet sind, und einem zweiten Schaltzustand, in dem das zweite elektrische Schaltelement ($108_2$) und das dritte elektrische Schaltelement ($108_3$) eingeschaltet sind, umzuschalten.

Gemäß einem siebzehnten Aspekt unter Bezugnahme auf zumindest einen des fünfzehnten oder sechzehnten Aspekts kann der Gleichspannungswandler (100) ausgebildet sein, um in einem Tiefsetzmodus des Gleichspannungswandlers (100) zwischen einem dritten Schaltzustand, in dem das erste elektrische Schaltelement ($108_1$) eingeschaltet ist, und einem vierten Schaltzustand, in dem das zweite elektrische Schaltelement ($108_2$) eingeschaltet ist, umzuschalten, wobei in dem Tiefsetzmodus unabhängig von dem Schaltzustand das dritte elektrische Schaltelement ($108_3$) eingeschaltet und das vierte elektrische Schaltelement ($108_4$) ausgeschaltet ist.

Gemäß einem achtzehnten Aspekt unter Bezugnahme auf zumindest einen des fünfzehnten bis siebzehnten Aspekts kann der Gleichspannungswandler (100) ausgebildet sein, um in einem Hochsetzmodus des Gleichspannungswandlers (100) zwischen einem fünften Schaltzustand, in dem das dritte elektrische Schaltelement ($108_3$) eingeschaltet ist, und einem sechsten Schaltzustand, in dem das vierte elektrische Schaltelement ($108_4$) eingeschaltet ist, umzuschalten, wobei in dem Hochsetzmodus unabhängig von dem Schaltzustand das erste elektrische Schaltelement ($108_1$) eingeschaltet und das zweite elektrische Schaltelement ($108_2$) ausgeschaltet ist.

Gemäß einem neunzehnten Aspekt unter Bezugnahme auf zumindest einen des ersten bis vierzehnten Aspekts kann bei dem Gleichspannungswandler (100) ein erstes elektrisches Schaltelement ($108_1$) und ein zweites elektrisches Schaltelement ($108_2$) der elektrischen Schaltelemente ($108_1$:$108_4$) in Reihe zwischen einem Zwischenkreisknoten und einem zweiten Anschluss ($110_2$) des ersten Gleichspannungstors (102) geschaltet sein, und ein drittes elektrisches Schaltelement ($108_3$) und ein viertes elektrisches Schaltelement ($108_4$) der elektrischen Schaltelemente ($108_1$:$108_4$) in Reihe zwischen dem Zwischenkreisknoten und einem vierten Anschluss ($110_4$) des zweiten Gleichspannungstors (104) geschaltet sein; wobei die Speicherdrossel (106) eine erste Speicherdrossel ($106_1$) ist und der Gleichspannungswandler (100) ferner eine zweite Speicherdrossel ($106_2$) aufweist, wobei die erste Speicherdrossel ($106_1$) in Reihe zwischen einem ersten Anschluss des ersten Gleichspannungstors (102) und einem ersten Knoten ($112_1$) geschaltet ist, wobei die zweite Speicherdrossel ($106_2$) in Reihe zwischen einem dritten Anschluss ($110_3$) des zweiten Gleichspannungstors (104) und einem zweiten Knoten ($112_2$) geschaltet ist, wobei der erste Knoten ($112_1$) in Reihe zwischen dem ersten elektrischen Schaltelement ($108_1$) und dem zweiten elektrischen Schaltelement ($108_2$) geschaltet ist, und der zweite Knoten ($112_2$) in Reihe zwischen dem dritten elektrischen Schaltelement ($108_3$) und dem vierten elektrischen Schaltelement ($108_4$) geschaltet ist.

Gemäß einem zwanzigsten Aspekt unter Bezugnahme auf den neunzehnten Aspekt kann der Gleichspannungswandler (100) ausgebildet sein, um in einem Tief-Hochsetzmodus des Gleichspannungswandlers (100) zwischen einem ersten Schaltzustand, in dem das erste elektrische Schaltelement ($108_1$) und das vierte elektrische Schaltelement ($108_4$) eingeschaltet sind, und einem zweiten Schaltzustand, in dem das zweite elektrische Schaltelement ($108_2$) und das dritte elektrische Schaltelement ($108_3$) eingeschaltet sind, umzuschalten.

Gemäß einem einundzwanzigsten Aspekt unter Bezugnahme auf zumindest einen des neunzehnten bis zwanzigsten Aspekts kann der Gleichspannungswandler (100) ausgebildet sein, um in einem Tief-Hochsetzmodus des Gleichspannungswandlers (100) die Schaltfrequenz $f_{soll1}$ des ersten elektrischen Schaltelements ($108_1$) und des zweiten elektrischen Schaltelements ($108_2$) innerhalb eines Toleranzbereichs von $\pm 50\%$ basierend auf der Formel

$$f_{soll1} = \frac{u_1 u_2}{u_1 + u_2} \cdot \frac{1}{2 \cdot L1(I_{L1} + |I_{L1,min}|)}$$

nachzuführen oder nachzuregeln, wobei $u_1$ eine erste Spannung ist, die am ersten Gleichspannungstor (102) anliegt, wobei $u_2$ eine zweite Spannung ist, die am zweiten Gleichspannungstor (104) anliegt, wobei $L1$ eine Induktivität der ersten Speicherdrossel ($106_1$) ist, und wobei $I_{L1}$ ein arithmetischer Mittelwert des Stromflusses durch die erste Speicherdrossel ($106_1$) ist.

Gemäß einem zweiundzwanzigsten Aspekt unter Bezugnahme auf zumindest einen des neunzehnten bis einundzwanzigsten Aspekts kann der Gleichspannungswandler (100) ausgebildet sein, um in einem Tief-Hochsetzmodus des Gleichspannungswandlers (100) die Schaltfrequenz $f_{soll2}$ des dritten elektrischen Schaltelements ($108_3$) und des vierten elektrischen Schaltelements ($108_4$) innerhalb eines Toleranzbereichs von $\pm 50\%$ basierend auf der Formel

$$f_{soll2} = \frac{u_1 u_2}{u_1 + u_2} \cdot \frac{1}{2 \cdot L2(I_{L2} + |I_{L2,min}|)}$$

nachzuführen oder nachzuregeln, wobei $u_1$ eine erste Spannung ist, die am ersten Gleichspannungstor (102) anliegt, wobei $u_2$ eine zweite Spannung ist, die am zweiten Gleichspannungstor (104) anliegt, wobei L2 eine Induktivität der

zweiten Speicherdrossel ($106_2$) ist, und wobei $I_{L2}$ ein arithmetischer Mittelwert des Stromflusses durch die zweite Speicherdrossel ($106_2$) ist.

Gemäß einem dreiundzwanzigsten Aspekt unter Bezugnahme auf zumindest einen des sechzehnten bis achtzehnten Aspekts und den zwanzigsten Aspekt kann der Gleichspannungswandler (100) ausgebildet sein, um zwischen den Schaltzuständen derart umzuschalten, dass das Umschalten eine Totzeit aufweist, in der die elektrischen Schaltelemente ($108_1$:$108_4$) ausgeschaltet sind.

Gemäß einem vierundzwanzigsten Aspekt kann ein Verfahren (200) zum Betrieb eines Gleichspannungswandlers (100) mit einem ersten Gleichspannungstor (102), einem zweiten Gleichspannungstor (104) und einer Speicherdrossel (106) vorgesehen sein, die mittels elektrischen Schaltelementen ($108_1$:$108_n$) zwischen dem ersten Gleichspannungstor (102) und dem zweiten Gleichspannungstor (104) gekoppelt ist, wobei der Gleichspannungswandler (100) so ausgelegt ist, dass eine Richtung eines Stromflusses ($i_L$) durch die Speicherdrossel (106) sich während einer Schaltperiode der elektrischen Schaltelemente ($108_1$:$108_n$) zumindest einmal umdreht, wobei das Verfahren (200) folgende Schritte aufweisen kann: Nachführen oder Nachregeln (202) einer Schaltfrequenz der elektrischen Schaltelemente ($108_1$:$108_n$) bei einer Veränderung von Betriebsparametern des Gleichspannungswandlers (100) derart, dass ein Richtungswechsel des Stromflusses ($i_L$) durch die Speicherdrossel (106) während einer Schaltperiode der elektrischen Schaltelemente ($108_1$:$108_n$) gewährleistet wird.

Gemäß einem fünfundzwanzigsten Aspekt kann ein Computerprogramm mit einem Programmcode zur Durchführung des Verfahrens (200) nach dem vierundzwanzigsten Aspekt vorgesehen sein, wenn das Computerprogramm auf einem Computer abläuft.

Gemäß einem sechsundzwanzigsten Aspekt kann ein Gleichspannungswandler (100) folgende Merkmale aufweisen: einen ersten Gleichspannungstor (102); einen zweiten Gleichspannungstor (104); und eine Speicherdrossel (106), die mittels elektrischen Schaltelementen ($108_1$:$108_n$) zwischen dem ersten Gleichspannungstor (102) und dem zweiten Gleichspannungstor (104) gekoppelt ist; wobei der Gleichspannungswandler (100) so ausgelegt ist, dass eine Richtung eines Stromflusses ($i_L$) durch die Speicherdrossel (106) sich während einer Schaltperiode der elektrischen Schaltelemente $108_1$ bis $108_4$ zumindest einmal umdreht; wobei der Gleichspannungswandler (100) ausgelegt ist, um bei einer Veränderung von Betriebsparametern des Gleichspannungswandlers (100) eine Schaltfrequenz der elektrischen Schaltelemente ($108_1$:$108_n$) derart nachzuführen oder nachzuregeln, dass ein Richtungswechsel des Stromflusses ($i_L$) durch die Speicherdrossel (106) während einer Schaltperiode der elektrischen Schaltelemente ($108_1$:$108_n$) gewährleistet wird; und wobei die Speicherdrossel (106) so dimensioniert ist, dass ein minimaler Wert des Stromflusses ($i_L$) durch die Speicherdrossel (106) bei einer Sollschaltfrequenz so groß ist, dass bei einer Veränderung von Betriebsparametern des Gleichspannungswandlers (100) für zumindest zwei aufeinander folgende Schaltperioden der elektrischen Schaltelemente ($108_1$:$108_n$) ohne Nachführung der Schaltfrequenz der elektrischen Schaltelemente ($108_1$:$108_n$) gewährleistet wird, dass sich jeweils während der zumindest zwei Schaltperioden die Richtung des Stromflusses ($i_L$) durch die Speicherdrossel (106) der elektrischen Schaltelemente zumindest einmal umdreht.

Gemäß einem siebenundzwanzigsten Aspekt unter Bezugnahme auf den sechsundzwanzigsten Aspekt kann der Gleichspannungswandler (100) ausgelegt sein, um die Schaltfrequenz der elektrischen Schaltelemente ($108_1$:$108_n$) frühestens nach zwei aufeinander folgenden Schaltperioden der elektrischen Schaltelemente ($108_1$:$108_n$) nachzuführen.

Gemäß einem achtundzwanzigsten Aspekt unter Bezugnahme auf den sechsundzwanzigsten oder siebenundzwanzigsten Aspekt kann der Gleichspannungswandler (100) so ausgelegt sein, dass eine Totzeit der elektrischen Schaltelemente ($108_1$:$108_n$) während einer Schaltperiode der elektrischen Schaltelemente ($108_1$:$108_n$) konstant ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Gleichspannungswandler (100), mit folgenden Merkmalen:

    einem ersten Gleichspannungstor (102);
    einem zweiten Gleichspannungstor (104); und
    einer Speicherdrossel (106), die mittels elektrischen Schaltelementen ($108_1$:$108_n$) zwischen dem ersten Gleichspannungstor (102) und dem zweiten Gleichspannungstor (104) gekoppelt ist;
    wobei der Gleichspannungswandler (100) so ausgelegt ist, dass eine Richtung eines Stromflusses ($i_L$) durch die Speicherdrossel (106) sich während einer Schaltperiode der elektrischen Schaltelemente $108_1$ bis $108_4$ zumindest einmal umdreht; und
    wobei der Gleichspannungswandler (100) ausgelegt ist, um bei einer Veränderung von Betriebsparametern des Gleichspannungswandlers (100) eine Schaltfrequenz der elektrischen Schaltelemente ($108_1$:$108_n$) derart nachzuführen oder nachzuregeln, dass ein Richtungswechsel des Stromflusses ($i_L$) durch die Speicherdrossel (106) während einer Schaltperiode der elektrischen Schaltelemente ($108_1$:$108_n$) gewährleistet wird;
    wobei zu den Betriebsparametern des Gleichspannungswandlers (100) Spannungen und/oder Ströme an Anschlusspaaren des ersten und/oder zweiten Gleichspannungstors (102;104) zählen.

2. Gleichspannungswandler (100) nach Anspruch 1, wobei die Speicherdrossel (106) so dimensioniert ist, dass eine Richtung eines Stromflusses ($i_L$) durch die Speicherdrossel (106) sich während einer Schaltperiode der elektrischen Schaltelemente ($108_1$:$108_n$) zumindest einmal umdreht.

3. Gleichspannungswandler (100) nach Anspruch 2, wobei die Speicherdrossel (106) so dimensioniert ist, dass ein Stromrippel des Stromflusses ($i_L$) durch die Speicherdrossel (106) so groß ist, dass eine Richtung eines Stromflusses ($i_L$) durch die Speicherdrossel (106) sich während einer Schaltperiode der elektrischen Schaltelemente ($108_1$:$108_n$) zumindest einmal umdreht.

4. Gleichspannungswandler (100) nach einem der Ansprüche 2 oder 3, wobei die Speicherdrossel (106) ferner so dimensioniert ist, dass durch den Stromfluss ($i_L$) durch die Speicherdrossel (106) parasitäre Kapazitäten ($116_1$:$116_4$) einzuschaltender elektrischer Schaltelemente ($108_1$:$108_4$) vor dem Einschalten entladen werden.

5. Gleichspannungswandler (100) nach einem der Ansprüche 2 bis 4, wobei die Speicherdrossel (106) ferner so dimensioniert ist, dass durch den Stromfluss ($i_L$) durch die Speicherdrossel (106) parasitäre Kapazitäten ($116_1$:$116_4$) zuvor eingeschalteter elektrischer Schaltelemente ($108_1$:$108_4$) aufgeladen werden.

6. Gleichspannungswandler (100) nach einem der Ansprüche 2 oder 3, wobei die Speicherdrossel (106) so dimensioniert ist, dass während einer Totzeit des Gleichspannungswandlers (100), während der die elektrischen Schaltelemente ($108_1$:$108_4$) ausgeschaltet sind, parasitäre Kapazitäten ($116_1$:$116_4$) der elektrischen Schaltelemente ($108_1$:$108_4$), die nach der Totzeit eingeschaltet werden, durch den Stromfluss ($i_L$) durch die Speicherdrossel (106) entladen werden, und parasitäre Kapazitäten ($116_1$:$116_4$) der eklektischen Schaltelemente ($108_1$:$108_4$), die vor der Totzeit eingeschaltet waren, durch den Stromfluss ($i_L$) durch die Speicherdrossel (106) aufgeladen werden.

7. Gleichspannungswandler (100) nach einem der Ansprüche 2 bis 6, wobei die Speicherdrossel (106) so dimensioniert ist, dass ein Null-Spannungs-Schalten der elektrischen Schaltelemente ($108_1$:$108_4$) gewährleistet wird.

8. Gleichspannungswandler (100) nach einem der Ansprüche 1 bis 7, wobei eine Permeabilität eines Kerns der Speicherdrossel (106) so dimensioniert ist, dass Kernverluste reduziert sind.

9. Gleichspannungswandler (100) nach einem der Ansprüche 1 bis 8, wobei der Gleichspannungswandler (100) ausgelegt ist, um die Schaltfrequenz der elektrischen Schaltelemente ($108_1$:$108_4$) ferner derart nachzuführen oder nachzuregeln, dass ein Stromrippel des Stromflusses ($i_L$) durch die Speicherdrossel (106) so groß ist, dass eine Richtung eines Stromflusses ($i_L$) durch die Speicherdrossel (106) sich während einer Schaltperiode der elektrischen Schaltelemente ($108_1$:$108_n$) zumindest einmal umdreht.

10. Gleichspannungswandler (100) nach Anspruch 9, wobei der Gleichspannungswandler (100) ausgelegt ist, um die Schaltfrequenz der elektrischen Schaltelemente ($108_1$:$108_4$) ferner derart nachzuführen oder nachzuregeln, dass der Stromrippel des Stromflusses ($i_L$) durch die Speicherdrossel (106) zumindest so groß ist, dass parasitäre Kapazitäten ($116_1$:$116_4$) einzuschaltender elektrischer Schaltelemente ($108_1$:$108_4$) vor dem Einschalten auf zumindest 25 % einer ersten Spannung, die an dem ersten Gleichspannungstor anliegt, oder einer zweiten Spannung, die an dem zweiten Gleichspannungstor anliegt, entladen werden.

11. Gleichspannungswandler (100) nach Anspruch 1, wobei die Speicherdrossel (106) so dimensioniert ist, dass ein minimaler Wert des Stromflusses (iL) durch die Speicherdrossel (106) bei einer Sollschaltfrequenz so groß ist, dass bei einer Veränderung von Betriebsparametern des Gleichspannungswandlers (100) für zumindest zwei aufeinander folgende Schaltperioden der elektrischen Schaltelemente ($108_1$:$108_n$) ohne Nachführung der Schaltfrequenz der elektrischen Schaltelemente ($108_1$:$108_n$) gewährleistet wird, dass sich jeweils während der zumindest zwei Schaltperioden die Richtung des Stromflusses ($i_L$) durch die Speicherdrossel (106) der elektrischen Schaltelemente zumindest einmal umdreht.

12. Gleichspannungswandler (100) nach Anspruch 11, wobei der Gleichspannungswandler (100) ausgelegt ist, um die Schaltfrequenz der elektrischen Schaltelemente ($108_1$:$108_n$) frühestens nach zwei aufeinander folgenden Schaltperioden der elektrischen Schaltelemente ($108_1$:$108_n$) nachzuführen.

13. Gleichspannungswandler (100) nach Anspruch 11 oder 12, wobei der Gleichspannungswandler (100) so ausgelegt ist, dass eine Totzeit der elektrischen Schaltelemente ($108_1$:$108_n$) während einer Schaltperiode der elektrischen Schaltelemente ($108_1$:$108_n$) konstant ist.

14. Verfahren (200) zum Betrieb eines Gleichspannungswandlers (100) mit einem ersten Gleichspannungstor (102), einem zweiten Gleichspannungstor (104) und einer Speicherdrossel (106), die mittels elektrischen Schaltelementen ($108_1$:$108_n$) zwischen dem ersten Gleichspannungstor (102) und dem zweiten Gleichspannungstor (104) gekoppelt ist, wobei der Gleichspannungswandler (100) so ausgelegt ist, dass eine Richtung eines Stromflusses ($i_L$) durch die Speicherdrossel (106) sich während einer Schaltperiode der elektrischen Schaltelemente ($108_1$:$108_n$) zumindest einmal umdreht, wobei das Verfahren (200) aufweist:

Nachführen oder Nachregeln (202) einer Schaltfrequenz der elektrischen Schaltelemente ($108_1$:$108_n$) bei einer Veränderung von Betriebsparametern des Gleichspannungswandlers (100) derart, dass ein Richtungswechsel des Stromflusses ($i_L$) durch die Speicherdrossel (106) während einer Schaltperiode der elektrischen Schaltelemente ($108_1$:$108_n$) gewährleistet wird.

15. Computerprogramm mit einem Programmcode zur Durchführung des Verfahrens (200) nach Anspruch 14, wenn das Computerprogramm auf einem Computer eines Gleichspannungswandlers gemäß dem Anspruch 1 abläuft.

**Claims**

1. DC-DC converter (100), comprising:

   a first DC voltage gate (102);
   a second DC voltage gate (104); and
   a storage choke (106) coupled between the first DC voltage gate (102) and the second DC voltage gate (104) by means of electric switching elements ($108_1$:$108_n$);
   wherein the DC-DC converter (100) is configured such that a direction of a current flow ($i_L$) through the storage choke (106) is inverted at least once during a switching period of the electric switching elements ($108_1$ to $108_4$); and
   wherein the DC-DC converter (100) is configured to track or readjust a switching frequency of the electric switching elements ($108_1$:$108_n$) in case of a change of operating parameters of the DC-DC converter (100) such that a change of direction of the current flow ($i_L$) through the storage choke (106) during a switching period of the electric switching elements ($108_1$:$108_n$) is ensured;
   wherein operating parameters of the DC-DC converter (100) can be voltages and/or currents at terminal pairs of the first and/or second DC voltage gate (102;104).

2. DC-DC converter (100) according to claim 1, wherein the storage choke (106) is dimensioned such that a direction of a current flow ($i_L$) through the storage choke (106) is inverted at least once during a switching period of the electric switching elements ($108_1$:$108_n$).

3. DC-DC converter (100) according to claim 2, wherein the storage choke (106) is dimensioned such that a current ripple of the current flow ($i_L$) through the storage choke (106) is so great that a direction of a current flow ($i_L$) through the storage choke (106) is inverted at least once during a switching period of the electric switching elements ($108_1$:$108_n$).

4. DC-DC converter (100) according to one of claims 2 or 3 wherein the storage choke (106) is further dimensioned such that by the current flow ($i_L$) through the storage choke (106) parasitic capacitances ($116_1$:$116_4$) of electric switching elements ($108_1$:$108_4$) to be switched on are discharged prior to switching on.

5. DC-DC converter (100) according to one of claims 2 to 4, wherein the storage choke (106) is further dimensioned such that by the current flow ($i_L$) through the storage choke (106) parasitic capacitances ($116_1$:$116_4$) of previously switched on electric switching elements ($108_1$:$108_4$) are charged.

6. DC-DC converter (100) according to one of claims 2 or 3, wherein the storage choke (106) is dimensioned such that during a dead time of the DC-DC converter (100) during which the electric switching elements ($108_1$:$108_4$) are switched off, parasitic capacitances ($116_1$:$116_4$) of the electric switching elements ($108_1$:$108_4$) that are switched on after the dead time are discharged by the current flow ($i_L$) through the storage choke (106), and parasitic capacitances ($116_1$:$116_4$) of the electric switching elements ($108_1$:$108_4$) that where switched on prior to the dead time are charged by the current flow (iL) through the storage choke (106).

7. DC-DC converter (100) according to one of claims 2 to 6, wherein the storage choke (106) is dimensioned such that zero voltage switching of the electric switching elements ($108_1$:$108_4$) is ensured.

8. DC-DC converter (100) according to one of claims 1 to 7, wherein a permeability of a core of the storage choke (106) is dimensioned such that core losses are reduced.

9. DC-DC converter (100) according to one of claims 1 to 8, wherein the DC-DC converter (100) is configured to further track or readjust the switching frequency of the electric switching elements ($108_1$:$108_4$) such that a current ripple of the current flow ($i_L$) through the storage choke (106) is so great that a direction of a current flow ($i_L$) through the storage choke (106) is inverted at least once during a switching period of the electric switching elements ($108_1$:$108_n$)

10. DC-DC converter (100) according to claim 9, wherein the DC-DC converter (100) is configured to further track or readjust the switching frequency of the electric switching elements ($108_1$:$108_4$) such that the current ripple of the current flow ($i_L$) through the storage choke (106) is at least so great that parasitic capacitances ($116_1$:$116_4$) of electric switching elements ($108_1$:$108_4$) to be turned on are discharged to at least 25 % of a first voltage applied to the first DC voltage gate or a second voltage applied to the second DC voltage gate prior to switching on.

11. DC-DC converter (100) according to claim 1, wherein the storage choke (106) is dimensioned such that a minimum value of the current flow ($i_L$) through the storage choke (106) at a nominal switching frequency is so great that in case of a change of operating parameters of the DC-DC converter (100) it is ensured for at least two subsequent switching periods of the electric switching elements ($108_1$:$108_n$) without tracking the switching frequency of the electric switching elements ($108_1$:$108_n$) that during the at least two switching periods the direction of the current flow ($i_L$) through the storage choke (106) of the electric switching elements is respectively inverted at least once.

12. DC-DC converter (100) according to claim 11, wherein the DC-DC converter (100) is configured to track the switching frequency of the electric switching elements ($108_1$:$108_n$) at the earliest after two subsequent switching periods of the electric switching elements ($108_1$:$108_n$).

13. DC-DC converter (100) according to claim 11 or 12, wherein the DC-DC converter (100) is configured such that a dead time of the electric switching elements ($108_1$:$108_n$) during a switching period of the electric switching elements ($108_1$:$108_n$) is constant.

14. Method (200) for operating a DC-DC converter (100) comprising a first DC voltage gate (102), a second DC voltage gate (104) and a storage choke (106) coupled between the first DC voltage gate (102) and the second DC voltage gate (104) by means of electric switching elements ($108_1$:$108_n$), wherein the DC-DC converter (100) is configured such that a direction of a current flow ($i_L$) through the storage choke (106) is inverted at least once during a switching period of the electric switching elements ($108_1$:$108_n$), the method (200) comprising:
tracking or readjusting (202) a switching frequency of the electric switching elements ($108_1$:$108_n$) in case of a change of operating parameters of the DC-DC converter (100) such that a change of direction of the current flow ($i_L$) through the storage choke (106) during a switching period of the electric switching elements ($108_1$:$108_n$) is ensured.

15. Computer program having a program code for performing the method (200) according to claim 14 when the computer program runs on a computer of a DC-DC converter according to claim 1.

**Revendications**

1. Convertisseur de courant continu (100), aux caractéristiques suivantes:

une première grille de tension continue (102);
une deuxième grille de tension continue (104); et
une bobine d'accumulation (106) qui est couplée, au moyen d'éléments de commutation électriques ($108_1$:$108_n$), entre la première grille de tension continue (102) et la deuxième grille de tension continue (104);
dans lequel le convertisseur de courant continu (100) est conçu de sorte qu'une direction d'un flux de courant ($i_L$) passant à travers la bobine d'accumulation (106) soit inversée au moins une fois pendant une période de commutation des éléments de commutation électriques $108_1$ à $108_4$; et

dans lequel le convertisseur de tension continue (100) est conçu pour mettre à jour ou ajuster, en cas de variation des paramètres de fonctionnement du convertisseur de tension continue (100), une fréquence de commutation des éléments de commutation électriques ($108_1$:$108_n$) de sorte que soit garanti un changement de direction du flux de courant ($i_L$) passant à travers la bobine d'accumulation (106) pendant une période de commutation des éléments de commutation électrique ($1081$:$108_n$);

dans lequel comptent parmi les paramètres de fonctionnement du convertisseur de tension continue (100) les tensions et/ou les courants à des paires de bornes de la première et/ou de la deuxième grille de tension continue (102; 104).

2. Convertisseur de tension continue (100) selon la revendication 1, dans lequel la bobine d'accumulation (106) est dimensionnée de sorte qu'une direction d'un flux de courant ($i_L$) passant à travers la bobine d'accumulation (106) soit inversée au moins une fois pendant une période de commutation des éléments de commutation électriques ($108_1$:$108_n$).

3. Convertisseur de tension continue (100) selon la revendication 2, dans lequel la bobine d'accumulation (106) est dimensionnée de sorte qu'une ondulation du flux de courant ($i_L$) passant à travers la bobine d'accumulation (106) soit si grande qu'une direction d'un flux de courant ($i_L$) passant à travers la bobine d'accumulation (106) soit inversée au moins une fois pendant une période de commutation des éléments de commutation électriques ($108_1$:$108_n$).

4. Convertisseur de tension continue (100) selon l'une des revendications 2 ou 3, dans lequel la bobine d'accumulation (106) est par ailleurs dimensionnée de sorte que par le flux de courant ($i_L$) passant à travers la bobine d'accumulation (106) soient déchargées, avant l'activation, les capacités parasites ($116_1$: $116_4$) des éléments de commutation électriques ($108_1$:$108_4$) à activer.

5. Convertisseur de tension continue (100) selon l'une des revendications 2 à 4, dans lequel la bobine d'accumulation (106) est par ailleurs dimensionnée de sorte que par le flux de courant ($i_L$) passant à travers la bobine d'accumulation (106) soient chargées les capacités parasites ($116_1$: $116_4$) des éléments de commutation électriques ($108_1$:$108_4$) activés auparavant.

6. Convertisseur de tension continue (100) selon l'une des revendications 2 ou 3, dans lequel la bobine d'accumulation (106) est dimensionnée de sorte que, pendant un temps mort du convertisseur de tension continue (100) pendant lequel les éléments de commutation électrique ($108_1$:$108_4$) sont désactivés, les capacités parasites ($116_1$:$116_4$) des éléments de commutation électriques ($108_1$: $108_4$) qui sont activés après le temps mort soient déchargées par le flux de courant ($i_L$) passant à travers la bobine d'accumulation (106) et que les capacités parasites ($116_1$:$116_4$) des éléments de commutation éclectiques ($108_1$:$108_4$) qui étaient activés avant le temps mort soient chargées par le flux de courant ($i_L$) passant à travers la bobine d'accumulation (106).

7. Convertisseur de tension continue (100) selon l'une des revendications 2 à 6, dans lequel la bobine d'accumulation (106) est dimensionnée de sorte que soit assurée une commutation à tension nulle des éléments de commutation électriques ($108_1$: $108_4$).

8. Convertisseur de tension continue (100) selon l'une des revendications 1 à 7, dans lequel une perméabilité d'un noyau de la bobine d'accumulation (106) est dimensionnée de sorte que les pertes de noyau soient réduites.

9. Convertisseur de tension continue (100) selon l'une des revendications 1 à 8, dans lequel le convertisseur de tension continue (100) est conçu pour mettre à jour ou ajuster par ailleurs la fréquence de commutation des éléments de commutation électriques ($108_1$:$108_4$) de sorte qu'une ondulation du flux de courant ($i_L$) passant à travers la bobine d'accumulation (106) soit si grande qu'une direction d'un flux de courant ($i_L$) passant par la bobine d'accumulation (106) soit inversée au moins une fois pendant une période de commutation des éléments de commutation électriques ($108_1$: $108_n$).

10. Convertisseur de tension continue (100) selon la revendication 9, dans lequel le convertisseur de tension continue (100) est conçu pour mettre à jour ou ajuster par ailleurs la fréquence de commutation des éléments de commutation électriques ($108_1$:$108_4$) de sorte que l'ondulation du flux de courant ($i_L$) passant à travers la bobine d'accumulation (106) soit au moins si grande que les capacités parasites ($116_1$:$116_4$) des éléments de commutation électriques ($108_1$:$108_4$) à activer soient, avant l'activation, à au moins 25% d'une première tension qui est présente à la première grille de tension continue ou d'une deuxième tension qui est présente à la deuxième grille de tension continue.

**11.** Convertisseur de tension continue (100) selon la revendication 1, dans lequel la bobine d'accumulation (106) est dimensionnée de sorte qu'une valeur minimale du flux de courant ($i_L$) passant à travers la bobine d'accumulation (106) soit, à une fréquence de commutation de consigne, si grande que, en cas de variation des paramètres de fonctionnement du convertisseur de tension continue (100) pendant au moins deux périodes de commutation successives des éléments de commutation électriques ($108_1$:$108_n$) sans mise à jour de la fréquence de commutation des éléments de commutation électriques ($108_1$:$108_n$), soit garanti que, pendant les au moins deux périodes de commutation, la direction du flux de courant ($i_L$) passant à travers la bobine d'accumulation (106) des éléments de commutation électrique soit chaque fois inversée au moins une fois.

**12.** Convertisseur de tension continue (100) selon la revendication 11, dans lequel le convertisseur de tension continue (100) est conçu pour mettre à jour la fréquence de commutation des éléments de commutation électriques ($108_1$:$108_n$) au plus tôt après deux périodes de commutation successives des éléments de commutation électriques ($108_1$:$108_n$).

**13.** Convertisseur de tension continue (100) selon la revendication 11 ou 12, dans lequel le convertisseur de tension continue (100) est conçu de sorte qu'un temps mort des éléments de commutation électriques ($108_1$:$108_n$) soit constant pendant une période de commutation des éléments de commutation électriques ($108_1$:$108_n$).

**14.** Procédé (200) permettant de faire fonctionner un convertisseur de tension continue (100) avec une première grille de tension continue (102), une deuxième grille de tension continue (104) et une bobine d'accumulation (106), qui est couplée au moyen d'éléments de commutation électriques ($108_1$:$108_n$) entre la première grille de tension continue (102) et la deuxième grille de tension continue (104), dans lequel le convertisseur de tension continue (100) est conçu de sorte qu'une direction d'un flux de courant ($i_L$) passant à travers la bobine d'accumulation (106) soit inversée au moins une fois pendant une période de commutation des éléments de commutation électrique ($108_1$:$108_n$), dans lequel le procédé (200) présente le fait de :
mettre à jour ou ajuster (202) une fréquence de commutation des éléments de commutation électriques ($108_1$:$108_n$) en cas de variation des paramètres de fonctionnement du convertisseur de tension continue (100) de sorte que soit garanti un changement de direction du flux de courant ($i_L$) passant à travers la bobine d'accumulation (106) pendant une période de commutation des éléments de commutation électriques ($108_1$:$108_n$).

**15.** Programme d'ordinateur avec un code de programme pour réaliser le procédé (200) selon la revendication 14 lorsque le programme d'ordinateur est exécuté sur un ordinateur d'un convertisseur de tension continue selon la revendication 1.

FIG 1

EP 3 028 377 B1

FIG 2

$100'$

**FIG 3A**

FIG 3B

FIG 4A

FIG 4B

FIG 4C

EP 3 028 377 B1

FIG 4D

EP 3 028 377 B1

FIG 4E

EP 3 028 377 B1

FIG 4F

EP 3 028 377 B1

FIG 4G

FIG 4H

EP 3 028 377 B1

FIG 5

FIG 6

EP 3 028 377 B1

FIG 7A

EP 3 028 377 B1

FIG 7B

EP 3 028 377 B1

FIG 7C

EP 3 028 377 B1

FIG 7D

FIG 7E

FIG 7F

FIG 7G

EP 3 028 377 B1

FIG 7H

FIG 8

FIG 9

FIG 10

200

202

Nachführen oder Nachregeln einer Schaltfrequenz der elektrischen Schaltelemente bei einer Veränderung von Betriebsparametern des Gleichspannungswandlers derart, dass ein Richtungswechsel des Stromflusses durch die Speicherdrossel während einer Schaltperiode der elektrischen Schaltelemente gewährleistet wird

# FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6166527 A
- EP 2466740 A1
- US 2004085048 A
- US 2009146623 A1
- US 2005206354 A1
- US 20120146594 A1